# EUROPEAN PATENT APPLICATION

(11) **EP 4 694 513 A1**
(43) Date of publication of application: **11.02.2026**
(21) Application number: 24795727.7
(22) Date of filing: 25.03.2024
(51) Int. Cl.: H04W 72/542

(54) **COMMUNICATION METHOD AND APPARATUS**

(30) Priority: 26.04.2023 CN 202310481106
(71) Applicant: Huawei Technologies Co., Ltd., Shenzhen, Guangdong 518129 (CN)
(72) Inventor: XIE, Xinqian, Shenzhen, Guangdong 518129 (CN); SHAO, Jiafeng, Shenzhen, Guangdong 518129 (CN)
(74) Representative: Körber, Martin Hans
(86) International application number: PCT/CN2024/083624
(87) International publication number: WO 2024/222344

(57) **Abstract**

Embodiments of this application relate to the field of communication technologies, and provide a communication method and apparatus, to reduce a parameter estimation performance loss caused by filtering introduced by a receive-end device. According to the method, a first communication apparatus sends first information, where the first information indicates that a first signal [*a*(*i*)] and/or a second signal *[b(j)]* is a signal determined based on *[c(h)],* or indicates that neither *[a(i)]* nor *[b(j)]* is a signal determined based on *[c(h)];* and sends the first signal and the second signal, or receives the first signal and the second signal.

## Description

### CROSS-REFERENCE TO RELATED APPLICATIONS

This application claims priority to Chinese Patent Application No. 202310481106.7, filed with the China National Intellectual Property Administration on April 26, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In the evolution process from a 5th generation (5th generation, 5G) mobile communication system to a 5G-advanced (5G-advanced, 5G-A) technology, an integrated sensing and communication technology is considered as one of key technologies that can extend service capabilities of mobile communication networks. The core idea of the technology is adding sensing capabilities to the mobile communication networks, thereby enabling capabilities such as target detection, tracking, and imaging. This allows the fusion of both communication and sensing within a single network, achieving harmonious coexistence and even mutual benefit. The principle of the sensing technology is that a transmit-end device sends radio waves (namely, sensing signals) in a specific direction. When the radio waves are irradiated on a surface of a target, they generate reflected waves (namely, echo signals of the sensing signals). A receive end receives and processes the reflected waves, to obtain information about position, speed, type, or the like of the target.

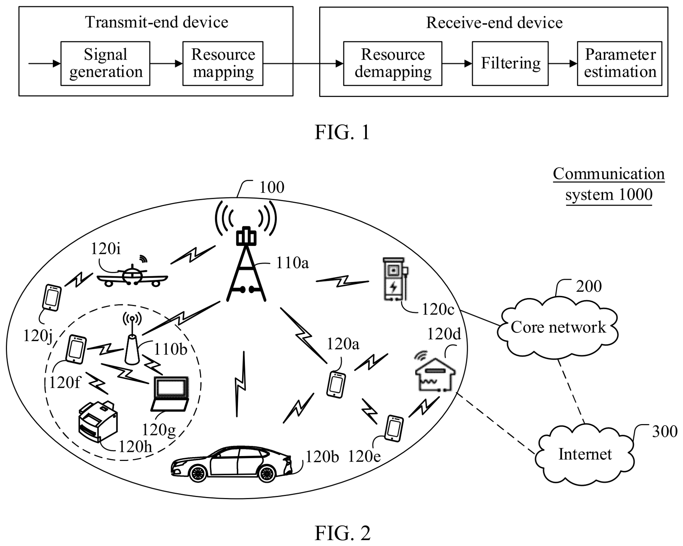

Currently, the transmit-end device transmits generated signals over a specific resource. A receive-end device performs resource demapping on the received signal, filters the signal, and performs processing such as parameter estimation on filtered signals, as shown in FIG. 1. Although filtering introduced by the receive-end device can reduce a false alarm rate, it is not conducive to subsequent parameter estimation, and a parameter estimation performance loss is caused.

### SUMMARY

Embodiments of this application provide a communication method and apparatus, to reduce a parameter estimation performance loss caused by filtering introduced by a receive-end device.

According to a first aspect, an embodiment of this application provides a communication method. The method may be performed by a first communication apparatus, or may be performed by a component in the first communication apparatus. This is not limited. The first communication apparatus may be a network device. This is not limited. According to the method, the first communication apparatus sends first information, and sends a first signal and a second signal. The first information may indicate that the first signal and/or the second signal is a signal determined based on a first coefficient, or indicate that neither the first signal nor the second signal is a signal determined based on a first coefficient.

In the foregoing embodiment of this application, the first communication apparatus may notify a peer end (for example, a second communication apparatus) of a processing manner of the first signal and the second signal by sending the first information, so that the second communication apparatus can perform corresponding processing, for example, matched filtering, on the received first signal and second signal based on the first information. This can reduce a parameter estimation performance loss caused by filtering introduced by a receive-end device.

Alternatively, the first communication apparatus sends first information, and receives a first signal and a second signal. The first information may indicate that the first signal and/or the second signal is a signal determined based on a first coefficient, or indicate that neither the first signal nor the second signal is a signal determined based on a first coefficient; and receives the first signal and the second signal.

In the foregoing embodiment of this application, the first communication apparatus may notify a peer end (for example, a second communication apparatus) of a processing manner of the first signal and the second signal by sending the first information, so that the second communication apparatus can determine the first signal and the second signal based on the first information. In this way, the first communication apparatus can perform corresponding processing, for example, matched filtering, on the received first signal and second signal. This can reduce a parameter estimation performance loss caused by filtering introduced by a receive-end device.

In a possible design, the first signal is [*a*(i)]*,* the second signal is [*b(j*)], and the first coefficient is [*c(h*)]*.* [*a*(*i*)] includes I symbols, [*b*(j)] includes J symbols, [*c*(*h*)] includes H elements, H is a positive integer greater than or equal to I and greater than or equal to J, both I and J are positive integers, i belongs to {1, ..., I}, *j* belongs to {1, ..., J}, and h belongs to {1, ..., H}.

In an optional implementation based on the foregoing design, when the first information indicates that [*a*(*i*)] is a signal determined based on *[c(h)],* a symbol in [*a*(*i*)] is *a*(*i*)*=c*(*h*) × *d*(*i*), and a symbol in [*b(j*)] is *b*(*j*)*=e*(*j*); when the first information indicates that [*b(j*)] is a signal determined based on [*c(h*)]*,* a symbol in [*a*(*i*)] is *a*(*i*)*=d*(*i*)*,* and a symbol in [*b(j*)] is *b*(*j*)*=c*(*h*) × *e*(*j*); when the first information indicates that both [*a*(*i*)] and *[b(j)]* are signals determined based on [*c*(*h*)]*,* a symbol in [*a*(*i*)] is *a*(*i*)*=c*(*h*) × *d*(*i*), and a symbol in [*b*(*j*)] is *b*(*j*)*=c*(*h*) × *e*(*j*); or when the first information indicates that neither [*a*(*i*)] nor [*b*(*j*)] is a signal determined based on [*c(h*)]*,* a symbol in [*a*(*i*)] is *a*(*i*)*=d*(*i*)*,* and a symbol in *[b(j)]* is *b*(*j*)*=e*(*j*). *d(i)* belongs to a third signal [*d(i*)]*, e(j)* belongs to a fourth signal [*e*(*j*)]*, [d(i)]* includes I symbols, and [*e*(*j*)] includes J symbols.

In an optional implementation based on the foregoing design, the first information includes a first field or a second field, the first field includes one or more of the following: a first state value, a second state value, a third state value, and a fourth state value, and the second field includes one or more of the following: a fifth state value, a sixth state value, and a seventh state value. The first field is the first state value, and the first information indicates that neither [*a*(*i*)] nor [*b(j*)] is a signal determined based on [*c*(*h*)]; the first field is the second state value, and the first information indicates that [*a*(*i*)] is a signal determined based on [*c*(*h*)]; the first field is the third state value, and the first information indicates that [*b*(*j*)] is a signal determined based on [*c(h*)]; or the first field is the fourth state value, and the first information indicates that both [*a*(i)] and [*b*(*j*)] are signals determined based on [*c(h*)]*.* The second field is the fifth state value, and the first information indicates that neither [*a*(*i*)] nor [*b*(j)] is a signal determined based on [*c*(*h*)], or indicates that both [*a*(*i*)] and [*b*(*j*)] are signals determined based on [*c(h*)]; the second field is the sixth state value, and the first information indicates that [a(i)] is a signal determined based on [*c*(*h*)]; or the second field is the seventh state value, and the first information indicates that [*b*(*j*)] is a signal determined based on [*c*(*h*)].

In an optional implementation based on the foregoing design, the method may further include: The first communication apparatus may further determine, based on a modulation and coding scheme corresponding to the fourth signal [*e*(*j*)], that [*a*(*i*)] and/or [*b*(*j*)] is a signal determined based on [*c(h*)]*,* where when [*b*(*j*)] is a signal determined not based on [*c*(*h*)]*,* an element in [*b*(*j*)] is *b*(*j*) *= e*(*j*)*.*

In an optional implementation based on the foregoing design, an element in [*c*(h)] may satisfy: When *h* is less than *k, c*(*h*) is less than *c*(h *+* 1), or when *h* is greater than *k, c*(*h*) is less than or equal to *c*(*h -* 1); or when *h* is less than *k, c*(*h*) is greater than *c*(*h +* 1), or when *h* is greater than *k, c*(*h*) is greater than or equal to *c*(*h - 1*). k is a positive integer greater than 1 and less than H. In this implementation, a processing coefficient of a transmit-end device for a sent signal can be flexibly adjusted, to meet sensing requirements in different scenarios, for example, obtain a low false alarm rate, or obtain high parameter estimation precision.

Optionally, when H is an odd number, *k* is (H+1)/2; or when H is an even number, *k* is H/2.

In another possible design, the first signal is [*a*(*n*)(*m*)] , the second signal is [*b*(*p*)*(q*)], and the first coefficient includes [*c*(*r*)] and/or [*t*(*s*)]*.* [*a*(*n*)(*m*)] includes *N* × *M* symbols, [*b*(*p*)(*q*)] includes *P* × *Q* symbols, [*c*(*r*)] includes R elements, [t(s)] includes S elements, R is a positive integer greater than or equal to M and greater than or equal to Q, S is a positive integer greater than or equal to N and greater than or equal to P, N, M, P, and Q are all positive integers greater than 1, n belongs to {1, ..., N}, m belongs to {1, ..., M}, p belongs to {1, ..., P}, q belongs to {1, ..., Q}, r belongs to {1, ..., R}, and s belongs to {1, ..., S}.

In an optional implementation based on the foregoing design, when the first information indicates that [*a*(*n*)(*m*)] is a signal determined based on [*c(r*)], a symbol in [*a*(*n*)(*m*)] is *a*(*n*)(*m*) = *c*(*r*) × *d*(*n*)*(m*)*,* and a symbol in [*b*(*p*)(*q*)] is *b*(*p*)(*q*)*=e*(*p*)(*q*).

Alternatively, when the first information indicates that [*b*(*p*)(*q*)] is a signal determined based on [*c*(*r*)], a symbol in [*a*(*n*)(*m*)] is *a*(*n*)(*m*)*=d*(*n*)(*m*), and a symbol in [*b*(*p*)*(q*)] is *b*(*p*)(*q*)*=c*(*r*) × *e*(*p*)(*q*).

Alternatively, when the first information indicates that both *[a(n)(m)]* and [*b*(*p*)*(q*)] are signals determined based on *[c(r)],* a symbol in *[a(n)(m)]* is *a(n)(m)=c(r)* × *d*(*n*)(*m*), and a symbol in [*b(p*)(*q*)] is *b*(*p*)(*q*)*=c*(*r*) × *e*(*p*)(*q*).

Alternatively, when the first information indicates that [*a*(*n*)*(m*)] is a signal determined based on [*t*(*s*)]*,* a symbol in [*a*(*n*)(*m*)] is *a*(*n*)(*m*) = *t*(*s*) × *d*(*n*)(*m*), and a symbol in [*b(p)(q*)] is *b*(*p*)(*q*)*=e*(*p*)(*q*).

Alternatively, when the first information indicates that [b(p)(q)] is a signal determined based on [*t*(*s*)]*,* a symbol in [*a*(*n*)(*m*)] is *a*(*n*)(*m*)*=d*(*n*)(*m*)*,* and a symbol in [*b(p)(q*)] is *b*(*p*)(*q*)*=t(s)* × *e*(*p*)(*q*).

Alternatively, when the first information indicates that both [*a*(*n*)(*m*)] and *[b(p)(q)]* are signals determined based on [*t*(*s*)]*,* a symbol in [*a*(*n*)(*m*)] is *a*(*n*)(*m*)=*t*(*s*) × *d*(*n*)(*m*), and a symbol in [*b*(*p*)(*q*)] is *b*(*p*)(*q*)*=t*(*s*) × *e*(*p*)(*q*).

Alternatively, when the first information indicates that *[a(n)(m)]* is a signal determined based on [*c(r*)] and [*t*(*s*)]*,* a symbol in [*a*(*n*)(*m*)] is *a*(*n*)(*m*) = *c*(*r*) × *t*(*s*) × *d(n)(m),* and a symbol in [*b*(*p*)(*q*)] is *b*(*p*)(*q*)*=e*(*p)*(*q*).

Alternatively, when the first information may indicate that [*b*(*p*)(*q*)] is a signal determined based on [*c*(*r*)] and [t*(s*)], a symbol in [*a*(*n*)(*m*)] is *a*(*n*)(*m*)*=d*(*n*)(m), and a symbol in [*b*(*p*)(*q*)] is *b*(*p*)(*q*)*=c*(*r*) × *t*(*s*) × *e*(*p*)(*q*).

Alternatively, when the first information indicates that both *[a(n)(m)]* and [*b*(*p*)(*q*)] are signals determined based on [*c(r*)] and [*t*(*s*)], a symbol in [*a*(*n*)*(m*)] is *a*(*n*)(*m*)*=c*(*r*) × *t*(*s*) × *d*(*n*)(*m*)*,* and a symbol in [*b*(*p*)(*q*)] is *b*(*p*)(*q*)*=c*(*r*) × *t*(*s*) × *e*(*p*)(*q*).

Alternatively, when the first information indicates that [*a*(*n*)(*m*)] is a signal determined not based on [*c(r*)] and/or [*t*(*s*)], and that [*b*(*p*)(*q*)] is a signal determined not based on [*c*(*r*)] and/or [*t*(*s*)]*,* a symbol in [*a*(*n*)(*m*)] is *a*(*n*)(*m*)*=d*(*n*)(*m*), and a symbol in [*b*(*p*)(*q*)] is *b*(*p*)*(q*)*=e*(*p*)(*q).*

In an optional implementation based on the foregoing design, the first information includes a third field or a fourth field, the third field includes one or more of the following: an eighth state value, a ninth state value, a tenth state value, and an eleventh state value, and the fourth field includes one or more of the following: a twelfth state value, a thirteenth state value, and a fourteenth state value. The third field is the eighth state value, and the first information indicates that neither [*a*(*n*)(*m*)] nor [*b*(*p*)(*q*)] is a signal determined based on [*c*(*r*)]*;* the third field is the ninth state value, and the first information indicates that [*a*(*n*)(*m*)] is a signal determined based on [*c(r*)]; the third field is the tenth state value, and the first information indicates that [*b*(*p*)(*q*)] is a signal determined based on [*c(r*)]; or the third field is the eleventh state value, and the first information indicates that both [*a*(*n*)(*m*)] and [*b*(*p*)(*q*)] are signals determined based on [*c(r*)]*.* The fourth field is the twelfth state value, and the first information indicates that neither [*a*(*n*)(*m*)] nor [*b*(*p*)(*q*)] is a signal determined based on [*c*(*r*)], or indicates that both [*a*(*n*)(*m*)] and [*b*(*p*)*(q*)] are signals determined based on [*c(r*)] ; the fourth field is the thirteenth state value, and the first information indicates that [*a*(*n*)(*m*)] is a signal determined based on [*c*(*r*)]*;* or the fourth field is the fourteenth state value, and the first information indicates that [*b*(*p*)(*q*)] is a signal determined based on [*c*(*r*)]*.*

In an optional implementation based on the foregoing design, the first information may further include a fifth field or a sixth field. The fifth field may include one or more of the following: a fifteenth state value, a sixteenth state value, a seventeenth state value, and an eighteenth state value. The sixth field may include one or more of the following: a nineteenth state value, a twentieth state value, and a twenty-first state value. The fifth field is the fifteenth state value, and the first information may indicate that neither [*a*(*n*)(*m*)] nor [*b*(*p*)(*q*)] is a signal determined based on [*t*(*s*)]; the fifth field is the sixteenth state value, and the first information may indicate that [*a*(*n*)(*m*)] is a signal determined based on [*t*(*s*)]; the fifth field is the seventeenth state value, and the first information may indicate that [*b*(*p*)*(q*)] is a signal determined based on [*t*(*s*)]; or the fifth field is the eighteenth state value, and the first information may indicate that both [*a*(*n)*(*m*)] and [*b*(*p*)(*q*)] are signals determined based on [*t*(*s*)]. The sixth field is the nineteenth state value, and the first information may indicate that neither [*a*(*n*)(*m*)] nor [*b*(*p*)(*q*)] is a signal determined based on [*t*(*s*)] , or indicate that both [*a*(*n*)*(m*)] and [*b*(*p*)*(q*)] are signals determined based on [*t*(*s*)]; the sixth field is the twentieth state value, and the first information may indicate that [*a*(*n*)(*m*)] is a signal determined based on [*t*(*s*)]; or the sixth field is the twenty-first state value, and the first information may indicate that [*b*(*p*)(*q*)] is a signal determined based on [*t*(*s)*]*.*

In an optional implementation based on the foregoing design, the method may further include: determining, based on a modulation and coding scheme corresponding to a fourth signal [*e*(*p*)(*q*)]*,* that [*a*(*n*)(*m*)] and/or [*b*(*p*)(*q*)] is a signal determined based on [*c*(*r*)] ; determining that [*a*(*n*)(*m*)] and/or [*b*(*p*)(*q*)] is a signal determined based on [*t*(*s*)] ; determining that [*a*(*n*)(*m*)] and/or [*b*(*p*)(*q*)] is a signal determined based on [*c*(*r*)] and [*t*(*s*)]; or determining that [*a*(*n*)(*m*)] is a signal determined not based on [*c*(*r*)] and/or [t(s)], and determining that [*b*(*p*)(*q*)] is a signal determined not based on [*c*(*r*)] and/or [*t*(*s*)].

In an optional implementation based on the foregoing design, an element in [*c*(*r*)] may satisfy: When r is less than *x, c*(*r*) is less than *c*(*r +* 1), or when *r* is greater than *x, c*(*r*) is less than or equal to *c*(*r* - 1); or when r is less than *x, c*(*r*) is greater than *c*(*r* + 1), or when *r* is greater than *x, c*(*r*) is greater than or equal to *c*(*r -* 1). x is a positive integer greater than 1 and less than R.

Optionally, when R is an odd number, *x* may be (R+1)/2; or when R is an even number, *x* may be R/2.

In an optional implementation based on the foregoing design, an element in [*t*(*s*)] may satisfy: When s is less than *y, t*(*s*) is less than *t*(*s +* 1), or when *s* is greater than y, *t*(*s*) is less than or equal to *t*(*s* - 1); or when s is less than *y, t*(*s*) is greater than *t*(*s* + 1), or when *s* is greater than *y, t*(*s*) is greater than or equal to *t(s* - 1). *y* is a positive integer greater than 1 and less than S.

Optionally, when S is an odd number, *y* may be (S+1)/2; or when S is an even number, *y* may be S/2.

In a possible design, the first signal is a reference signal, and the second signal is a physical channel; or the first signal is a first reference signal, and the second signal is a second reference signal.

Optionally, when the first communication apparatus sends the first signal and the second signal, the first signal is a demodulation reference signal, and the second signal is a physical downlink shared channel; the first signal is a demodulation reference signal, and the second signal is a channel state information reference signal; or the first signal is a channel state information reference signal, and the second signal is a physical downlink shared channel.

Optionally, when the first communication apparatus receives the first signal and the second signal, the first signal is a demodulation reference signal, and the second signal is a physical uplink shared channel; the first signal is a demodulation reference signal, and the second signal is a sounding reference signal; or the first signal is a sounding reference signal, and the second signal is a physical uplink shared channel.

According to a second aspect, an embodiment of this application provides a communication method. The method may be performed by a second communication apparatus, or may be performed by a component in the second communication apparatus. This is not limited. The second communication apparatus may be a terminal device. This is not limited. According to the method, the second communication apparatus receives first information, and receives a first signal and a second signal. The first information may indicate that the first signal and/or the second signal is a signal determined based on a first coefficient, or indicate that neither the first signal nor the second signal is a signal determined based on a first coefficient.

Alternatively, the second communication apparatus receives first information, and sends a first signal and a second signal. The first information may indicate that the first signal and/or the second signal is a signal determined based on a first coefficient, or indicate that neither the first signal nor the second signal is a signal determined based on a first coefficient.

In a possible design, the first signal is [*a*(*i*)], the second signal is [*b*(*j*)], and the first coefficient is [*c*(*h*)]*.* [*a*(*i*)] includes I symbols, [*b*(*j*)] includes J symbols, [*c*(*h*)] includes H elements, H is a positive integer greater than or equal to I and greater than or equal to J, both I and J are positive integers, *i* belongs to {1, ..., I}, *j* belongs to {1, ..., J}, and h belongs to {1, ..., H}.

In an optional implementation based on the foregoing design, when the first information indicates that [*a*(*i*)] *i*s a signal determined based on [*c*(*h*)], a symbol in [*a*(*i*)] is *a*(*i*)*=c*(*h*) × *d*(*i*), and a symbol in [*b*(*j*)] is *b*(*j*)*=e*(j); when the first information indicates that [*b*(*j*)] is a signal determined based on [*c(h*)]*,* a symbol in [*a*(*i*)] is *a*(*i*)*=d*(*i*)*,* and a symbol in [*b*(*j*)] is *b*(*j*)*=c*(*h*) × *e*(*j*); when the first information indicates that both [*a*(*i*)] and [*b(*j)] are signals determined based on [*c*(*h*)]*,* a symbol in [*a*(*i*)] is *a*(*i*)*=c*(*h*) × *d(i),* and a symbol in [*b*(*j*)] is *b*(*j*)*=c*(*h*) × *e*(*j*); or when the first information indicates that neither [*a*(*i*)] nor [*b*(*j*)] is a signal determined based on [*c(h*)]*,* a symbol in [*a*(*i*)] is *a*(*i*)*=d*(*i*)*,* and a symbol in [*b*(*j*)] is *b*(*j*)*=e*(*j*)*. d*(*i*) belongs to a third signal [*d*(*i*)]*, e*(*j*) belongs to a fourth signal [*e*(*j*)], [*d*(*i*)] includes I symbols, and [*e*(*j*)] includes J symbols.

In an optional implementation based on the foregoing design, the first information includes a first field or a second field, the first field includes one or more of the following: a first state value, a second state value, a third state value, and a fourth state value, and the second field includes one or more of the following: a fifth state value, a sixth state value, and a seventh state value. The first field is the first state value, and the first information indicates that neither [*a*(*i*)] nor [*b*(*j*)] is a signal determined based on [*c(h*)]; the first field is the second state value, and the first information indicates that [*a*(*i*)] is a signal determined based on [*c*(*h*)]; the first field is the third state value, and the first information indicates that [*b*(*j*)] is a signal determined based on [*c*(*h*)]; or the first field is the fourth state value, and the first information indicates that both [*a(*i)] and [*b*(*j*)] are signals determined based on *[c(h)].* The second field is the fifth state value, and the first information indicates that neither [*a*(*i*)] nor [*b*(*j*)] is a signal determined based on [*c*(*h*)], or indicates that both [*a*(*i*)] and [*b*(*j*)] are signals determined based on [*c*(*h*)]; the second field is the sixth state value, and the first information indicates that [*a*(*i*)] is a signal determined based on [*c*(*h*)]; or the second field is the seventh state value, and the first information indicates that *[b(j)]* is a signal determined based on [*c*(*h*)].

In an optional implementation based on the foregoing design, an element in *[c(h)]* may satisfy: When *h* is less than *k, c*(*h*) is less than *c*(*h +* 1), or when *h* is greater than *k, c*(*h*) is less than or equal to *c*(*h -* 1); or when *h* is less than *k, c*(*h*) is greater than *c*(*h +* 1), or when *h* is greater than *k, c*(*h*) is greater than or equal to *c*(*h - 1*). k is a positive integer greater than 1 and less than H.

Optionally, when H is an odd number, *k* is (H+1)/2; or when H is an even number, *k* is H/2.

In another possible design, the first signal is [*a*(*n*)(*m*)] , the second signal is [*b*(*p*)*(q*)], and the first coefficient includes [*c*(*r*)] and/or [*t*(*s*)]. [*a*(*n*)(*m*)] includes *N* × *M* symbols, [*b*(*p*)(*q*)] includes *P* × *Q* symbols, [*c*(*r*)] includes R elements, [*t*(*s*)] includes S elements, R is a positive integer greater than or equal to M and greater than or equal to Q, S is a positive integer greater than or equal to N and greater than or equal to P, N, M, P, and Q are all positive integers greater than 1, n belongs to {1, ..., N}, m belongs to {1, ..., M}, p belongs to {1, ..., P}, q belongs to {1, ..., Q}, r belongs to {1, ..., R}, and s belongs to {1, ..., S}.

In an optional implementation based on the foregoing design, when the first information indicates that [*a*(*n*)(*m*)] is a signal determined based on [*c*(*r*)], a symbol in [*a*(*n*)(*m*)] is *a*(*n*)(*m*) = *c*(*r*) × *d*(*n)*(*m*), and a symbol in [*b*(*p*)(*q*)] is *b*(*p*)(*q*)*=e*(*p*)(*q*).

Alternatively, when the first information indicates that [*b*(*p*)(*q*)] is a signal determined based on [*c*(*r*)], a symbol in [*a*(*n*)(*m*)] is *a*(*n*)(*m*)*=d*(*n*)(*m*)*,* and a symbol in [*b*(*p*)(*q*)] is *b*(*p*)(*q*)*=c*(*r*) × *e*(*p*)(*q*).

Alternatively, when the first information indicates that both *[a*(*n*)(*m*)] and [*b*(*p*)(*q*)] are signals determined based on [*c*(*r*)]*,* a symbol in [*a*(*n*)(*m*)] is *a*(*n*)(*m*)*=c*(*r*) × *d*(*n*)(*m*), and a symbol in [*b*(*p*)(*q*)] *is b*(*p*)(*q*)*=c*(*r*) × *e*(*p*)(*q*).

Alternatively, when the first information indicates that *[a(n)(m)]* is a signal determined based on [*t*(*s*)]*,* a symbol in [*a*(*n*)(*m*)] is *a*(*n)*(*m*) = *t*(*s*) × *d*(*n*)(*m*), and a symbol in [*b*(*p*)(*q*)] is *b*(*p*)(*q*)*=e*(*p*)(*q*).

Alternatively, when the first information indicates that [*b*(*p*)(*q*)] is a signal determined based on [*t*(*s*)]*,* a symbol in [*a*(*n*)(*m*)] is *a*(*n*)(*m*)*=d*(*n*)(*m*), and a symbol in [*b*(*p*)(*q*)] is *b*(*p*)(*q*)*=t*(*s*) × *e*(*p*)(*q*).

Alternatively, when the first information indicates that both [*a*(*n*)*(m*)] and [*b*(*p*)(*q*)] are signals determined based on [*t*(*s*)]*,* a symbol in [*a*(*n*)(*m*)] is *a*(*n*)(*m*)*=t*(*s*) × *d*(*n*)(*m*), and a symbol in [b(*p*)(*q*)] is *b*(*p*)(*q*)*=t*(*s*) × *e*(*p*)(*q*).

Alternatively, when the first information indicates that *[a(n)(m)]* is a signal determined based on [*c*(*r*)] and [*t*(*s*)], a symbol in [*a*(*n*)(m)] is *a*(*n*)(*m*) = *c*(*r*) × *t*(*s*) × *d*(*n*)(*m*), and a symbol in [*b*(*p*)(*q*)] *is b(p*)(*q*)*=e*(*p*)(*q*).

Alternatively, when the first information may indicate that [*b*(*p*)(*q*)] is a signal determined based on [*c*(*r*)] and [*t*(*s*)], a symbol in [*a*(*n*)(*m*)] is *a*(*n*)(*m*)*=d*(*n*)(*m*), and a symbol in [*b*(*p*)*(q*)] is *b*(*p*)(*q*)*=c*(*r*) × *t*(*s*) × *e*(*p*)(*q*).

Alternatively, when the first information indicates that both [*a*(*n*)(*m*)] and [*b*(*p*)*(q*)] are signals determined based on [*c*(*r*)] and [*t*(*s*)], a symbol in [*a*(*n*)(*m*)] is *a*(*n*)(*m*)*=c*(*r*) × *t*(*s*) × *d*(*n*)(*m*)*,* and a symbol in [*b*(*p*)(*q*)] is *b*(*p*)(*q*)*=c*(*r*) × *t*(*s*) × *e*(*p*)*(q).*

Alternatively, when the first information indicates that *[a(n)(m)]* is a signal determined not based on [*c*(*r*)] and/or [*t*(*s*)]*,* and that [*b*(*p*)(*q*)] is a signal determined not based on [*c*(*r*)] and/or [*t*(*s*)], a symbol in [*a*(*n*)(*m*)] is a(*n*)(*m*)*=d*(*n*)(*m*), and a symbol in [*b*(*p*)(*q*)] is *b*(*p*)*(q*)*=e*(*p*)(*q*).

In an optional implementation based on the foregoing design, the first information includes a third field or a fourth field, the third field includes one or more of the following: an eighth state value, a ninth state value, a tenth state value, and an eleventh state value, and the fourth field includes one or more of the following: a twelfth state value, a thirteenth state value, and a fourteenth state value. The third field is the eighth state value, and the first information indicates that neither [*a*(*n*)(*m*)] nor [*b*(*p*)(*q*)] is a signal determined based on [*c*(*r*)]; the third field is the ninth state value, and the first information indicates that [*a*(*n*)(*m*)] is a signal determined based on [*c*(*r*)]*;* the third field is the tenth state value, and the first information indicates that [*b*(*p*)(*q*)] is a signal determined based on [*c*(*r*)]*;* or the third field is the eleventh state value, and the first information indicates that both [*a*(*n*)(*m*)] and [*b*(*p*)(*q*)] are signals determined based on [*c*(*r*)]*.* The fourth field is the twelfth state value, and the first information indicates that neither [*a*(*n*)(*m*)] nor [*b*(*p*)(*q*)] is a signal determined based on *[c(r)],* or indicates that both [*a*(*n*)(*m*)] and [*b*(*p*)(*q*)] are signals determined based on [*c*(*r*)] ; the fourth field is the thirteenth state value, and the first information indicates that [*a*(*n*)(*m*)] is a signal determined based on [*c*(*r*)]; or the fourth field is the fourteenth state value, and the first information indicates that [*b*(*p*)(*q*)] is a signal determined based on [*c*(*r*)]*.*

In an optional implementation based on the foregoing design, the first information may further include a fifth field or a sixth field. The fifth field may include one or more of the following: a fifteenth state value, a sixteenth state value, a seventeenth state value, and an eighteenth state value. The sixth field may include one or more of the following: a nineteenth state value, a twentieth state value, and a twenty-first state value. The fifth field is the fifteenth state value, and the first information may indicate that neither [*a*(*n*)(*m*)] nor [*b*(*p*)(*q*)] is a signal determined based on [*t*(*s*)]; the fifth field is the sixteenth state value, and the first information may indicate that [*a*(*n*)(*m*)] is a signal determined based on [*t*(*s*)]; the fifth field is the seventeenth state value, and the first information may indicate that [*b*(*p*)(*q*)] is a signal determined based on [*t*(*s*)]; or the fifth field is the eighteenth state value, and the first information may indicate that both [*a*(*n*)(*m*)] and [*b*(*p*)(*q*)] are signals determined based on [*t*(*s*)]. The sixth field is the nineteenth state value, and the first information may indicate that neither [*a*(*n*)(*m*)] nor [*b*(*p*)(*q*)] is a signal determined based on [*t*(*s*)] , or indicate that both [*a*(*n*)(*m*)] and [*b*(*p*)(*q*)] are signals determined based on [*t*(*s*)]*;* the sixth field is the twentieth state value, and the first information may indicate that [*a*(*n*)(*m*)] is a signal determined based on [*t*(*s*)]*;* or the sixth field is the twenty-first state value, and the first information may indicate that [*b*(*p*)(*q*)] is a signal determined based on [*t*(*s*)].

In an optional implementation based on the foregoing design, an element in [*c*(*r*)] may satisfy: When *r* is less than *x, c*(*r*) is less than *c*(*r +* 1), or when r is greater than *x, c*(*r*) is less than or equal to *c*(*r* - 1); or when r is less than *x, c*(*r*) is greater than *c*(*r* + 1), or when *r* is greater than *x, c(r)* is greater than or equal to *c*(*r - 1*). *x* is a positive integer greater than 1 and less than R.

Optionally, when R is an odd number, *x* may be (R+1)/2; or when R is an even number, *x* may be R/2.

In an optional implementation based on the foregoing design, an element in [*t*(*s*)] may satisfy: When s is less than *y, t(s)* is less than *t(s +* 1), or when s is greater than y, *t*(*s*) is less than or equal to *t*(*s* - 1); or when s is less than *y, t*(*s*) is greater than *t*(*s +* 1), or when s is greater than *y, t*(*s*) is greater than or equal to *t*(*s -* 1)*. y* is a positive integer greater than 1 and less than S.

Optionally, when S is an odd number, y may be (S+1)/2; or when S is an even number, y may be S/2.

In a possible design, the first signal is a reference signal, and the second signal is a physical channel; or the first signal is a first reference signal, and the second signal is a second reference signal.

Optionally, when the second communication apparatus receives the first signal and the second signal, the first signal is a demodulation reference signal, and the second signal is a physical downlink shared channel; the first signal is a demodulation reference signal, and the second signal is a channel state information reference signal; or the first signal is a channel state information reference signal, and the second signal is a physical downlink shared channel.

Optionally, when the second communication apparatus sends the first signal and the second signal, the first signal is a demodulation reference signal, and the second signal is a physical uplink shared channel; the first signal is a demodulation reference signal, and the second signal is a sounding reference signal; or the first signal is a sounding reference signal, and the second signal is a physical uplink shared channel.

According to a third aspect, an embodiment of this application provides a communication apparatus. The communication apparatus is configured to perform the method according to any one of the first aspect and the possible designs of the first aspect. The communication apparatus is, for example, a first communication apparatus, or a functional module in the first communication apparatus, for example, a baseband apparatus or a chip system.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit), and when the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a fourth aspect, an embodiment of this application provides a communication apparatus. The communication apparatus is configured to perform the method according to any one of the second aspect and the possible designs of the second aspect. The communication apparatus is, for example, a second communication apparatus, or a functional module in the second communication apparatus, for example, a baseband apparatus or a chip system.

In a possible design manner, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit), and when the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a fifth aspect, an embodiment of this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, to cause the communication apparatus to perform the method according to any one of the first aspect and the possible designs of the first aspect, or perform the method according to any one of the second aspect and the possible designs of the second aspect.

According to a sixth aspect, an embodiment of this application further provides a communication system. The communication system includes one or more of the following: the following: the communication apparatus according to the third aspect or the communication apparatus according to the fourth aspect.

According to a seventh aspect, an embodiment of this application provides a computer-readable storage medium. The computer-readable storage medium is configured to store a computer program or instructions. When the computer program or the instructions are run, the method according to any one of the first aspect and the possible designs of the first aspect is implemented, or the method according to any one of the second aspect and the possible designs of the second aspect is implemented.

According to an eighth aspect, an embodiment of this application further provides a computer program product including instructions. When the computer program product runs on a computer, the method according to any one of the first aspect and the possible designs of the first aspect is implemented, or the method according to any one of the second aspect and the possible designs of the second aspect is implemented.

According to a ninth aspect, an embodiment of this application further provides a chip. The chip is coupled to a memory, and is configured to read and execute program instructions in the memory, to cause an apparatus in which the chip is located to implement the method according to any one of the first aspect and the possible designs of the first aspect, or implement the method according to any one of the second aspect and the possible designs of the second aspect.

For technical effects that can be achieved by any one of the second aspect to the ninth aspect and the possible design manners of the second aspect to the ninth aspect, correspondingly refer to technical effects that can be achieved by any one of the first aspect and the possible designs of the first aspect. Details are not described again.

### BRIEF DESCRIPTION OF DRAWINGS

FIG. 1 is a schematic flowchart of signal processing;
FIG. 2 is a diagram of a network architecture of a communication system;
FIG. 3 is a schematic flowchart of a communication method according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

To make objectives, technical solutions and advantages of embodiments of this application clearer, the following further describes embodiments of this application in detail with reference to the accompanying drawings.

A network architecture and a service scenario described in this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

In embodiments of this application, "a plurality of" may mean two or more. In view of this, "a plurality of" may also be understood as "at least two" in embodiments of this application. "At least one" may be understood as one or more, for example, one, two, or more. For example, "include at least one" means "include one, two, or more". For example, "include at least one of A, B, and C" may mean "include A, B, C, A and B, A and C, B and C, or A, B, and C". The term "and/or" describes an association relationship between associated objects. Specifically, three relationships may exist. For example, A and/or B may indicate the following three cases: Only A exists, both A and B exist, and only B exists. In addition, unless otherwise specified, the character "/" usually indicates an "or" relationship between the associated objects.

In addition, the terms "system" and "network" in embodiments of this application may be used interchangeably, and "according to" and "based on" may be used interchangeably.

Ordinal numbers such as "first" and "second" mentioned in embodiments of this application are usually used to distinguish between different objects, and are not used to limit an order, a time sequence, priorities, importance degrees, or the like of a plurality of objects. For example, "a first communication apparatus" and "a second communication apparatus" in embodiments of this application are used to distinguish between two communication apparatuses, and priorities, importance degrees, or the like of the two communication apparatuses are not limited.

Embodiments of this application are presented by describing a system that includes a plurality of devices, components, modules, and the like. It should be understood that the system may include another device, component, module, and the like that are not mentioned, or may include only a part of devices, components, modules, or the like mentioned in embodiments.

The following first describes a communication system to which embodiments of this application is applicable.

The technical solutions in embodiments of this application may be applied to various communication systems, for example, a universal mobile telecommunications system (universal mobile telecommunications system, UMTS), a wireless local area network (wireless local area network, WLAN), a short-distance wireless communication system (for example, a sidelink (sidelink) system, a wireless fidelity (wireless fidelity, Wi-Fi) system, and a Bluetooth system), a wired network, a vehicle-to-everything (vehicle-to-everything, V2X) communication system, a device-to-device (device-to-device, D2D) communication system, an internet of vehicles communication system, a 4th generation (4th generation, 4G) mobile communication system (for example, a long term evolution (long term evolution, LTE) system), an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system (for example, a new radio (new radio, NR) system), a future communication system (for example, a 6th generation (6th generation, 6G) mobile communication system), or another similar communication system. This is not limited. In embodiments of this application, a communication system shown in FIG. 2 is used as an example for description. When the technical solutions in embodiments of this application are applied to another communication system, a device, a component, a module, and the like in embodiments may be replaced with a corresponding device, component, and module in the another communication system. This is not limited.

FIG. 2 is a diagram of an architecture of a communication system to which an embodiment of this application is applied. As shown in FIG. 2, the communication system 1000 includes an access network 100 and a core network 200. Optionally, the communication system 1000 may further include an internet 300. The access network 100 may include at least one radio access network (radio access network, RAN) node, for example, 110a and 110b in FIG. 2, and may further include at least one terminal device, for example, 120a to 120j in FIG. 2. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, mobile phones in FIG. 2 include 120a, 120e, 120f, and 120j. The mobile phone 120a may access the base station 110a, be connected to the vehicle 120b, directly communicate with the mobile phone 120e, and access the HAP. The vehicle 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

The network device is a network-side device having a wireless transceiver function. The network device may be an apparatus that is in a radio access network (radio access network, RAN) and that provides a wireless communication function for the terminal device, and is referred to as a RAN device. The RAN may be an access network in a 3rd generation partnership project (3rd generation partnership project, 3GPP), for example, a 4G network, a 5G network, or a future-oriented 6G network. Alternatively, the RAN may be an open access network (open RAN, O-RAN or ORAN), a cloud radio access network (cloud radio access network, CRAN), or a communication network of two or more of the foregoing networks.

Alternatively, the RAN device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a 6G mobile communication system, a base station in a future mobile communication system, an access node in a Wi-Fi system, or the like.

Alternatively, the RAN device may be a module or unit that implements a part of functions of a base station. For example, the RAN device may be a central unit (central unit, CU), a distributed unit (distributed unit, DU), or a radio unit (radio unit, RU). The CU herein implements functions of a radio resource control protocol and a packet data convergence protocol (packet data convergence protocol, PDCP) of the base station, and may further implement a function of a service data adaptation protocol (service data adaptation protocol, SDAP). The DU implements functions of a radio link control layer and a medium access control (medium access control, MAC) layer of the base station, and may further implement a part or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also have different names, but a person skilled in the art may understand meanings of the names. For example, in an ORAN system, the CU may also be referred to as an O-CU (open CU), the DU may also be referred to as an O-DU, and the RU may also be referred to as an O-RU. Any unit of the CU (or a CU-CP and a CU-UP), the DU, and the RU in this application may be implemented by using a software module, a hardware module, or a combination of a software module and a hardware module. The network device may be a macro base station (for example, 110a in FIG. 2), may be a micro base station or an indoor base station (for example, 110b in FIG. 2), or may be a relay node, a donor node, or the like. A specific technology and a specific device form that are used by the network device are not limited in embodiments of this application.

In embodiments of this application, a function of the network device may alternatively be performed by a module (for example, a chip) in the network device, or may be performed by a control subsystem that includes the function of the network device. The control subsystem including the function of the network device herein may be a control center in the foregoing application scenarios such as a smart grid, industrial control, smart transportation, and a smart city.

The terminal device is a user-side device having a wireless transceiver function. The terminal device may also be referred to as a terminal, user equipment (user equipment, UE), a mobile station, a mobile terminal, or the like. The terminal device may be widely used in various scenarios such as device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. In embodiments of this application, an apparatus configured to implement a function of the terminal device may be the terminal device, or may be an apparatus that can support the terminal device in implementing the function, for example, a chip system, or a combined device or component that can implement the function of the terminal device. The apparatus may be installed in the terminal device. A specific technology and a specific device form that are used by the terminal device are not limited in embodiments of this application.

In embodiments of this application, the function of the terminal device may alternatively be performed by a module (for example, a chip or a modem) in the terminal device, or may be performed by an apparatus including the function of the terminal device.

The network device and the terminal device may be at fixed positions, or may be movable. The network device and the terminal device may be deployed on land, including an indoor or outdoor device, a handheld device, or a vehicle-mounted device; may be deployed on water; or may be deployed on an airplane, a balloon, and a satellite in the air. Application scenarios of the network device and the terminal device are not limited in embodiments of this application.

Roles of the network device and the terminal device may be relative. For example, the helicopter or the uncrewed aerial vehicle 120i in FIG. 2 may be configured as a mobile network device. For the terminal device 120j that accesses the radio access network 100 through 120i, the terminal device 120i is a network device. However, for the network device 110a, 120i is a terminal device, that is, communication between 110a and 120i is performed by using a radio air interface protocol. It is clear that communication between 110a and 120i may alternatively be performed by using an interface protocol between network devices. In this case, for 110a, 120i is also a network device. Therefore, both the network device and the terminal device may be collectively referred to as communication apparatuses. 110a and 110b in FIG. 2 may be referred to as communication apparatuses having the function of the network device, and 120a to 120j in FIG. 2 may be referred to as communication apparatuses having the function of the terminal device.

Communication between the network device and the terminal device, between the network devices, and between the terminal devices may be performed over a licensed spectrum, may be performed over an unlicensed spectrum, or may be performed over both a licensed spectrum and an unlicensed spectrum. This is not limited.

In this application, the network device sends a downlink signal or downlink information to the terminal device, and the downlink information is carried on a downlink channel. The terminal device sends an uplink signal or uplink information to the network device, and the uplink information is carried on an uplink channel.

In embodiments of this application, a transmit-end device is a transmit end of a signal, and a receive-end device is a receive end of the signal. It may be understood as that roles of the transmit-end device and the receive-end device may be interchanged. In other words, the transmit-end device also has a receiving capability, and the receive-end device also has a sending capability. For example, the transmit-end device may be the network device in FIG. 2, and the receive-end device may be the terminal device in FIG. 2. Alternatively, the transmit-end device may be the terminal device in FIG. 2, and the receive-end device may be the network device in FIG. 2. Alternatively, the transmit-end device and the receive-end device are the network device in FIG. 2. Alternatively, the transmit-end device and the receive-end device are the terminal device in FIG. 2. This is not limited.

The following describes technical features in embodiments of this application.

In a 5G NR system and an LTE system, an orthogonal frequency division multiple access (orthogonal frequency division multiplex access, OFDMA) manner is usually used for a multiple access manner. A main feature of the OFDMA is that a transmission resource is divided into mutually orthogonal time-frequency resource elements (resource elements, REs), and all signals sent by the transmit-end device are carried on the REs and transmitted to the receive-end device. Because different REs are mutually orthogonal, the receive-end device may separately receive a signal sent on each RE. In consideration of a fading characteristic of a radio channel, the signal carried on the RE is distorted by being transmitted through the channel. The channel distortion is generally referred to as a channel coefficient. To recover the signal at the receive-end device, the channel coefficient needs to be estimated. Currently, a reference signal-based solution is usually used. To be specific, the transmit-end device transmits a known signal on a specific RE, and the receive-end device estimates a channel coefficient based on a received signal and the known signal, and performs interpolation on a channel coefficient on another RE based on the channel coefficient obtained through estimation, to help receive and demodulate a data signal based on the channel coefficient obtained through estimation.

Currently, after generating signals, the transmit-end device transmits the signals over specific time and frequency domain resources. After performing resource demapping on received signals, the receive-end device filters the signals to reduce a false alarm rate, and performs processing such as parameter estimation on filtered signals, for example, obtaining a channel coefficient, as shown in FIG. 1. Although filtering introduced by the receive-end device can reduce the false alarm rate, the filtering is not conducive to subsequent parameter estimation performed based on the filtered signal, for example, channel coefficient estimation, which causes a parameter estimation performance loss.

In view of this, embodiments of this application provide a communication method and apparatus, to reduce the parameter estimation performance loss caused by the filtering introduced by the receive-end device. The method may be applied to the communication system shown in FIG. 2, but is not limited thereto. For example, a first communication apparatus may be the network device shown in FIG. 2 or a component in the network device. A second communication apparatus may be the terminal device in the communication system shown in FIG. 2 or a component in the terminal device.

The communication method provided in embodiments of this application relates to a plurality of signals (for example, a first signal, a second signal, a third signal, and a fourth signal) and a first coefficient. For ease of understanding, the following first describes the plurality of signals and the first coefficient.

### (1) First signal and second signal

The first signal may be a reference signal, and the second signal may be a physical channel. Alternatively, both the first signal and the second signal are reference signals. For example, the first signal is a first reference signal, and the second signal is a second reference signal. The reference signal may be a demodulation reference signal (demodulation reference signal, DMRS), a channel state information reference signal (channel state information reference signal, CSI RS), a sounding reference signal (sounding reference signal, SRS), or the like. This is not limited. The physical channel may be a physical downlink shared channel (physical downlink shared channel, PDSCH), a physical uplink shared channel (physical uplink shared channel, PUSCH), or the like. This is not limited.

In an example, in a downlink transmission direction, to be specific, in a scenario in which the first communication apparatus sends the first signal and the second signal, or the second communication apparatus receives the first signal and the second signal, the first signal may be a DMRS, and the second signal may be a PDSCH; the first signal may be a DMRS, and the second signal may be a CSI RS; or the first signal may be a CSI RS, and the second signal may be a PDSCH.

In another example, in an uplink transmission direction, to be specific, in a scenario in which the first communication apparatus receives the first signal and the second signal, or the second communication apparatus sends the first signal and the second signal, the first signal may be a DMRS, and the second signal may be a PUSCH; the first signal may be a DMRS, and the second signal may be an SRS; or the first signal may be an SRS, and the second signal may be a PUSCH.

### (2) Third signal

The third signal may be used to determine the first signal. For example, the first signal is the third signal; or the first signal is a signal obtained by processing the third signal based on the first coefficient.

In embodiments of this application, the third signal may be denoted as [*d*(*i*)], and [*d*(*i*)] includes I symbols; or the third signal may be denoted as [*d*(*n*)(*m*)], and [*d*(*n*)(*m*)] includes *N* × *M* symbols. In other words, [*d*(*n*)(*m*)] includes N symbol groups, and each of the N symbol groups includes M symbols. The I symbols in *[d(i)]* may be respectively *d*(*i*), ..., *d*(*I*), that is, an *i*^{th} symbol in [*d(i*)] is *d*(*i*). The *N* × *M* symbols in [*d*(*n*)(*m*)] may be respectively *d*(1)(1), ..., *d*(1)(*M*), *d*(2)(1), *..., d*(*N*)(1)*, ..., d*(*N*)(*M),* that is, an m^{th} symbol in an n^{th} symbol group in [*d*(*n*)(m)] may be *d*(*n*)(*m*).

The third signal may be a reference signal. For details, refer to the content of the first signal. Details are not described again. It should be understood that the third signal is used to determine the first signal. In this case, an implementation form of the third signal is the same as that of the first signal. For example, if the third signal is a DMRS, the first signal is also a DMRS. For another example, if the third signal is a CSI RS, the first signal is also a CSI RS.

Further, when the third signal is denoted as [*d*(*i*)], the first signal may be denoted as [*a*(*i*)]*,* and [*a*(*i*)] includes I symbols. Alternatively, when the third signal is denoted as [*d*(*n*)(*m*)], the first signal may be denoted as [*a*(*n*)(*m*)], and [*a*(*n*)(*m*)] includes *N* × *M* symbols. In other words, [*a*(*n*)(*m*)] includes N symbol groups, and each of the N symbol groups includes M symbols. The I symbols in [*a*(*i*)] may be respectively *a*(1), ..., *a*(*I*), that is, an *i*^{th} symbol in [*a*(*i*)] is *a*(*i*)*.* The *N* × M symbols in [*a*(*n*)(*m*)] may be respectively *a*(1)(1), ..., *a*(1)(*M*)*, a*(2)(1), *..., a*(*N*)(1)*, ..., a*(*N*)(*M*)*,* that is, an m^{th} symbol in an n^{th} symbol group in [*a*(*n*)(*m*)] may be *a*(*n*)(*m*).

*i* belongs to {1, ..., I}, that is, *i* ∈ {1, ..., I}. "..." in [1, ..., I] represents a positive integer between 1 and I. For example, when I=9, *i* E {1, 2, 3, 4, 5, 6, 7, 8, 9}. *n* belongs to {1, ..., N}, that is, *n* E {1, ..., N}. "..." in [1, ..., N] represents a positive integer between 1 and N. *m* belongs to {1, ..., M}, that is, *m* ∈ {1, ..., M}. "..." in [1, ..., M] represents a positive integer between 1 and M. I, N, and M are all positive integers.

### (3) Fourth signal

The fourth signal may be used to determine the second signal. For example, the second signal is the fourth signal; or the second signal is a signal obtained by processing the fourth signal based on the first coefficient.

In embodiments of this application, the fourth signal may be denoted as [*e*(*j*)], and [*e*(*j*)] includes J symbols; or the fourth signal may be alternatively denoted as *[e(p)(q)],* and *[e(p)(q)]* includes *P* × Q symbols. In other words, *[e(p)(q)]* includes P symbol groups, and each of the P symbol groups includes Q symbols. The J symbols in *[e(j)]* may be respectively *e(1), ..., e(j),* that is, a *j^{th}* symbol in [*e*(*j*)] may be *e*(*j*). The *P* × *Q* symbols in *[e(p)(q)]* may be respectively *e*(1)(1), ..., *e*(*1*)(*Q*), *e*(*2*)(*1*), ..., *e*(*P*)*(1*), *..., e*(*P*)(*Q*), that is, a q^{th} symbol in a p^{th} symbol group in [*e*(*p)*(*q*)] may be *e*(*p*)(*q*).

The fourth signal may be a physical channel, or may be a reference signal. For details, refer to related content of the second signal. Details are not described again. It should be understood that the fourth signal is used to determine the second signal. In this case, an implementation form of the fourth signal is the same as that of the second signal. For example, if the fourth signal is a PDSCH, the second signal is also a PDSCH. For another example, if the fourth signal is an SRS, the second signal is also an SRS.

Further, when the fourth signal is denoted as [*e*(*j*)], the second signal may be denoted as [*b*(*j*)], and [*b*(*j*)] includes J symbols. Alternatively, when the fourth signal is denoted as [*e*(*p*)(*q*)], the second signal may be denoted as [*b*(*p*)(*q*)]*,* and [*b*(*p*)(*q*)] includes P × Q symbols. In other words, [*b*(*p*)*(*q)] includes P symbol groups, and each of the P symbol groups includes Q symbols. The J symbols in [*b*(*j*)] may be respectively *b*(1), ..., *b*(*j*), that is, a *j^{th}* symbol in [*b(j*)] may be *b*(*j*)*.* The *P × Q* symbols in [*b*(*p)*(*q*)] may be respectively *b*(*1*)(*1*), ..., *b*(1)(*Q*), *b*(*2)(1*), *..., b*(*P*)(*1*), *..., b*(*P)(Q*), that is, a q^{th} symbol in a p^{th} symbol group in [*b*(*p*)(*q*)] may be *b*(*p*)(*q*).

*j* belongs to {1, ..., J}, that is, *j* ∈ {1, ..., J}. "..." in [1, ..., J] represents a positive integer between 1 and J. *p* belongs to {1, ..., P}, that is, *p* ∈ {1, ..., P}. "..." in [1, ..., P] represents a positive integer between 1 and P. *q* belongs to {1, ..., Q}, that is, *q* ∈ {1, ..., Q}. "..." in [1, ..., Q] represents a positive integer between 1 and Q. J, P, and Q are all positive integers.

### (4) First coefficient

The first coefficient may be used to determine the first signal, used to determine the second signal, or used to determine the first signal and the second signal. In other words, the first coefficient may be used to process the third signal to obtain the first signal, used to process the fourth signal to obtain the second signal, or used to process the third signal to obtain the first signal and used to process the fourth signal to obtain the second signal. For example, the first coefficient is used to preprocess the third signal and/or the fourth signal. It should be noted that a specific value of the first coefficient may be predefined, or may be configured by the first communication apparatus. This is not limited. A coefficient may also be referred to as a parameter, a factor, or the like. This is not limited. A coefficient may be represented as a real number, or may be represented as a complex number.

In a possible implementation, the first coefficient may be denoted as [*c*(*h*)], and may be used to determine [*a*(*i*)] and/or [*b*(*j*)]. In other words, [*c*(*h*)] may be used to process [*d*(*i*)] and/or [*e*(*j*)]*.* [*c*(*h*)] includes H elements, and the H elements may be respectively *c*(1), ..., *c*(H), that is, an h^{th} element in [*c*(*h*)] may be *c*(*h*). H may be a positive integer greater than or equal to I and greater than or equal to J. h belongs to {1, ..., H}, that is, h ∈ {1, ..., H}. "..." in [1, ..., H] represents a positive integer between 1 and H.

In an example, an element in [*c*(*h*)] may satisfy: When *h* is less than *k, c*(*h*) is less than *c*(*h* + 1), or when *h* is greater than *k, c*(*h*) is less than or equal to *c*(*h -* 1); or when *h* is less than *k, c*(*h*) is greater than *c*(*h +* 1), or when *h* is greater than *k, c*(*h*) is greater than or equal to *c*(*h -* 1). For example, H is an odd number, and the element in [*c*(*h*)] may satisfy: When *h* is less than *k, c*(*h*) is less than *c*(*h +* 1), or when *h* is greater than *k, c*(*h*) is less than *c*(*h -* 1); or when *h* is less than *k, c*(*h*) is greater than *c*(*h +* 1), or when *h* is greater than *k, c*(*h*) is greater than *c*(*h -* 1). For another example, H is an even number, and the element in [*c*(*h*)] may satisfy: When *h* is less than *k, c*(*h*) is less than *c*(*h +* 1), or when *h* is greater than *k, c*(*h*) is less than or equal to *c*(*h -* 1); or when *h* is less than *k, c*(*h*) is greater than *c*(*h +* 1), or when *h* is greater than *k, c*(*h*) is greater than or equal to *c*(*h -* 1).

*k* is a positive integer greater than 1 and less than H. Optionally, when H is an odd number, *k* may be (H+1)/2; or when H is an even number, *k* may be H/2.

For example, H is 23, and *k* is 12. The 23 elements in [*c*(*h*)] may be [0.3, 0.35, 0.4, 0.45, 0.5, 0.55, 0.6, 0.65, 0.7, 0.75, 0.8, 0.9, 0.8, 0.75, 0.7, 0.65, 0.6, 0.55, 0.5, 0.45, 0.4, 0.35, 0.3] or [0.9, 0.8, 0.75, 0.7, 0.65, 0.6, 0.55, 0.5, 0.45, 0.4, 0.35, 0.3, 0.35, 0.4, 0.45, 0.5, 0.55, 0.6, 0.65, 0.7, 0.75, 0.8, 0.9].

For example, H is 24, and *k* is 12. The 24 elements in [*c*(*h*)] may be [0.3, 0.35, 0.4, 0.45, 0.5, 0.55, 0.6, 0.65, 0.7, 0.75, 0.8, 0.9, 0.9, 0.8, 0.75, 0.7, 0.65, 0.6, 0.55, 0.5, 0.45, 0.4, 0.35, 0.3] or [0.9, 0.8, 0.75, 0.7, 0.65, 0.6, 0.55, 0.5, 0.45, 0.4, 0.35, 0.3, 0.3, 0.35, 0.4, 0.45, 0.5, 0.55, 0.6, 0.65, 0.7, 0.75, 0.8, 0.9].

In another example, an element in [*c*(*h*)] may satisfy: When *h* is less than *k*1, *c*(*h*) is less than *c*(*h +* 1); when *h* is greater than or equal to *k*1 and less than or equal to *k*2, *c*(*h*)*=c*(*h +* 1); or when *h* is greater than *k2, c*(*h*) is less than *c*(*h -* 1). Alternatively, an element in [*c(h*)] may satisfy: When *h* is less than *k*1, *c*(*h*) is greater than *c(h +* 1); when *h* is greater than or equal to *k*1 and less than or equal to *k2, c*(*h)=c(h +* 1); or when *h* is greater than *k2, c*(*h*) is greater than *c(h -* 1). Both k1 and *k2* are positive integers greater than 1 and less than H, and *k*1 is less than k2.

For example, H is 24, *k*1 is 10, and *k*2 is 15. The 24 elements in [*c*(*h*)] may be [0.3, 0.35, 0.4, 0.45, 0.5, 0.55, 0.6, 0.65, 0.7, 0.8, 0.8, 0.8, 0.8, 0.8, 0.8, 0.7, 0.65, 0.6, 0.55, 0.5, 0.45, 0.4, 0.35, 0.3] or [0.9, 0.8, 0.75, 0.7, 0.65, 0.6, 0.55, 0.5, 0.45, 0.3, 0.3, 0.3, 0.3, 0.3, 0.3, 0.45, 0.5, 0.55, 0.6, 0.65, 0.7, 0.75, 0.8, 0.9].

In another possible implementation, the first coefficient may be *[c(r)],* may be [*t*(*s*)], or may include [*c*(*r*)] and [*t*(*s*)], and may be used to determine [*a*(*n*)(*m*)] and/or [*b*(*p*)*(q*)]. In other words, [*c*(r)] and/or [*t(s*)] may be used to process [*d*(*n*)*(m*)] and/or *[e(p)(q)].*

[*c*(*r*)] includes R elements, and the R elements may be respectively *c(1),* ..., *c(R),* that is, an r^{th} element in [*c*(*r*)] may be *c*(*r*)*.* R may be a positive integer greater than or equal to M and greater than or equal to Q. *r* belongs to {1, ..., *R*}, that is, *r* ∈ {1, ..., R}. "..." in [1, ..., R] represents a positive integer between 1 and R.

In an example, an element in [*c*(*r*)] may satisfy: When *r* is less than *x, c*(*r*) is less than *c*(*r +* 1), or when *r* is greater than *x, c*(*r*) is less than or equal to *c*(*r -* 1); or when *r* is less than *x, c*(*r*) is greater than *c*(*r +* 1), or when *r* is greater than *x, c*(*r*) is greater than or equal to *c*(*r -* 1). For example, R is an odd number, and the element in [*c(r*)] may satisfy: When *r* is less than *x, c*(*r*) is less than *c*(*r +* 1), or when *r* is greater than *x, c*(*r*) is less than *c*(*r -* 1); or when *r* is less than *x, c*(*r*) is greater than *c*(*r +* 1), or when *r* is greater than *x, c*(*r*) is greater than *c*(*r* - 1). For another example, R is an even number, and the element in *[c(r)]* may satisfy: When r is less than *x, c*(*r*) is less than *c(r +* 1), or when *r* is greater than *x, c(r)* is less than or equal to *c*(*r -* 1); or when *r* is less than *x, c*(*r*) is greater than *c(r +* 1), or when *r* is greater than *x, c*(*r*) is greater than or equal to *c*(*r -* 1).

*x* is a positive integer greater than 1 and less than R. Optionally, when R is an odd number, *x* may be (R+1)/2; or when R is an even number, *x* may be R/2.

For example, R is 11, and *x* is 6. The 11 elements in [*c*(*r*)] may be [0.3, 0.35, 0.4, 0.45, 0.5, 0.6, 0.5, 0.45, 0.4, 0.35, 0.3] or [0.6, 0.5, 0.45, 0.4, 0.35, 0.3, 0.35, 0.4, 0.45, 0.5, 0.6].

For example, R is 12, and *x* is 6. The 12 elements in [*c*(*r*)] may be [0.3, 0.35, 0.4, 0.45, 0.5, 0.6, 0.6, 0.5, 0.45, 0.4, 0.35, 0.3] or [0.6, 0.5, 0.45, 0.4, 0.35, 0.3, 0.3, 0.35, 0.4, 0.45, 0.5, 0.6].

In another example, an element in [*c*(*r*)] may satisfy: When r is less than *x*1*, c*(*r*) is less than *c*(*r +* 1); when *r* is greater than or equal to *x*1 and less than or equal to *x2, c*(*r*)*=c*(*r +* 1); or when *r* is greater than *x*2, *c*(*r*) is less than *c*(*r -* 1). Alternatively, an element in [*c*(*r*)] may satisfy: When *r* is less than *x*1*, c*(*r*) is greater than *c*(*r +* 1); when r is greater than or equal to *x*1 and less than or equal to *x*2*, c*(*r*)*=c*(*r +* 1); or when r is greater than *x2*, *c*(*r*) is greater than *c*(*r -* 1). Both *x*1 and *x*2 are positive integers greater than 1 and less than R, and x1 is less than *x*2.

For example, R is 12, *x*1 is 5, and *x*2 is 8. The 12 elements in [*c*(*r*)] may be [0.3, 0.35, 0.4, 0.45, 0.5, 0.5, 0.5, 0.5, 0.45, 0.4, 0.35, 0.3] or [0.5, 0.45, 0.4, 0.35, 0.3, 0.3, 0.3, 0.3, 0.35, 0.4, 0.45, 0.5].

[*t*(*s*)] includes S elements, and the S elements may be respectively *t*(1), ..., *t*(*S*), that is, an s^{th} element in [*t*(*s*)] may be *t*(*s*)*.* S may be a positive integer greater than or equal to N and greater than or equal to P. s belongs to {1, ..., S}, that is, *s* ∈ {1, ..., S}. "..." in [1, ..., S] represents a positive integer between 1 and S.

In an example, an element in *[t(s)]* may satisfy: When *s* is less than *y, t*(*s*) is less than *t*(*s* + 1), or when *s* is greater than *y, t*(*s*) is less than or equal to *t*(*s* - 1); or when s is less than *y, t*(*s*) is greater than *t*(*s +* 1), or when *s* is greater than *y, t*(*s*) is greater than or equal to *t*(*s* - 1). For example, S is an odd number, and the element in [*t*(*s*)] may satisfy: When *s* is less than *y, t*(*s*) is less than *t*(*s +* 1), or when *s* is greater than *y, t(s)* is less than *t*(*s* - 1); or when *s* is less than *y, t*(*s*) is greater than *t*(*s* + 1), or when s is greater than *y, t*(*s*) is greater than *t*(*s -* 1). For another example, S is an even number, and the element in [*t*(*s*)] may satisfy: When *s* is less than *y, t*(*s*) is less than *t*(*s +* 1), or when s is greater than *y, t(s)* is less than or equal to *t*(*s* - 1); or when *s* is less than *y, t*(*s*) is greater than *t*(s + 1), or when s is greater than *y, t*(*s*) is greater than or equal to *t*(*s -* 1).

*y* is a positive integer greater than 1 and less than S. Optionally, when S is an odd number, *y* may be (S+1)/2; or when S is an even number, *y* may be S/2.

For example, S is 9, and *y* is 5. The nine elements in [*t*(*s*)] may be [0.3, 0.35, 0.4, 0.45, 0.5, 0.45, 0.4, 0.35, 0.3] or [0.5, 0.45, 0.4, 0.35, 0.3, 0.35, 0.4, 0.45, 0.5].

For example, S is 10, and *y* is 5. The 10 elements in [*t*(*s*)] may be [0.3, 0.35, 0.4, 0.45, 0.5, 0.5, 0.45, 0.4, 0.35, 0.3] or [0.5, 0.45, 0.4, 0.35, 0.3, 0.3, 0.35, 0.4, 0.45, 0.5].

In another example, an element in [*t*(*s*)] may satisfy: When s is less than *y*1*, t*(*s*) is less than *t*(*s* + 1); when *s* is greater than or equal to *y*1 and less than or equal to y2, *t*(*s*)*=t*(*s + 1*); or when *s* is greater than *y*2, *t*(*s*) is less than *t*(*s - 1*). Alternatively, an element in [*t*(*s*)] may satisfy: When s is less than *y*1*, t*(*s*) is greater than *t*(*s +* 1); when *s* is greater than or equal to y1 and less than or equal to y2, *t*(*s*)*=t*(*s +* 1); or when s is greater than y2, *t*(*s*) is greater than *t*(*s* - 1). Both *y*1 and *y*2 are positive integers greater than 1 and less than S, and *y*1 is less than *y*2.

For example, S is 10, *y*1 is 4, and *y*2 is 7. The 10 elements in [*t*(*s*)] may be [0.3, 0.35, 0.4, 0.45, 0.45, 0.45, 0.45, 0.4, 0.35, 0.3], or may be [0.45, 0.4, 0.35, 0.3, 0.3, 0.3, 0.3, 0.35, 0.4, 0.45].

In addition, a symbol in embodiments of this application may also be referred to as a modulation symbol (modulation symbol), a symbol group, a modulation symbol sequence, a modulation symbol stream, a modulation symbol string, a modulation symbol set, or the like. This is not limited. The symbol in embodiments of this application may be represented as a complex number, including a real part and an imaginary part. This is not limited. In embodiments of this application, a modulation scheme of the symbol may be quadrature phase shift keying (quadrature phase shift keying, QPSK), binary phase shift keying (binary phase shift keying, BPSK), offset quadrature phase shift keying (offset phase shift keying, OQPSK), or the like.

In embodiments of this application, a numbering manner in which numbers start with 1 and increase progressively by a step of 1 is used as an example, but this is not limited thereto. For example, the numbering manner may alternatively be that numbers start with 0 and increase progressively by the step of 1. For another example, the numbering manner may alternatively be that numbers start with Z and decrease progressively by the step of 1, where Z is an integer greater than 1.

In embodiments of this application, "[·]" may be replaced with "{·}", represents a plurality of elements, and may be understood as a set, a group, a sequence, or the like. This is not limited. "Sending the first signal and the second signal" may be replaced with "sending the first signal and sending the second signal". "Receiving the first signal and the second signal" may be replaced with "receiving the first signal and receiving the second signal". In addition, "determining the first signal and the second signal" may be replaced with "determining the first signal and determining the second signal".

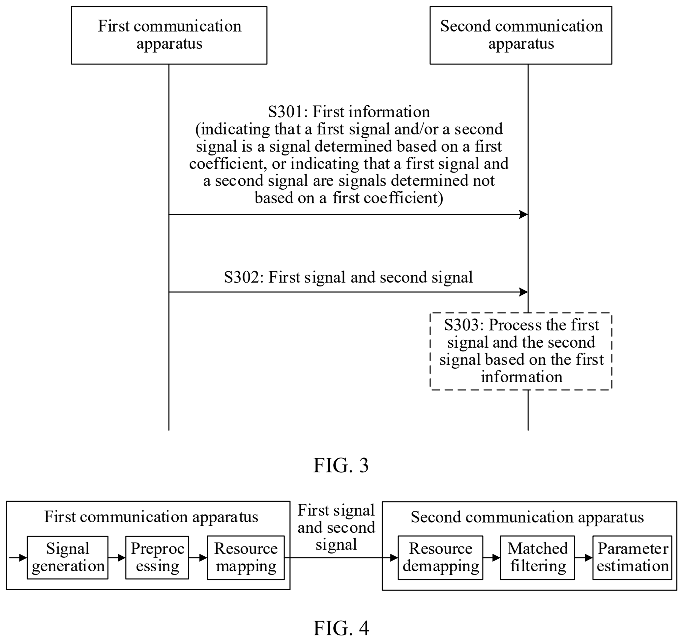

FIG. 3 is a schematic flowchart of a communication method according to an embodiment of this application. In FIG. 3, an example in which a first communication apparatus sends a first signal and a second signal is used. As shown in FIG. 3, the method may include the following steps.

S301: The first communication apparatus sends first information. A second communication apparatus receives the first information.

For example, the first communication apparatus sends the first information to the second communication apparatus. Correspondingly, the second communication apparatus receives the first information from the first communication apparatus. Optionally, the first information may be carried (or included) in downlink control information (downlink control information, DCI), may be carried in radio resource control (radio resource control, RRC) layer signaling, or may be carried in MAC layer signaling. This is not limited.

The first information may indicate that the first signal is a signal determined based on a first coefficient, indicate that the second signal is a signal determined based on a first coefficient, indicate that both the first signal and the second signal are signals determined based on a first coefficient, or indicate that neither the first signal nor the second signal is a signal determined based on a first coefficient.

In a possible implementation, the first communication apparatus may determine (or obtain or generate) the first signal, determine (or obtain or generate) the second signal, and send the first information. For example, the first communication apparatus may determine the first signal and/or the second signal based on the first coefficient, or may not use the first coefficient to determine the first signal and the second signal. Specifically, the first communication apparatus may generate a third signal and a fourth signal. Further, the first communication apparatus may determine the first signal based on the first coefficient and the third signal, and determine that the second signal is the fourth signal. In this case, the first information indicates that the first signal is a signal determined based on the first coefficient. For example, the first communication apparatus processes (for example, preprocesses) the third signal based on the first coefficient to obtain the first signal.

Alternatively, the first communication apparatus may determine the second signal based on the first coefficient and the fourth signal, and determine that the first signal is the third signal. In this case, the first information indicates that the second signal is a signal determined based on the first coefficient. For example, the first communication apparatus preprocesses the fourth signal based on the first coefficient to obtain the second signal.

Alternatively, the first communication apparatus may determine the first signal based on the first coefficient and the third signal, and determine the second signal based on the first coefficient and the fourth signal. In this case, the first information indicates that both the first signal and the second signal are signals determined based on the first coefficient. For example, the first communication apparatus preprocesses the third signal based on the first coefficient to obtain the first signal, and preprocesses the fourth signal based on the first coefficient to obtain the second signal.

Alternatively, the first communication apparatus may not use the first coefficient to determine the first signal and the second signal, that is, determine that the first signal is the third signal and determine that the second signal is the fourth signal. In this case, the first information indicates that neither the first signal nor the second signal is a signal determined based on the first coefficient.

For example, the first communication apparatus may determine whether to determine the first signal and/or the second signal based on the first coefficient. For example, the first communication apparatus may determine, based on a modulation and coding scheme (modulation and coding scheme, MCS) of the fourth signal (or the second signal), to determine the first signal based on the first coefficient, determine the second signal based on the first coefficient, or determine the first signal and the second signal based on the first coefficient. In other words, the first communication apparatus may determine, based on the modulation and coding scheme of the fourth signal, that the first signal is a signal determined based on the first coefficient, determine that the second signal is a signal determined based on the first coefficient, or determine that both the first signal and the second signal are signals determined based on the first coefficient.

In an example, when an order of the modulation and coding scheme of the fourth signal is less than 4, the first communication apparatus may determine to determine the first signal and the second signal based on the first coefficient. Alternatively, when an order of the modulation and coding scheme of the fourth signal is equal to 4, the first communication apparatus may determine to determine the first signal based on the first coefficient, and determine not to use the first coefficient to determine the second signal, that is, the second signal is the fourth signal. Alternatively, when an order of the modulation and coding scheme of the fourth signal is greater than 4, the first communication apparatus may determine the second signal based on the first coefficient, and determine not to use the first coefficient to determine the first signal, that is, the first signal is the third signal.

In another example, when an order of the modulation and coding scheme of the fourth signal is less than 4, the first communication apparatus may determine the first signal and the second signal based on the first coefficient. Alternatively, when an order of the modulation and coding scheme of the fourth signal is greater than or equal to 4, the first communication apparatus may determine the second signal based on the first coefficient, and determine not to use the first coefficient to determine the first signal, that is, the first signal is the third signal.

It should be noted that a specific implementation process in which the first communication apparatus determines to determine the first signal and/or the second signal based on the first coefficient is not limited in embodiments of this application.

It should be noted that the first information may explicitly indicate that the first signal and/or the second signal is a signal determined based on the first coefficient, or explicitly indicate that neither the first signal nor the second signal is a signal determined based on the first coefficient. In another possible implementation, the first information may alternatively implicitly indicate that the first signal and/or the second signal is a signal determined based on the first coefficient, or implicitly indicate that neither the first signal nor the second signal is a signal determined based on the first coefficient. For example, the first information may be MCS indication information, and may indicate the MCS of the second signal. Further, the second communication apparatus may determine, based on the MCS of the second signal, that an MCS indication information signal and/or the second signal is a signal determined based on the first coefficient, or determine that neither the first signal nor the second signal is a signal determined based on the first coefficient. In this way, the first communication apparatus may reuse the MCS indication information for implicit indication, and additional information does not need to be added.

It should be noted that, for technical terms in this embodiment, for example, the first communication apparatus, the second communication apparatus, the first signal, the second signal, the third signal, the fourth signal, and the first coefficient, refer to the foregoing content. Details are not described herein again. The following describes the first information in two expression forms of the first signal and two expression forms of the second signal.
(1) The first signal is denoted as [*a*(*i*)], the second signal is denoted as [*b*(*j*)], and the first coefficient is denoted as [*c*(*h*)].

That the first information indicates that the first signal and/or the second signal is a signal determined based on the first coefficient, or indicates that neither the first signal nor the second signal is a signal determined based on the first coefficient may be replaced with: The first information indicates that [*a*(*i*)] and/or [*a*(*i*)] is a signal determined based on [*c*(*h*)], or indicates that neither [*a*(*i*)] nor [*b*(*j*)] is a signal determined based on [*c*(*h*)]*.*

Correspondingly, that the first communication apparatus determines the first signal and the second signal may be replaced with: The first communication apparatus determines [*a*(*i*)] and [*b*(*j*)]*.* For example, the first communication apparatus may determine [*a*(i)] and/or [*b*(*j*)] based on [*c*(*h*)], or may not use [*c*(*h*)] to determine [*a*(*i*)] and [*b*(*j*)].

For example, the first communication apparatus determines [*a*(*i*)] based on [*c*(*h*)]. Correspondingly, the first information may indicate that [*a*(*i*)] is a signal determined based on [*c*(*h*)]*.* In this case, a symbol in [*a*(*i*)] is *a*(*i*)*=c*(*h*) × *d*(*i*), and a symbol in [*b*(*j*)] is *b*(*j*)*=e*(*j*). Optionally, H is equal to I.

For another example, the first communication apparatus determines [*b*(*j*)] based on [*c*(*h*)]. Correspondingly, the first information may indicate that [*b*(*j*)] is a signal determined based on [*c*(*h*)]. In this case, a symbol in [*a*(*i*)] is *a*(*i*)*=d*(*i*), and a symbol in [*b*(*j*)] is *b*(*j*)*=c*(*h*) × *e*(*j*). Optionally, H is equal to J.

For another example, the first communication apparatus determines [*a*(*i*)] and [*b*(*j*)] based on [*c*(*h)*]. Correspondingly, the first information may indicate that both [*a*(*i*)] and [*b*(*j*)] are signals determined based on *[c(h)].* In this case, a symbol in [*a*(*i*)] is *a*(*i*)*=c*(*h*) × *d(i),* and a symbol in [*b*(*j*)] is *b*(*j*)*=c*(*h)* × e(*j*). Optionally, H, I, and J are equal.

For still another example, the first communication apparatus does not use [*c*(*h*)] to determine [*a*(*i*)] and [*b*(*j*)]. Correspondingly, the first information may indicate that neither [*a*(*i*)] nor [*b*(*j*)] is a signal determined based on *[c(h)].* In this case, a symbol in [a(i)] is *a*(*i*)*=d*(*i*)*,* and a symbol in [*b*(*j*)] is *b(j*)*=e*(*j*).

In an example, the first information may include a first field, and a state value of the first field may indicate that [*a*(*i*)] and/or [*b*(*j*)] is a signal determined based on [*c*(*h*)], or indicate that neither [*a*(*i*)] nor [*b*(*j*)] is a signal determined based on [*c*(*h*)]*.* The first field may include one or more of the following: a first state value, a second state value, a third state value, and a fourth state value. The first field is the first state value, and the first information may indicate that neither [*a*(*i*)] nor [*b*(*j*)] is a signal determined based on [*c*(*h*)]*.* The first field is the second state value, and the first information may indicate that [*a*(*i*)] is a signal determined based on [*c*(*h*)]. The first field is the third state value, and the first information indicates that [*b*(*j*)] is a signal determined based on [*c*(*h*)]. The first field is the fourth state value, and the first information indicates that both [*a*(*i*)] and [*b*(*j*)] are signals determined based on [*c*(*h*)]. For example, the first field has 2 bits, the first state value is 00, the second state value is 01, the third state value is 10, and the fourth state value is 11, as shown in Table 1.

**Table 1**

| State value of a first field | Meaning |
|---|---|
| 00 | Neither [*a*(*i*)] nor [*b*(*j*)] is a signal determined based on [*c*(*h*)] |
| 01 | [*a*(*i*)] is a signal determined based on [*c*(*h*)] |
| 10 | [*b*(*j*)] is a signal determined based on [*c*(*h*)] |
| 11 | Both [*a*(*i*)] and [*b*(*j*)] are signals determined based on [*c*(*h*)] |

In another example, the first information may include a second field, and a state value of the second field may indicate that [*a*(*i*)] and/or [*b*(*j*)] is a signal determined based on [*c(h*)], or indicate that neither [*a*(*i*)] nor [*b*(*j*)] is a signal determined based on [*c*(*h*)]. The second field may include one or more of the following: a fifth state value, a sixth state value, and a seventh state value. The second field is the fifth state value, and the first information indicates that neither [a(i)] nor [*b*(*j*)] is a signal determined based on [*c*(*h*)]*,* or indicates that both [*a*(*i*)] and [b(j)] are signals determined based on [*c*(*h*)]*.* The second field is the sixth state value, and the first information indicates that [*a*(*i*)] is a signal determined based on [*c(h*)]*.* The second field is the seventh state value, and the first information indicates that [*b*(*j*)] is a signal determined based on [*c*(*h*)]. For example, the second field has 2 bits, the fifth state value is 00, the sixth state value is 01, and the seventh state value is 10, as shown in Table 2.

**Table 2**

| State value of a second field | Meaning |
|---|---|
| 00 | Neither [*a*(*i*)] nor [*b*(*j*)] is a signal determined based on [*c*(*h*)]*,* or both [*a*(*i*)] and [*b*(*j*)] are signals determined based on [*c*(*h*)] |
| 01 | [*a(i*)] is a signal determined based on [*c*(*h*)] |
| 10 | [*b*(*j*)] is a signal determined based on [*c*(*h*)] |

(2) The first signal is denoted as [*a*(*n*)(*m*)], the second signal is denoted as [*b*(*p*)*(q*)], and the first coefficient includes [*c*(*r*)] and/or [*t*(s)]*.*

That the first information indicates that the first signal and/or the second signal is a signal determined based on the first coefficient, or indicates that neither the first signal nor the second signal is a signal determined based on the first coefficient may be replaced with: The first information may indicate that [*a*(*n*)(*m*)] and/or [*b*(*p*)(*q*)] is a signal determined based on [*c*(*r*)]*,* indicate that [*a*(*n*)(*m*)] and/or [*b*(*p*)(*q*)] is a signal determined based on [*t*(*s*)], indicate that [*a*(*n*)(*m*)] and/or [*b*(*p*)(*q*)] is a signal determined based on [*c(r*)] and [*t*(*s*)], or indicate that [*a*(*n*)(*m*)] is a signal determined not based on [*c*(*r*)] and/or [*t*(*s*)], and that [*b*(*p*)(*q*)] is a signal determined not based on [*c*(*r*)] and/or [*t*(*s*)].

Correspondingly, that the first communication apparatus determines the first signal and the second signal may be replaced with: The first communication apparatus determines [*a*(*n*)(*m*)] and [*b*(*p*)(*q*)]. For example, the first communication apparatus may determine [*a*(*n*)(*m*)] and/or [*b*(*p*)(*q*)] based on [*c*(*r*)]; determine [*a*(*n*)(*m*)] and/or [*b*(*p*)*(q*)] based on [*t*(*s*)]; determine [*a*(*n*)(*m*)] and/or [*b*(*p*)(*q*)] based on [*c*(*r*)] and [*t*(*s*)]; or not use [*c*(*r*)] and/or [*t*(*s*)] to determine [*a*(*n*)(*m*)] , and not use [*c*(*r*)] and/or [*t*(*s*)] to determine [*b*(*p*)(*q*)].

For example, the first communication apparatus determines *[a(n)(m)]* based on *[c(r)].* Correspondingly, the first information may indicate that *[a(n)(m)]* is a signal determined based on [*c*(*r)*]. In this case, a symbol in [*a*(*n*)(*m*)] is *a*(*n*)*(m)* = *c*(*r*) × *d*(*n*)(*m*), and a symbol in [*b*(*p*)(*q*)] is *b*(*p*)(*q)=e*(*p*)(*q*). Optionally, R is equal to M.

For example, the first communication apparatus determines *[b(p)(q)]* based on [*c*(*r*)]. Correspondingly, the first information may indicate that [*b*(*p*)(*q*)] is a signal determined based on [*c*(*r*)]*.* In this case, a symbol in [*a*(*n*)(*m*)] is *a*(*n*)(*m*)*=d*(*n*)(*m*)*,* and a symbol in [*b*(*p*)(*q*)] is *b*(*p*)(*q*)*=c*(*r*) × *e*(*p*)(*q*). Optionally, R is equal to Q.

For example, the first communication apparatus determines [*a*(*n*)(*m*)] and [b(p)(q)] based on [c(*r*)]*.* Correspondingly, the first information may indicate that both [*a*(*n*)*(m*)] and [*b*(*p*)(*q*)] are signals determined based on [*c*(*r*)]*.* In this case, a symbol in [*a*(*n*)(*m*)] is *a*(*n*)(*m*)*=c*(*r*) × *d*(*n*)(*m*), and a symbol in [*b*(*p*)(*q*)] is *b*(*p*)(*q*)*=c*(*r*) × *e*(*p*)(*q*). Optionally, R, M, and Q are equal.

For another example, the first communication apparatus determines [*a*(*n*)(*m*)] based on [*t*(*s*)]*.* Correspondingly, the first information may indicate that [*a*(*n*)(*m*)] is a signal determined based on [*t*(*s*)]. In this case, a symbol in [*a*(*n*)(*m*)] is *a*(*n*)(*m*) = *t*(*s*) × *d*(*n*)(*m*), and a symbol in [*b*(*p*)(*q*)] is *b*(*p*)(*q*)*=e*(*p*)(*q*). Optionally, S is equal to N.

For another example, the first communication apparatus determines *[b(p)(q)]* based on [*t*(*s*)]. Correspondingly, the first information may indicate that [*b*(*p*)(*q*)] is a signal determined based on [*t*(*s*)]*.* In this case, a symbol in [*a*(*n*)(*m*)] is *a*(*n*)(*m*)*=d*(*n*)(*m*), and a symbol in [*b(p*)(*q*)] is *b(p)*(*q*)*=t*(*s*) × *e*(*p*)(*q*). Optionally, S is equal to P.

For another example, the first communication apparatus determines [*a*(*n*)(*m*)] and [*b*(*p*)(*q*)] based on [*t*(*s*)]*.* Correspondingly, the first information may indicate that both [*a*(*n*)(*m*)] and [*b*(*p*)(*q*)] are signals determined based on [*t(s*)]*.* In this case, a symbol in [*a*(*n*) (*m*)] is *a*(*n*)(*m*)=*t*(*s*) × *d*(*n*)(*m*)*,* and a symbol in [*b*(*p*)(*q*)] is *b*(*p*)(*q*)=*t*(s) × *e*(*p*)(*q*). Optionally, S, N, and P are equal.

For still another example, the first communication apparatus determines [*a*(*n*)(*m*)] based on [*c*(*r*)] and [*t*(*s*)]. Correspondingly, the first information may indicate that [*a*(*n*)(*m*)] is a signal determined based on [*c*(*r*)] and [*t*(*s*)]*.* In this case, a symbol in [*a*(*n*)(*m*)] is *a*(*n*)(*m*) = *c*(*r*) × *t*(*s*) × *d*(*n*)(*m*) , and a symbol in [*b*(*p*)(*q*)] is *b*(*p*)(*q*) *= e*(*p*)(*q*)*.* Optionally, R is equ0al to M, and S is equal to N.

For still another example, the first communication apparatus determines [b(p)(q)] based on [*c*(*r*)] and [*t*(*s*)]. Correspondingly, the first information may indicate that [*b*(*p*)(*q*)] is a signal determined based on [*c*(*r*)] and [*t*(*s*)]*.* In this case, a symbol in [*a*(*n*)(*m*)] is *a*(*n*)(*m*)*=d*(*n*)(*m*)*,* and a symbol in [*b*(*p*)(*q*)] is *b*(*p*)(*q*)*=c*(*r*) × *t*(*s*) × *e*(*p*)(*q*). Optionally, R is equal to Q, and S is equal to P.

For still another example, the first communication apparatus determines [*a*(*n*)(*m*)] and [*b*(*p*)(*q*)] based on [*c*(*r*)] and [*t*(*s*)]. Correspondingly, the first information may indicate that both [*a*(*n*)(*m*)] and *[b*(*p*)(*q*)] are signals determined based on [*c*(*r*)] and [*t*(*s*)]. In this case, a symbol in [*a*(*n*)(*m*)] is *a*(*n*)(*m*)*=c*(*r*) × *t*(s) × *d*(*n*)(*m*), and a symbol in [*b*(*p*)(*q*)] is *b*(*p*)(*q*)*=c*(*r*) × t(*s*) × *e*(*p*)(*q*). Optionally, R, M, and Q are equal, and S, N, and P are equal.

For still another example, the first communication apparatus does not use [*c*(*r*)] and [*t*(*s*)] to determine [*a*(*n*)(*m*)], and does not use [*c*(*r*)] and [*t*(*s*)] to determine [*b*(*p*)(*q*)]*.* Correspondingly, the first information may indicate that [*a*(*n*)(*m*)] is a signal determined not based on [*c*(*r*)] and/or [*t*(*s*)], and that [*b*(*p*)(*q*)] is a signal determined not based on [*c*(*r*)] and/or [*t*(*s*)]. In this case, a symbol in [*a*(*n*)(*m*)] is *a*(*n*)*(m)=d*(*n*)(*m*), and a symbol in *[b(p)(q)]* is *b*(*p*)(*q*)*=e*(*p*)(*q*).

For still another example, the first communication apparatus determines *[a(n)(m)]* based on [*c*(*r*)] , and determines [*b*(*p*)(*q*)] based on [*t*(*s*)]. Correspondingly, the first information may indicate that [*a*(*n*)(*m*)] is a signal determined based on [*c*(*r*)], and that [*b*(*p*)(*q*)] is a signal determined based on [*t*(*s*)]*.* In this case, a symbol in [*a*(*n*)(*m*)] is *a*(*n*)(*m*) = *c*(*r*) × *d*(*n*)(*m*)*,* and a symbol in [*b*(*p*)(*q*)] *is b*(*p*)(*q*) *= t*(*s*) × *e*(*p*)(*q*). Optionally, R is equal to M, and S is equal to P.

For still another example, the first communication apparatus determines [*a*(*n*)(*m*)] based on [*t*(*s*)] , and determines [*b*(*p*)(*q*)] based on [*c*(*r*)]. Correspondingly, the first information may indicate that [*a*(*n*)(*m*)] is a signal determined based on [*t*(*s*)], and that [*b*(*p*)(*q*)] is a signal determined based on [*c*(*r*)]. In this case, a symbol in [*a*(*n*)(*m*)] is *a*(*n*)(*m*) = *t*(*s*) × *d*(*n*)(*m*)*,* and a symbol in [*b*(*p*)(*q*)] is *b*(*p*)(*q*) *= c*(*r*) × *e*(*p*)(*q*)*.* Optionally, R is equal to Q, and S is equal to N.

In an example, the first information may include a third field and/or a fifth field, include a fourth field and/or a fifth field, include a third field and/or a sixth field, or include a fourth field and/or a sixth field. The third field (or the fourth field) may indicate that [*a*(*n*)(*m*)] and/or [*b*(*p*)(*q*)] is a signal determined based on [*c*(*r*)], or indicate that neither [*a*(*n*)(*m*)] nor [*b*(*p*)(*q*)] is a signal determined based on [*c*(*r*)]*.* The fifth field (or the sixth field) may indicate that [*a*(*n*)(*m*)] and/or [*b*(*p*)(*q*)] is a signal determined based [*t*(*s*)], or indicate that neither [*a*(*n*)(*m*)] nor [*b*(*p*)(*q*)] is a signal determined based on [*t*(*s*)].

It should be noted that, when the first information does not include the third field and the fourth field, the first information may implicitly indicate that both [*a*(*n*)(*m*)] and [*b*(*p*)(*q*)] are signals determined based on [*c*(*r*)], or implicitly indicate that neither [*a*(*n*)(*m*)] nor [*b*(*p*)(*q*)] is a signal determined based on [*c*(*r*)]*.* Similarly, when the first information does not include the fifth field and the sixth field, the first information may implicitly indicate that both [*a*(*n*)(*m*)] and [*b*(*p*)(*q*)] are signals determined based on [*t*(*s*)]*,* or implicitly indicate that neither [*a*(*n*)(*m*)] nor [*b*(*p*)(*q*)] is a signal determined based on [*t*(*s*)].

For example, the third field may include one or more of the following: an eighth state value, a ninth state value, a tenth state value, and an eleventh state value. The third field is the eighth state value, and the first information may indicate that neither [*a*(*n*)(*m*)] nor [*b*(*p*)(*q*)] is a signal determined based on [*c*(*r*)]*.* The third field is the ninth state value, and the first information may indicate that [*a*(*n*)(*m*)] is a signal determined based on [*c*(*r*)]. The third field is the tenth state value, and the first information may indicate that [*b*(*p*)(*q*)] is a signal determined based on [*c*(*r*)]. The third field is the eleventh state value, and the first information may indicate that both [*a*(*n*)(*m*)] and [*b*(*p*)(*q*)] are signals determined based on [*c*(*r*)]. For example, the third field has 2 bits, the eighth state value is 00, the ninth state value is 01, the tenth state value is 10, and the eleventh state value is 11, as shown in Table 3.

**Table 3**

| State value of a third field | Meaning |
|---|---|
| 00 | Neither [*a*(*n*)(*m*)] nor [*b*(*p*)(*q*)] is a signal determined based on [*c*(*r*)] |
| 01 | [*a*(*n*)(*m*)] is a signal determined based on [*c*(*r*)] |
| 10 | [*b*(*p*)(*q*)] is a signal determined based on [*c*(*r*)] |
| 11 | Both [*a*(*n*)(*m*)] and [*b*(*p*)(*q*)] are signals determined based on [*c*(*r*)] |

For example, the fourth field may include one or more of the following: a twelfth state value, a thirteenth state value, and a fourteenth state value. The fourth field is the twelfth state value, and the first information may indicate that neither [*a*(*n*)(*m*)] nor [*b*(*p*)(*q*)] is a signal determined based on [*c*(*r*)]*,* or indicate that both [*a*(*n*)(*m*)] and [*b*(*p*)(*q*)] are signals determined based on [*c*(*r*)]. The fourth field is the thirteenth state value, and the first information may indicate that [*a*(*n*)(*m*)] is a signal determined based on [*c*(*r*)]*.* The fourth field is the fourteenth state value, and the first information may indicate that [*b*(*p*)(*q*)] is a signal determined based on [*c*(*r*)]*.* For example, the fourth field has 2 bits, the twelfth state value is 00, the thirteenth state value is 01, and the fourteenth state value is 10, as shown in Table 4.

**Table 4**

| State value of a fourth field | Meaning |
|---|---|
| 00 | Neither [*a*(*n*)(*m*)] nor [*b*(*p*)(*q*)] is a signal determined based on [*c*(*r*)], or both [*a*(*n*)(*m*)] and [*b*(*p*)(*q*)] are signals determined based on [*c*(*r*)] |
| 01 | [*a*(*n*)(*m*)] is a signal determined based on [*c*(*r*)] |
| 10 | [*b*(*p*)(q)] is a signal determined based on [*c*(*r*)] |

For example, the fifth field may include one or more of the following: a fifteenth state value, a sixteenth state value, a seventeenth state value, and an eighteenth state value. The fifth field is the fifteenth state value, and the first information may indicate that neither [*a*(*n)(m*)] nor [*b*(*p*)(*q*)] is a signal determined based on [*t*(*s*)]*.* The fifth field is the sixteenth state value, and the first information may indicate that [*a*(*n*)(*m*)] is a signal determined based on [*t*(*s*)]. The fifth field is the seventeenth state value, and the first information may indicate that [*b*(*p*)(*q*)] is a signal determined based on [*t*(*s*)]. The fifth field is the eighteenth state value, and the first information may indicate that both [*a*(*n*)(*m*)] and [*b*(*p*)(*q*)] are signals determined based on [*t*(*s*)]. For example, the fifth field has 2 bits, the fifteenth state value is 00, the sixteenth state value is 01, the seventeenth state value is 10, and the eighteenth state value is 11, as shown in Table 5.

**Table 5**

| State value of a fifth field | Meaning |
|---|---|
| 00 | Neither [*a*(*n*)(*m*)] nor [*b*(*p*)(*q*)] is a signal determined based on [*t*(*s*)] |
| 01 | [*a*(*n*)(*m*)] is a signal determined based on [*t*(*s*)] |
| 10 | [*b*(*p*)(*q*)] is a signal determined based on [*t*(*s*)] |
| 11 | Both [*a*(*n*)(*m*)] and [*b*(*p*)(*q*)] are signals determined based on [*t*(*s*)] |

For example, the sixth field may include one or more of the following: a nineteenth state value, a twentieth state value, and a twenty-first state value. The sixth field is the nineteenth state value, and the first information may indicate that neither [*a*(*n*)(*m*)] nor [*b*(*p*)(*q*)] is a signal determined based on [*t*(*s*)], or indicate that both [*a*(*n*)(*m*)] and [*b*(*p*)(*q*)] are signals determined based on [*t*(*s*)]*.* The sixth field is the twentieth state value, and the first information may indicate that [*a*(*n*)(*m*)] is a signal determined based on [*t*(*s*)]. The sixth field is the twenty-first state value, and the first information may indicate that [*b*(*p*)(*q*)] is a signal determined based on [*t*(*s*)]. For example, the sixth field has 2 bits, the nineteenth state value is 00, the twentieth state value is 01, and the twenty-first state value is 10, as shown in Table 6.

**Table 6**

| State value of a sixth field | Meaning |
|---|---|
| 00 | Neither [*a*(*n*)(*m*)] nor [*b*(*p*)(*q*)] is a signal determined based on [*t*(*s*)], or both [*a*(*n*)(*m*)] and [*b*(*p*)(*q*)] are signals determined based on [*t*(*s*)] |
| 01 | [*a*(*n*)(*m*)] is a signal determined based on [*t*(s)] |
| 10 | [*b*(*p*)(*q*)] is a signal determined based on [*t*(*s*)] |

S302: The first communication apparatus sends the first signal and the second signal. Correspondingly, the second communication apparatus receives the first signal and the second signal.

For example, the first communication apparatus sends the first signal and the second signal to the second communication apparatus. Correspondingly, the second communication apparatus receives the first signal and the second signal from the first communication apparatus.

For example, the first communication apparatus may map the first signal and the second signal to a time domain resource and a frequency domain resource for sending. For example, when the first signal is [a(i)], the first communication apparatus may include I symbols in [*a*(*i*)] in one time domain symbol for sending, and one of the I symbols is carried on one frequency domain subcarrier on the time domain symbol. For another example, when the first signal is [*a*(*n*)(*m*)], the first communication apparatus may include *N* × M symbols in [*a*(*n*)(*m*)] in N time domain symbols for sending. Each of the N time domain symbols carries M symbols, and one symbol is carried on one frequency domain subcarrier. For a resource mapping manner of the second signal, refer to the resource mapping manner of the first signal. Details are not described again.

That the first communication apparatus sends the first signal and the second signal, and the second communication apparatus receives the first signal and the second signal may be replaced with: The first communication apparatus sends [*a*(*i*)] and *[b(j)],* and the second communication apparatus receives [*a*(*i*)] and [*b(j*)]; or the first communication apparatus sends [*a*(*n*)(*m*)] and [*b*(*p*)(*q*)]*,* and the second communication apparatus receives [*a*(*n*)(*m*)] and [*b*(*p*)(*q*)].

It should be noted that an execution sequence of S301 and S302 is used as an example and is not limited thereto. For example, the first communication apparatus may alternatively first send the first signal and the second signal, and then send the first information. For another example, the first communication apparatus may alternatively send the first signal, the second signal, and the first information at the same time.

Optionally, the method may further include: The second communication apparatus processes the first signal and the second signal based on the first information, that is, performs content of S303. S303 is an optional step, and is represented by a dashed line in FIG. 3.

S303: The second communication apparatus processes the first signal and the second signal based on the first information.

For example, when the first information indicates that the first signal is a signal determined based on the first coefficient, the second communication apparatus may perform matched filtering on the first signal based on the first coefficient. Alternatively, when the first information indicates that the second signal is a signal determined based on the first coefficient, the second communication apparatus may perform matched filtering on the second signal based on the first coefficient. Alternatively, when the first information indicates that both the first signal and the second signal are signals determined based on the first coefficient, the second communication apparatus may perform matched filtering on the first signal and the second signal based on the first coefficient, as shown in FIG. 4. Alternatively, when the first information indicates that neither the first signal nor the second signal is a signal determined based on the first coefficient, the second communication apparatus does not perform matched filtering on the first signal and the second signal based on the first coefficient, that is, performs the signal processing procedure shown in FIG. 1.

For example, the first signal is a DMRS, and the second signal is a PDSCH. When the first information indicates that the first signal is a signal determined based on the first coefficient, the second communication apparatus may perform channel estimation based on the first coefficient and the DMRS, and demodulate the PDSCH based on a channel estimation result. Alternatively, when the first information indicates that the second signal is a signal determined based on the first coefficient, the second communication apparatus may perform channel estimation based on the DMRS, and demodulate the PDSCH based on a channel estimation result and the first coefficient. Alternatively, when the first information indicates that both the first signal and the second signal are signals determined based on the first coefficient, the second communication apparatus may perform channel estimation based on the first coefficient and the DMRS, and demodulate the PDSCH based on a channel estimation result and the first coefficient. Alternatively, when the first information indicates that neither the first signal nor the second signal is a signal determined based on the first coefficient, the second communication apparatus may perform channel estimation based on the DMRS, and demodulate the PDSCH based on a channel estimation result.

That the second communication apparatus processes the first signal and the second signal based on the first information may be replaced with: The second communication apparatus processes [*a*(*i*)] and [*b*(*j*)] based on the first information; or the second communication apparatus processes [*a*(*n*)(*m*)] and [*b*(*p*)(*q*)] based on the first information.

It should be noted that a specific implementation process in which the second communication apparatus processes the first signal and the second signal based on the first information is not limited in embodiments of this application.

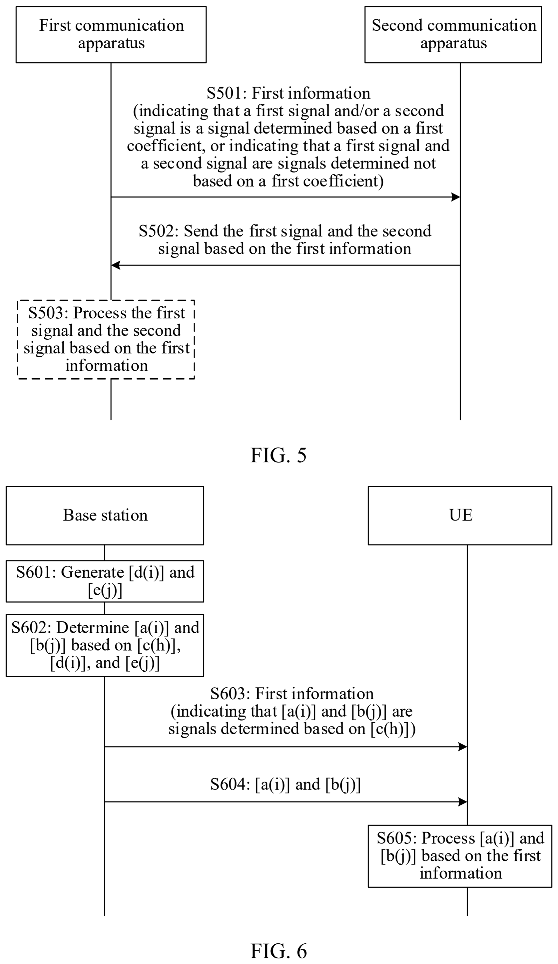

FIG. 5 is a schematic flowchart of another communication method according to an embodiment of this application. In this embodiment, an example in which a first communication apparatus receives a first signal and a second signal is used. As shown in FIG. 5, the method may include the following steps.

S501: The first communication apparatus sends first information. A second communication apparatus receives the first information.

For example, the first communication apparatus sends the first information to the second communication apparatus. Correspondingly, the second communication apparatus receives the first information from the first communication apparatus. Optionally, the first information may be carried in DCI, may be carried in RRC layer signaling, or may be carried in MAC layer signaling. This is not limited.

The first information may indicate that the first signal is a signal determined based on a first coefficient, indicate that the second signal is a signal determined based on a first coefficient, indicate that both the first signal and the second signal are signals determined based on a first coefficient, or indicate that neither the first signal nor the second signal is a signal determined based on a first coefficient. In other words, the first information may indicate that the first signal is determined based on the first coefficient, indicate that the second signal is determined based on the first coefficient, indicate that the first signal and the second signal are determined based on the first coefficient, or indicate that the first coefficient is not used to determine the first signal and the second signal.

For example, the first communication apparatus may determine whether to determine the first signal and/or the second signal based on the first coefficient. For example, the first communication apparatus may determine, based on a modulation and coding scheme (modulation and coding scheme, MCS) of a fourth signal (or the second signal), to determine the first signal based on the first coefficient, determine the second signal based on the first coefficient, or determine the first signal and the second signal based on the first coefficient. In other words, the first communication apparatus may determine, based on the modulation and coding scheme of the fourth signal, that the first signal is a signal determined based on the first coefficient, determine that the second signal is a signal determined based on the first coefficient, or determine that both the first signal and the second signal are signals determined based on the first coefficient.

In an example, the first signal is [*a*(*i*)], the second signal is [*b*(*j*)]*,* and the first coefficient is [*c*(*h*)]. The first information may indicate that [*a*(*i*)] and/or [*b*(*j*)] are/is determined based on [*c*(*h*)]*,* or indicate that [*c*(*h*)] is not used to determine [*a*(*i*)] and [*b*(*j*)]. For example, the first information may include a first field, and a state value of the first field may indicate that [*a*(*i*)] and/or [*b*(*j*)] is a signal determined based on [*c*(*h*)]*,* or indicate that neither [*a*(*i*)] nor [*b*(*j*)] is a signal determined based on [*c*(*h*)]. For another example, the first information may include a second field, and a state value of the second field may indicate that [*a*(*i*)] and/or [*b(j*)] is a signal determined based on [*c*(*h*)], or indicate that neither [*a*(*i*)] nor [*b*(*j*)] is a signal determined based on [*c*(*h*)]. For a specific implementation process, refer to related content of S301. Details are not described again.

In another example, the first signal is [*a*(*n*)(*m*)], the second signal is [*b*(*p*)(*q*)], and the first coefficient includes [*c*(*r*)] and/or [*t*(*s*)]. The first information may indicate that [*a*(*n*)(*m*)] and/or [*b*(*p*)(*q*)] are/is determined based on [*c*(*r*)]*,* indicate that [*a*(*n*)(*m*)] and/or [*b*(*p*)(*q*)] are/is determined based on [*t*(*s*)]*,* indicate that *[a(n)(m)]* and/or *[b(p)(q)]* are/is determined based on [*c*(*r*)] and [*t*(*s*)], or indicate that [*c*(*r*)] and/or [*t*(*s*)] are/is not used to determine [*a*(*n*)(*m*)], and that [*c*(*r*)] and/or [*t*(*s*)] are/is not used to determine [*b*(*p*)(*q*)]*.* For a specific implementation process, refer to related content of S301 above. Details are not described again. For example, the first information may include a third field and/or a fifth field, include a fourth field and/or a fifth field, include a third field and/or a sixth field, or include a fourth field and/or a sixth field. The third field (or the fourth field) may indicate that [*a*(*n*)(*m*)] and/or [*b*(*p*)(*q*)] is a signal determined based on [*c*(*r*)], or indicate that neither [*a*(*n*)(*m*)] nor [*b*(*p*)(*q*)] is a signal determined based on [*c*(*r*)]. The fifth field (or the sixth field) may indicate that [*a*(*n*)(*m*)] and/or [*b*(*p*)(*q*)] is a signal determined based [*t*(*s*)], or indicate that neither [*a*(*n*)(*m*)] nor [*b*(*p*)(*q*)] is a signal determined based on [*t*(*s*)]. For a specific implementation process, refer to related content of S301. Details are not described again.

It should be noted that the first information may explicitly indicate that the first signal and/or the second signal are/is determined based on the first coefficient, or explicitly indicate that the first coefficient is not used to determine the first signal and the second signal. In another possible implementation, the first information may alternatively implicitly indicate that the first signal and/or the second signal are/is determined based on the first coefficient, or implicitly indicate that the first coefficient is not used to determine the first signal and the second signal. For example, the first information may be MCS indication information, and may indicate the MCS of the second signal (or the fourth signal). Further, the second communication apparatus may determine, based on the MCS of the second signal, that the first signal and/or the second signal are/is determined based on the first coefficient, or determine that the first coefficient is not used to determine the first signal and the second signal. In this way, the first communication apparatus may reuse the MCS indication information for implicit indication, and additional information does not need to be added.

It should be noted that, for a specific implementation process of S501, refer to content of S301. Details are not described herein again.

S502: The second communication apparatus sends the first signal and the second signal based on the first information. The first communication apparatus receives the first signal and the second signal.

For example, the second communication apparatus may send the first signal and the second signal to the first communication apparatus based on the first information. Correspondingly, the first communication apparatus receives the first signal and the second signal from the second communication apparatus.

For example, the second communication apparatus may determine (or obtain or generate) the first signal and the second signal based on the first information, and send the first signal and the second signal. For example, the second communication apparatus may determine the first signal and/or the second signal based on the first coefficient, or may not use the first coefficient to determine the first signal and the second signal. Specifically, the second communication apparatus may generate a third signal and the fourth signal. Further, the second communication apparatus may determine the first signal and the second signal based on the first coefficient, the third signal, and the fourth signal; or determine that the first signal is the third signal and determine that the second signal is the fourth signal. For a specific implementation process, refer to content of determining the first signal and the second signal by the first communication apparatus. Details are not described again.

That the second communication apparatus sends the first signal and the second signal based on the first information, and the first communication apparatus receives the first signal and the second signal may be replaced with: The second communication apparatus sends [*a*(*i*)] and [*b*(*j*)] based on the first information, and the first communication apparatus receives [*a*(*i*)] and [*b*(*j*)]; or the second communication apparatus sends [*a*(*n*)(*m*)] and [*b*(*p*)(*q*)] based on the first information, and the first communication apparatus receives [*a*(*n*)(*m*)] and [*b*(*p*)(*q*)].

Correspondingly, that the second communication apparatus determines the first signal and the second signal based on the first information may be replaced with: The second communication apparatus determines [*a*(*i*)] and [*b*(*j*)] based on the first information; or the second communication apparatus determines [*a*(*n*)(*m*)] and [*b*(*p*)(*q*)] based on the first information. For details, refer to related content of the embodiment shown in FIG. 3. Details are not described again.

In an example, the first signal is [a(*i*)], the second signal is [b(*j*)], and the first coefficient is [*c*(*h*)]*.* When the first information indicates that [*a*(*i*)] is determined based on [*c*(*h*)], the second communication apparatus may determine [*a*(*i*)] based on [*c*(*h*)]. A symbol in [*a*(*i*)] is *a*(*i*)*=c*(*h*) × *d(i),* and a symbol in [*b*(*j*)] is *b*(*j*)*=e*(*j*). Alternatively, when the first information indicates that [*b*(*j*)] is determined based on *[c(h)],* the second communication apparatus may determine [*b*(*j*)] based on [*c*(*h*)]. A symbol in [*a*(*i*)] is *a*(*i*)*=d*(*i*), and a symbol in [*b*(*j*)] is *b*(*j*)*=c*(*h*) × *e*(*j*). Alternatively, when the first information indicates that [*a*(*i*)] and [*b*(*j*)] are determined based on [*c*(*h*)], the second communication apparatus may determine [*a*(*i*)] and [*b*(*j*)] based on [*c*(*h*)]. A symbol in [*a*(*i*)] *is a*(*i*)*=c*(*h*) × *d*(*i*), and a symbol in [*b*(*j*)] is *b*(*j*)*=c(h)* × *e*(*j*). Alternatively, when the first information indicates that [*c*(*h*)] is not used to determine [*a*(*i*)] and [*b(j*)], the second communication apparatus may determine that [*a*(*i*)] is [*d*(*i*)] and [*b*(*j*)] is [*e*(*j*)]. For a specific implementation process, refer to related content of the embodiment shown in FIG. 3. Details are not described again.

In another example, the first signal is [*a*(*n*)(*m*)], the second signal is [*b*(*p*)(*q*)], and the first coefficient includes [*c*(*r*)] and/or [*t*(*s*)]. When the first information indicates that [*a*(*n*)(*m*)] is determined based on [*c*(*r*)], the second communication apparatus may determine [*a*(*n*)(*m*)] based on [*c*(*r*)]. A symbol in [*a*(*n*)(*m*)] is *a*(*n*)(*m*) = *c*(*r*) × *d*(*n*)(*m*), and a symbol in [*b*(*p*)(*q*)] is *b*(*p*)(*q*)*=e*(*p*)(*q*).

Alternatively, when the first information indicates that [*b*(*p*)(*q*)] is determined based on [*c*(*r*)], the second communication apparatus may determine [*b*(*p*)(*q*)] based on *[c(r)].* A symbol in [*a*(*n*)(*m*)] is *a*(*n*)(*m*)*=d*(*n*)(*m*)*,* and a symbol in [*b*(*p*)(*q*)] is *b*(*p*)(*q*)*=c*(*r*) × *e*(*p*)(*q*)*.*

Alternatively, when the first information indicates that [*a*(*n*)(*m*)] and [*b*(*p*)(*q*)] are determined based on [*c*(*r*)], the second communication apparatus may determine [*a*(*n*)(*m*)] and [*b*(*p*)(*q*)] based on [*c*(*r*)]*.* A symbol in [*a*(*n*)(*m*)] is *a*(*n*)(*m*)*=c*(*r*) × *d*(*n*)(*m*), and a symbol in [*b*(*p*)(*q*)] is *b*(*p)*(*q*)*=c*(*r*) × *e*(*p*)(*q*).

Alternatively, when the first information indicates that [*a*(*n*)(*m*)] is determined based on [*t*(*s*)]*,* the second communication apparatus may determine [*a*(*n*)(*m*)] based on [*t*(*s*)]*.* A symbol in [*a*(*n*)(*m*)] is *a*(*n*)(*m*) = *t*(*s*) × *d*(*n*)(*m*), and a symbol in [*b*(*p*)(*q*)] is *b*(*p*)(*q*)*=e*(*p*)(*q*).

Alternatively, when the first information indicates that [*b*(*p*)(*q*)] is determined based on [*t*(*s*)]*,* the second communication apparatus may determine [*b*(*p*)(*q*)] based on [*t*(*s*)]. A symbol in [*a*(*n*)(*m*)] is *a*(*n*)(*m*)*=d*(*n*)(*m*)*,* and a symbol in [*b*(*p*)(*q*)] is *b*(*p*)(*q*)*=t*(*s*) × *e*(*p*)(*q*).

Alternatively, when the first information indicates that [*a*(*n*)(*m*)] and [*b*(*p*)(*q*)] are determined based on [*t*(*s*)]*,* the second communication apparatus may determine *[a(n)(m)]* and [*b*(*p*)(*q*)] based on [*t*(*s*)]. A symbol in [*a*(*n*)(*m*)] is *a*(*n*)(*m*)*=t*(*s*) × *d*(*n*)(*m*), and a symbol in [*b*(*p*)(*q*)] is *b*(*p*)(*q)*=*t*(*s*) × *e*(*p*)(*q*).

Alternatively, when the first information indicates that *[a(n)(m)]* is determined based on [*c*(*r*)] and [*t*(*s*)], the second communication apparatus may determine [*a*(*n*)(*m*)] based on [*c*(*r*)] and [*t*(*s*)]. A symbol in [*a*(*n*)(*m*)] is *a*(*n*)(*m*) = *c*(*r*) × *t*(*s*) × *d*(*n*)*(*m), and a symbol in [*b*(*p*)(*q*)] is *b*(*p*)(*q*)*=e*(*p*)(*q*).

Alternatively, when the first information indicates that [*b*(*p*)(*q*)] is determined based on [*c*(r)] and [*t*(*s*)], the second communication apparatus may determine [*b*(*p*)(*q*)] based on [*c*(*r*)] and [*t*(*s*)]. A symbol in [*a*(*n*)(*m*)] is *a*(*n*)(*m*)*=d*(*n*)(*m*)*,* and a symbol in [*b*(*p*)*(*q)] is *b*(*p*)(*q*)*=c*(*r*) × *t*(*s*) × *e*(*p*)*(q*).

Alternatively, when the first information indicates that [*a*(*n*)(*m*)] and [*b*(*p*)*(*q)] are determined based on [*c*(*r*)] and [*t*(*s*)], the second communication apparatus may determine [*a*(*n*)(*m*)] and [*b*(*p*)(*q*)] based on [*c*(*r*)] and [*t*(*s*)]*.* A symbol in [*a*(*n*)(*m*)] is *a*(*n*)(*m*)*=c*(*r*) × *t*(*s*) × *d*(*n*)(*m*)*,* and a symbol in [*b*(*p*)(*q*)] is *b*(*p*)(*q*)*=c*(*r*) × *t*(*s*) × *e*(*p*)(*q*).

Alternatively, when the first information indicates that [*c*(*r*)] and/or [*t*(*s*)] are/is not used to determine [*a*(*n*)(*m*)], and that [*c*(*r*)] and/or [*t*(*s*)] are/is not used to determine [*b*(*p*)(*q*)], the second communication apparatus may determine that [*a*(*n*)(*m*)] is [*d*(*n*)(*m*)] and [*b*(*p*)(*q*)] is [*e*(*p*)(*q*)]*.*

Alternatively, when the first information indicates that [*a*(*n*)(*m*)] is determined based on [*c*(*r*)], and that [*b*(*p*)(*q*)] is determined based on [*t*(*s*)]*,* the second communication apparatus may determine [*a*(*n*)(*m*)] based on [*c*(*r*)], and determine [*b*(*p*)(*q*)] based on [*t*(*s*)]*.* A symbol in [*a*(*n*)(*m*)] is *a*(*n*)(*m*) = *c*(*r*) × *d*(*n*)(*m*), and a symbol in [*b*(*p*)(*q*)] is *b*(*p*)(*q*) *= t*(*s*) × *e*(*p*)(*q*).

Alternatively, when the first information indicates that [*a*(*n*)(m)] is determined based on [*t*(*s*)], and that [*b*(*p*)*(q*)] is determined based on [*c*(*r*)]*,* the second communication apparatus may determine [*a*(*n*)(*m*)] based on [*t*(*s*)]*,* and determine [*b*(*p*)(*q*)] based on [*c*(*r*)]*.* A symbol in [*a*(*n*)(*m*)] is *a*(*n*)(*m*) = *t*(*s*) × *d*(*n*)(*m*), and a symbol in [*b*(*p*)(*q*)] is *b*(*p*)(*q*) *= c*(*r*) × *e*(*p*)(*q*).

For a specific implementation process, refer to related content of the embodiment shown in FIG. 3. Details are not described again.

Optionally, the method may further include: The first communication apparatus processes the first signal and the second signal based on the first information, that is, performs content of S503. S503 is an optional step, and is represented by a dashed line in FIG. 5.

S503: The first communication apparatus processes the first signal and the second signal based on the first information.

For example, when the first information indicates that the first signal is determined based on the first coefficient, the first communication apparatus may perform matched filtering on the first signal based on the first coefficient. Alternatively, when the first information indicates that the second signal is determined based on the first coefficient, the first communication apparatus may perform matched filtering on the second signal based on the first coefficient. Alternatively, when the first information indicates that the first signal and the second signal are determined based on the first coefficient, the second communication apparatus may perform matched filtering on the first signal and the second signal based on the first coefficient, as shown in FIG. 4. Alternatively, when the first information indicates that neither the first signal nor the second signal is a signal determined based on the first coefficient, the second communication apparatus does not perform matched filtering on the first signal and the second signal based on the first coefficient, that is, performs the signal processing procedure shown in FIG. 1.

For example, the first signal is a DMRS, and the second signal is a PUSCH. When the first information indicates that the first signal is determined based on the first coefficient, the first communication apparatus may perform channel estimation based on the first coefficient and the DMRS, and demodulate the PUSCH based on a channel estimation result. Alternatively, when the first information indicates that the second signal is determined based on the first coefficient, the first communication apparatus may perform channel estimation based on the DMRS, and demodulate the PUSCH based on a channel estimation result and the first coefficient. Alternatively, when the first information indicates that the first signal and the second signal are determined based on the first coefficient, the first communication apparatus may perform channel estimation based on the first coefficient and the DMRS, and demodulate the PUSCH based on a channel estimation result and the first coefficient. Alternatively, when the first information indicates that the first coefficient is not used to determine the first signal and the second signal, the first communication apparatus may perform channel estimation based on the DMRS, and demodulate the PUSCH based on a channel estimation result.

That the first communication apparatus processes the first signal and the second signal based on the first information may be replaced with: The first communication apparatus processes [a(i)] and [*b*(*j*)] based on the first information; or the first communication apparatus processes [*a*(*n*)(*m*)] and [*b*(*p*)(*q*)] based on the first information.

It should be noted that a specific implementation process in which the first communication apparatus processes the first signal and the second signal based on the first information is not limited in embodiments of this application.

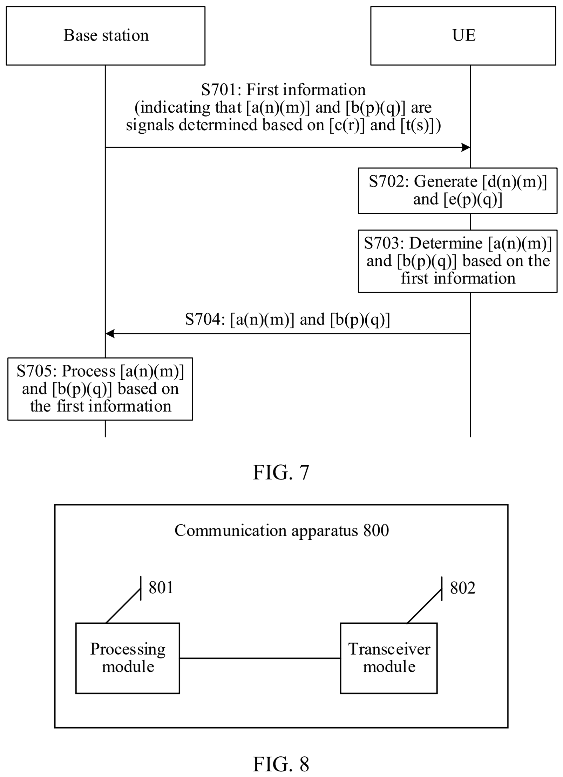

The following separately describes the embodiment shown in FIG. 3 and the embodiment shown in FIG. 5 with reference to FIG. 6 and FIG. 7. In FIG. 6, an example in which a first signal is denoted as [*a*(*i*)], a second signal is denoted as [*b*(*j*)], and a first coefficient is denoted as [*c*(*h*)] is used. In FIG. 7, an example in which a first signal is denoted as [*a*(*n*)(*m*)]*,* a second signal is denoted as [*b*(*p*)(*q*)]*,* and a first coefficient includes [*c*(*r*)] and/or [*t*(*s*)] is used.

FIG. 6 is a schematic flowchart of still another communication method according to an embodiment of this application. In this embodiment, a first communication apparatus is a base station, and a second communication apparatus is UE. As shown in FIG. 6, the method may include the following steps.

S601: The base station generates [*d*(*i*)] and [*e*(*j*)]. For [*d*(*i*)] and [*e(j*)], refer to the foregoing descriptions. Details are not described again.

S602: The base station determines [*a*(*i*)] and [*b*(*j*)] based on [*c*(*h*)]*,* [*d*(*i*)]*,* and [*e*(*j*)].

For example, the base station may determine [*a*(*i*)] based on [*c*(*h*)] and [*d*(*i*)], and determine that [*b*(*j*)] is [*e*(*j*)]; determine [*b*(*j*)] based on [*c*(*h*)] and [*e*(*j*)], and determine that [*a*(*i*)] is [*d*(*i*)]; determine [*a*(*i*)] based on [*c*(*h*)] and [*d*(*i*)], and determine [*b*(*j*)] based on [*c*(*h*)] and [*e*(*j*)]; or determine that [*a*(*i*)] is [*d*(*i*)] and determine that [*b*(*j*)] is [*e*(*j*)]. For example, the base station may determine, based on a modulation and coding scheme corresponding to [*e*(*j*)], that [*a*(*i*)] and/or [*b*(*j*)] is a signal determined based on [*c*(*h*)] In FIG. 6, an example in which the base station determines [*a*(*i*)] and [*b*(*j*)] based on [*c*(*h*)]*,* [*d*(*i*)], and [*e*(*j*)] is used.

S603: The base station sends first information to the UE. Correspondingly, the UE receives the first information from the base station.

The first information may indicate that [*a*(*i*)] and/or [*b*(*j*)] is a signal determined based on [*c*(*h*)]*,* or indicate that neither [*a*(*i*)] nor [*b*(*j*)] is a signal determined based on *[c(h)].* In FIG. 6, an example in which the first information indicates that [*a*(*i*)] and [*b(j*)] are signals determined based on *[c(h)]* is used.

For specific implementation processes of S602 and S603, refer to related content of S301. Details are not described again.

S604: The base station sends [*a*(*i*)] and *[b(j)]* to the UE. Correspondingly, the UE receives *[a(i)]* and *[b(j)]* from the base station.

For example, the base station may map [*a*(*i*)] and *[b(j)]* to a time domain resource and a frequency domain resource for sending. For details, refer to content of S302. Details are not described again.

S605: The UE processes *[a(i)]* and *[b(j)]* based on the first information.

For example, when the first information indicates that [*a*(*i*)] and/or [*b*(*j*)] is a signal determined based on [*c*(*h*)]*,* the UE may perform matched filtering on [*a(*i)] and/or [*b*(*j*)] based on [*c*(*h*)]*.* For details, refer to content of S303. Details are not described again.

FIG. 7 is a schematic flowchart of still another communication method according to an embodiment of this application. In this embodiment, a first communication apparatus is a base station, and a second communication apparatus is UE. As shown in FIG. 7, the method may include the following steps.

S701: The base station sends first information to the UE. Correspondingly, the UE receives the first information from the base station.

The first information may indicate that [*a*(*n*)(*m*)] and/or [*b*(*p*)(*q*)] are/is determined based on [*c*(*r*)] and/or [*t*(*s*)]*,* or indicate that [*c*(*r*)] and/or [t(s)] are/is not used to determine [*a*(*n*)(*m*)], and that [*c*(*r*)] and/or *[t(s)]* are/is not used to determine [*b*(*p*)(*q*)]*.* In FIG. 7, an example in which the first information indicates that *[a(n)(m)]* and *[b(p)(q)]* are determined based on [*c*(*r*)] and [*t*(*s*)] is used.

S702: The UE generates [*d*(*n*)(*m*)] and [*e*(*p*)(*q*)]*.*

S703: The UE determines [*a*(*n*)(*m*)] and [*b*(*p*)(*q*)] based on the first information.

For example, when the first information indicates that [*a*(*n*)(*m*)] is determined based on [*c*(*r*)]*,* the second communication apparatus may determine [*a*(*n*)(*m*)] based on [*c*(*r*)]*.* Alternatively, when the first information indicates that [*b*(*p*)(*q*)] is determined based on *[c(r)],* the second communication apparatus may determine [*b*(*p*)(*q*)] based on [*c*(*r*)]*.* Alternatively, when the first information indicates that [*a*(*n*)(*m*)] and [*b*(*p*)(*q*)] are determined based on [*c*(*r*)]*,* the second communication apparatus may determine [*a*(*n*)(*m*)] and [*b*(*p*)(*q*)] based on [*c(r*)]*.* Alternatively, when the first information indicates that [*a*(*n*)(*m*)] is determined based on [*t*(*s*)]*,* the second communication apparatus may determine [*a*(*n)(m*)] based on [*t*(*s*)]*.* Alternatively, when the first information indicates that [*b*(*p*)(*q*)] is determined based on [*t*(*s*)] , the second communication apparatus may determine [*b*(*p*)(*q*)] based on [*t*(*s*)]*.* Alternatively, when the first information indicates that [*a*(*n*)(*m*)] and [*b*(*p*)(*q*)] are determined based on [*t*(*s*)]*,* the second communication apparatus may determine [*a*(*n*)(*m*)] and [*b*(*p*)(*q*)] based on [*t*(*s*)]. A symbol in [*a*(*n*)(*m*)] is *a*(*n*)(*m*)*=t*(*s*) × *d*(*n*)(*m*), and a symbol in [*b*(*p*)(*q*)] is *b*(*p*)(*q*)*=t*(*s*) × *e*(*p*)(*q*)*.* Alternatively, when the first information indicates that [*a*(*n*)(*m*)] is determined based on [*c*(*r*)] and [*t*(*s*)]*,* the second communication apparatus may determine [*a*(*n*)(*m*)] based on [*c*(*r*)] and [*t*(*s*)]. Alternatively, when the first information indicates that [*b*(*p*)*(q*)] is determined based on [*c*(*r*)] and [*t*(*s)*], the second communication apparatus may determine [*b*(*p*)(*q*)] based on [*c*(*r*)] and [*t*(*s*)]. Alternatively, when the first information indicates that [*a*(*n*)(*m*)] and [*b*(*p*)(*q*)] are determined based on [*c*(*r*)] and [*t*(*s*)] *,* the second communication apparatus may determine [*a*(*n*)(*m*)] and [*b*(*p)*(*q*)] based on [*c*(*r*)] and [*t*(*s*)]. Alternatively, when the first information indicates that *[c(r)]* and/or *[t(s)]* are/is not used to determine [*a*(*n*)(*m*)], and that [*c*(*r*)] and/or [*t*(*s*)] are/is not used to determine [*b*(*p*)(*q*)]*,* the second communication apparatus may determine that [*a*(*n*)(*m*)] is [*d*(*n*)*(m*)] and [*b*(*p*)(*q*)] is [*e*(*p*)(*q*)]. Alternatively, when the first information indicates that [*a*(*n*)(*m*)] is determined based on [*c*(*r*)]*,* and that [*b*(*p*)(*q*)] is determined based on [*t*(*s*)]*,* the second communication apparatus may determine [*a*(*n*)(*m*)] based on [*c*(*r*)]*,* and determine [*b*(*p*)(*q*)] based on [*t*(*s*)]*.* Alternatively, when the first information indicates that [*a*(*n*)(m)] is determined based on [*t*(*s*)], and that [*b*(*p*)(*q*)] is determined based on [*c*(*r*)], the second communication apparatus may determine *[a(n)(m)]* based on [*t*(*s*)], and determine [*b*(*p*)(*q*)] based on *[c(r)].* For a specific implementation process, refer to content of S502. Details are not described again.

S704: The UE sends [*a*(*n*)(*m*)] and [*b*(*p*)(*q*)] to the base station. Correspondingly, the base station receives [*a*(*n*)(*m*)] and [*b*(*p*)(*q*)] from the UE.

For example, the UE may map [*a*(*n*)(*m*)] and [*b*(*p*)(*q)*] to a time domain resource and a frequency domain resource for sending. For details, refer to content of S502. Details are not described again.

S705: The base station processes [*a*(*n*)(*m*)] and [*b*(*p*)(*q*)] based on the first information.

For example, when the first information indicates that [*a*(*n*)(*m*)] and/or [*b*(*p*)*(*q)] is a signal determined based on [*c*(*r*)] and/or [*t*(*s*)], the base station may perform matched filtering on [*a*(*n*)(*m*)] and [*b*(*p*)(*q*)] based on [*c*(*r*)] and/or [*t*(*s*)]. For details, refer to content of S503. Details are not described again.

In this application, the method provided in embodiments of this application is described from a perspective of interaction between the first communication apparatus and the second communication apparatus. To implement the method provided in embodiments of this application, each of the foregoing communication apparatuses may include a hardware structure and/or a software module, and implement the foregoing functions in a form of the hardware structure, the software module, or a combination of the hardware structure and the software module.

The following describes a communication apparatus for implementing the foregoing methods in embodiments of this application with reference to the accompanying drawings. Therefore, all the foregoing content may be used in the following embodiments. Repeated content is not described again.

FIG. 8 is a diagram of a structure of a communication apparatus 800. The communication apparatus 800 may implement functions or steps implemented by the first communication apparatus or the second communication apparatus in the foregoing method embodiments.

In a possible implementation, the communication apparatus 800 may include a processing module 801 and a transceiver module 802. The processing module 801 may be configured to perform the steps of any communication apparatus (for example, the first communication apparatus or the second communication apparatus) in any one of the foregoing method embodiments. The transceiver module 802 may be configured to receive or send related data, information, or a message.

In another possible implementation, the communication apparatus 800 may include a transceiver module 802. The transceiver module 802 may be configured to perform steps or methods of any communication apparatus (for example, the first communication apparatus or the second communication apparatus) in any one of the foregoing method embodiments.

It should be noted that the foregoing units may be independently disposed, or may be partially or completely integrated. For example, the transceiver module 802 may include a sending module and a receiving module.

In an example, the communication apparatus 800 may implement functions or steps implemented by the first communication apparatus in any one of the foregoing method embodiments. For example, the transceiver module 802 is configured to: send first information, where the first information may indicate that a first signal and/or a second signal is a signal determined based on a first coefficient, or indicate that neither a first signal nor a second signal is a signal determined based on a first coefficient; and send the first signal and the second signal, or receive the first signal and the second signal.

In a possible design, the first signal is [*a*(*i*)], the second signal is [*b*(*j*)], and the first coefficient is [*c*(*h*)]*.* [*a*(*i*)] includes I symbols, [*b*(*j*)] includes J symbols, [*c*(*h*)] includes H elements, H is a positive integer greater than or equal to I and greater than or equal to J, both I and J are positive integers, *i* belongs to {1, ..., I}, *j* belongs to {1, ..., J}, and h belongs to {1, ..., H}.

In an optional implementation based on the foregoing design, when the first information indicates that [*a*(*i*)] is a signal determined based on [*c*(*h*)], a symbol in [*a*(*i*)] is *a*(*i*)*=c*(*h*) × *d*(*i*), and a symbol in [*b*(*j*)] is *b*(*j*)*=e*(j)*;* when the first information indicates that *[b(j)]* is a signal determined based on [*c*(*h*)]*,* a symbol in [*a*(*i*)] is *a*(*i*)*=d*(*i*)*,* and a symbol in [*b*(*j*)] is *b*(*j)*=*c*(*h*) × *e*(*j*); when the first information indicates that both [*a*(*i*)] and [*b*(*j*)] are signals determined based on [*c*(*h*)]*,* a symbol in [*a*(*i*)] is *a*(*i*)*=c*(*h*) × *d*(*i*), and a symbol in [*b*(*j*)] is *b*(*j*)*=c*(*h*) × *e*(*j*); or when the first information indicates that neither [*a*(*i*)] nor [*b*(*j*)] is a signal determined based on [*c*(*h*)], a symbol in [*a*(*i*)] is *a*(*i*)*=d*(*i*)*,* and a symbol in [*b*(*j*)] is *b*(*j*)*=e*(*j*). *d*(*i*) belongs to a third signal [*d*(*i*)], *e(j)* belongs to a fourth signal [*e(j*)]*,* [*d*(*i*)] includes I symbols, and [*e*(*j*)] includes J symbols.

In an optional implementation based on the foregoing design, the first information includes a first field or a second field, the first field includes one or more of the following: a first state value, a second state value, a third state value, and a fourth state value, and the second field includes one or more of the following: a fifth state value, a sixth state value, and a seventh state value. The first field is the first state value, and the first information indicates that neither [*a*(*i*)] nor [*b*(*j*)] is a signal determined based on [*c*(*h*)]; the first field is the second state value, and the first information indicates that [*a*(*i*)] is a signal determined based on [*c*(*h*)]; the first field is the third state value, and the first information indicates that [*b*(*j*)] is a signal determined based on [*c(h*)]; or the first field is the fourth state value, and the first information indicates that both [*a*(*i*)] and [*b*(*j*)] are signals determined based on [*c*(*h*)]. The second field is the fifth state value, and the first information indicates that neither [*a*(*i*)] nor [*b*(*j*)] is a signal determined based on [*c*(*h*)]*,* or indicates that both [*a*(*i*)] and [*b*(*j*)] are signals determined based on [*c*(*h*)]; the second field is the sixth state value, and the first information indicates that [*a*(*i*)] is a signal determined based on [*c(h*)]; or the second field is the seventh state value, and the first information indicates that [*b*(*j*)] is a signal determined based on [*c*(*h*)]*.*

In an optional implementation based on the foregoing design, the processing module 801 is further configured to determine, based on a modulation and coding scheme corresponding to the fourth signal [*e*(*j*)], that [*a*(*i*)] and/or [*b*(*j*)] is a signal determined based on *[c(h)],* where when [*b*(*j*)] is a signal determined not based on [*c*(*h*)]*,* an element in [*b*(*j*)] is *b*(*j*) *= e*(*j*)*.*

In an optional implementation based on the foregoing design, an element in [*c*(*h*)] may satisfy: When *h* is less than *k, c*(*h*) is less than *c*(*h +* 1), or when *h* is greater than *k, c*(*h*) is less than or equal to *c*(*h -* 1); or when *h* is less than *k, c(h)* is greater than *c*(*h +* 1), or when *h* is greater than *k, c*(*h*) is greater than or equal to *c*(*h -* 1). k is a positive integer greater than 1 and less than H.

In another possible design, the first signal is [*a*(*n*)(*m*)] , the second signal is [*b*(*p*)(*q*)], and the first coefficient includes [*c*(*r*)] and/or [*t*(*s*)]*.* [*a*(*n*)(*m*)] includes *N* × *M* symbols, [*b*(*p*)(*q*)] includes P × Q symbols, [*c*(*r*)] includes R elements, [*t*(*s*)] includes S elements, R is a positive integer greater than or equal to M and greater than or equal to Q, S is a positive integer greater than or equal to N and greater than or equal to P, N, M, P, and Q are all positive integers greater than 1, n belongs to {1, ..., N}, m belongs to {1, ..., M}, p belongs to {1, ..., P}, q belongs to {1, ..., Q}, r belongs to {1, ..., R}, and s belongs to {1, ..., S}.

In an optional implementation based on the foregoing design, when the first information indicates that [*a*(*n*)(*m*)] is a signal determined based on [*c*(*r*)]*,* a symbol in [*a*(*n*)(*m*)] is *a*(*n*)(*m*) = *c*(*r*) × *d*(*n*)(*m*), and a symbol in [*b*(*p*)(*q*)] is *b*(*p*)(*q*)*=e*(*p*)(*q*).

Alternatively, when the first information indicates that [b(p)(q)] is a signal determined based on [*c*(*r*)], a symbol in [*a*(*n*)(*m*)] is *a*(*n*)(*m*)*=d*(*n*)(*m*)*,* and a symbol in [*b*(*p*)(*q*)] is *b*(*p*)(*q*)*=c*(*r*) × *e*(*p*)(*q*).

Alternatively, when the first information indicates that both [*a*(*n*)(*m*)] and [*b*(*p*)(*q*)] are signals determined based on [*c*(*r*)]*,* a symbol in [*a*(*n*)(*m*)] is *a(n)(m)=c(r)* × *d*(*n*)(*m*), and a symbol in [*b*(*p*)(*q*)] is *b*(*p*)(*q*)*=c*(*r*) × *e*(*p*)(*q*).

Alternatively, when the first information indicates that *[a(n)(m)]* is a signal determined based on *[t(s)],* a symbol in [*a*(*n*)(*m*)] is *a*(*n*)(*m*) = *t*(*s)* × *d*(*n*)(*m*), and a symbol in [*b*(*p*)(*q*)] is *b*(*p*)(*q*)*=e*(*p*)(*q*).

Alternatively, when the first information indicates that [b(p)(q)] is a signal determined based on *[t(s)],* a symbol in [*a*(*n*)(*m*)] is *a*(*n*)(*m*)*=d*(*n*)(*m*)*,* and a symbol in [*b*(*p*)(*q*)] is *b*(*p*)(*q*)*=t*(*s*) × *e*(*p*)(*q*).

Alternatively, when the first information indicates that both [*a*(*n*)(*m*)] and [*b*(*p*)(*q*)] are signals determined based on [*t*(*s*)]*,* a symbol in [*a*(*n*)(*m*)] is *a*(*n*)(*m*)=*t*(*s*) × *d*(*n*)(*m*), and a symbol in [*b*(*p*)(*q*)] is *b*(*p*)(*q*)*=t*(s) × *e*(*p*)(*q*).

Alternatively, when the first information indicates that [*a*(*n*)(*m*)] is a signal determined based on [*c*(*r*)] and [*t*(*s*)], a symbol in [*a*(*n*)(*m*)] is *a*(*n*)(*m*) = *c*(*r*) × *t*(*s*) × *d*(*n*)(*m*), and a symbol in [*b*(*p*)(*q*)] is *b*(*p*)(*q*)*=e*(*p*)(*q*).

Alternatively, when the first information may indicate that *[b(p)(q)]* is a signal determined based on [*c*(*r*)] and [*t*(*s*)]*,* a symbol in [*a*(*n*)(*m*)] is *a*(*n*)*(m)=d*(*n*)(*m*), and a symbol in [*b*(*p*)(*q*)] is *b*(*p*)*(q*)*=c*(*r*) × *t*(*s*) × *e*(*p*)(*q*).

Alternatively, when the first information indicates that both [*a*(*n*)(*m*)] and [*b*(*p*)(*q*)] are signals determined based on [*c*(*r*)] and [*t*(*s*)]*,* a symbol in [*a*(*n*)(*m*)] is *a*(*n*)(*m*)*=c*(*r*) × *t*(*s*) × *d*(*n*)(*m*)*,* and a symbol in [*b*(*p*)(*q*)] is *b*(*p*)(*q*)*=c*(*r*) × *t*(*s*) × *e(p*)(*q*).

Alternatively, when the first information indicates that [*a*(*n*)(*m*)] is a signal determined not based on [*c(r*)] and/or [*t*(*s*)]*,* and that [*b*(*p*)(*q*)] is a signal determined not based on [*c*(*r*)] and/or [*t*(*s*)], a symbol in [*a*(*n*)(*m*)] is *a*(*n*)(*m*)*=d*(*n*)(*m*), and a symbol in [*b*(*p*)(*q*)] is *b*(*p*)(*q*)*=e*(*p*)(*q*)*.*

In an optional implementation based on the foregoing design, the first information includes a third field or a fourth field, the third field includes one or more of the following: an eighth state value, a ninth state value, a tenth state value, and an eleventh state value, and the fourth field includes one or more of the following: a twelfth state value, a thirteenth state value, and a fourteenth state value. The third field is the eighth state value, and the first information indicates that neither [*a*(*n*)(*m*)] nor [*b*(*p*)(*q*)] is a signal determined based on [*c*(*r*)]*;* the third field is the ninth state value, and the first information indicates that [*a*(*n*)(*m*)] is a signal determined based on [*c*(*r*)]*;* the third field is the tenth state value, and the first information indicates that [*b*(*p*)(*q*)] is a signal determined based on [*c*(*r*)]; or the third field is the eleventh state value, and the first information indicates that both [*a*(*n*)(*m*)] and [*b*(*p*)(*q*)] are signals determined based on [*c(r*)]*.* The fourth field is the twelfth state value, and the first information indicates that neither [*a*(*n*)(*m*)] nor [*b*(*p*)(*q*)] is a signal determined based on [*c*(*r*)], or indicates that both [*a*(*n*)(*m*)] and [*b*(*p*)(*q*)] are signals determined based on [*c*(*r*)] ; the fourth field is the thirteenth state value, and the first information indicates that [*a*(*n*)(*m*)] is a signal determined based on [*c*(*r*)]*;* or the fourth field is the fourteenth state value, and the first information indicates that [*b*(*p*)(*q*)] is a signal determined based on [*c*(*r*)].

In an optional implementation based on the foregoing design, the first information may further include a fifth field or a sixth field. The fifth field may include one or more of the following: a fifteenth state value, a sixteenth state value, a seventeenth state value, and an eighteenth state value. The sixth field may include one or more of the following: a nineteenth state value, a twentieth state value, and a twenty-first state value. The fifth field is the fifteenth state value, and the first information may indicate that neither [*a*(*n*)(*m*)] nor [*b*(*p*)(*q*)] is a signal determined based on [*t*(*s*)]; the fifth field is the sixteenth state value, and the first information may indicate that [*a*(*n*)(*m)*] is a signal determined based on [*t*(*s*)]; the fifth field is the seventeenth state value, and the first information may indicate that [*b*(*p*)(*q*)] is a signal determined based on [*t*(*s*)]; or the fifth field is the eighteenth state value, and the first information may indicate that both [*a*(*n*)(*m*)] and [*b*(*p*)(*q*)] are signals determined based on [*t*(*s*)]*.* The sixth field is the nineteenth state value, and the first information may indicate that neither [*a*(*n*)(*m*)] nor [*b*(*p*)(*q*)] is a signal determined based on [*t*(*s*)] *,* or indicate that both [*a*(*n*)(*m*)] and [*b*(*p*)(*q*)] are signals determined based on [*t*(*s*)]*;* the sixth field is the twentieth state value, and the first information may indicate that [*a*(*n*)(*m*)] is a signal determined based on [*t*(*s*)]; or the sixth field is the twenty-first state value, and the first information may indicate that [*b*(*p*)(*q*)] is a signal determined based on [*t*(*s*)].

In an optional implementation based on the foregoing design, the processing module 801 is further configured to: determine, based on a modulation and coding scheme corresponding to a fourth signal [*e*(*p*)(*q*)], that [*a*(*n*)(*m*)] and/or [*b*(*p*)(*q*)] is a signal determined based on [*c*(*r*)]*;* determine that [*a*(*n*)(*m*)] and/or [*b*(*p*)(*q*)] is a signal determined based on [*t*(*s*)]; determine that [*a*(*n*)(*m*)] and/or [*b*(*p*)(*q*)] is a signal determined based on [*c*(*r*)] and [*t*(*s*)]; or determine that [*a*(*n*)(*m*)] is a signal determined not based on [*c*(*r*)] and/or [*t*(*s*)]*,* and determine that [*b*(*p*)(*q*)] is a signal determined not based on [*c*(*r*)] and/or [*t*(*s*)].

In an optional implementation based on the foregoing design, an element in *[c(r)]* may satisfy: When r is less than *x, c*(*r*) is less than *c*(*r +* 1), or when r is greater than *x, c*(*r*) is less than or equal to *c*(*r* - 1); or when r is less than *x, c*(*r*) is greater than *c(r* + 1), or when r is greater than *x, c*(*r*) is greater than or equal to *c*(*r - 1*). *x* is a positive integer greater than 1 and less than R.

In an optional implementation based on the foregoing design, an element in [*t*(*s*)] may satisfy: When s is less than *y, t*(*s)* is less than *t(s +* 1), or when s is greater than y, *t*(*s*) is less than or equal to *t*(*s* - 1); *o*r when s is less than *y, t*(*s*) is greater than *t*(*s* + 1), or when s is greater than *y, t*(*s*) is greater than or equal to *t*(*s* - 1). *y* is a positive integer greater than 1 and less than S.

In an example, the communication apparatus 800 may implement functions or steps implemented by the second communication apparatus in any one of the foregoing method embodiments. For example, the transceiver module 802 is configured to: receive first information, where the first information may indicate that a first signal and/or a second signal is a signal determined based on a first coefficient, or indicate that neither a first signal nor a second signal is a signal determined based on a first coefficient; and receive the first signal and the second signal, or send the first signal and the second signal.

In a possible design, the first signal is [*a*(*i*)], the second signal is [*b*(*j*)], and the first coefficient is [*c*(*h*)]*.* [*a*(*i*)] includes I symbols, [*b*(*j*)] includes J symbols, [*c*(*h*)] includes H elements, H is a positive integer greater than or equal to I and greater than or equal to J, both I and J are positive integers, *i* belongs to {1, ..., I}, *j* belongs to {1, ..., J}, and h belongs to {1, ..., H}.

In an optional implementation based on the foregoing design, when the first information indicates that [*a*(*i*)] is a signal determined based on *[c(h)],* a symbol in [*a*(*i*)] is *a*(*i*)=*c*(*h*) × *d*(*i*), and a symbol in [*b*(*j*)] is *b*(*j*)=*e*(*j*); when the first information indicates that [*b*(*j*)] is a signal determined based on [*c*(*h*)], a symbol in [*a*(*i*)] is *a*(*i*)=*d*(*i*), and a symbol in [*b*(*j*)] is *b*(*j*)=*c*(*h*) × *e*(*j*); when the first information indicates that both [*a*(*i*)] and [*b*(*j*)] are signals determined based on [*c*(*h*)], a symbol in [*a*(*i*)] is *a*(*i*)=*c*(*h*) × *d*(*i*), and a symbol in [*b*(*j*)] is *b*(*j*)=*c*(*h*) × *e*(*j*); or when the first information indicates that neither [*a*(*i*)] nor [*b*(*j*)] is a signal determined based on [*c*(*h*)], a symbol in [*a*(*i*)] is *a*(*i*)=*d*(*i*), and a symbol in [*b*(*j*)] is *b*(*j*)=*e*(*j*). *d*(*i*) belongs to a third signal [*d*(*i*)], *e*(*j*) belongs to a fourth signal [*e*(*j*)], [*d*(*i*)] includes I symbols, and [*e*(*j*)] includes J symbols.

In an optional implementation based on the foregoing design, the first information includes a first field or a second field, the first field includes one or more of the following: a first state value, a second state value, a third state value, and a fourth state value, and the second field includes one or more of the following: a fifth state value, a sixth state value, and a seventh state value. The first field is the first state value, and the first information indicates that neither [*a*(*i*)] nor [*b*(*j*)] is a signal determined based on [*c*(*h*)]; the first field is the second state value, and the first information indicates that [*a*(*i*)] is a signal determined based on [*c*(*h*)]; the first field is the third state value, and the first information indicates that [*b*(*j*)] is a signal determined based on [*c*(*h*)]; or the first field is the fourth state value, and the first information indicates that both [*a*(*i*)] and [*b*(*j*)] are signals determined based on [*c*(*h*)]. The second field is the fifth state value, and the first information indicates that neither [a(*i*)] nor [*b*(*j*)] is a signal determined based on [*c*(*h*)], or indicates that both [*a*(*i*)] and [*b*(*j*)] are signals determined based on [*c*(*h*)]; the second field is the sixth state value, and the first information indicates that [*a*(*i*)] is a signal determined based on [*c*(*h*)]; or the second field is the seventh state value, and the first information indicates that [*b*(*j*)] is a signal determined based on [*c*(*h*)].

In an optional implementation based on the foregoing design, an element in [*c*(*h*)] may satisfy: When h is less than *k*, *c*(*h*) is less than *c*(*h* + 1), or when *h* is greater than *k*, *c*(*h*) is less than or equal to *c*(*h* - 1); or when h is less than *k*, *c*(*h*) is greater than *c*(*h* + 1), or when *h* is greater than *k*, *c*(*h*) is greater than or equal to *c*(*h* - 1). *k* is a positive integer greater than 1 and less than H.

In another possible design, the first signal is [*a*(*n*)(*m*)] , the second signal is [*b*(*p*)(*q*)], and the first coefficient includes [*c*(*r*)] and/or [*t*(*s*)]. [*a*(*n*)(*m*)] includes *N* × *M* symbols, [*b*(*p*)(*q*)] includes *P* × *Q* symbols, [*c*(*r*)] includes R elements, [*t*(*s*)] includes S elements, R is a positive integer greater than or equal to M and greater than or equal to Q, S is a positive integer greater than or equal to N and greater than or equal to P, N, M, P, and Q are all positive integers greater than 1, n belongs to {1, ..., N}, m belongs to {1, ..., M}, p belongs to {1, ..., P}, q belongs to {1, ..., Q}, r belongs to {1, ..., R}, and s belongs to {1, ..., S}.

In an optional implementation based on the foregoing design, when the first information indicates that [*a*(*n*)(*m*)] is a signal determined based on [*c*(*r*)], a symbol in [*a*(*n*)(*m*)] is *a*(*n*)(*m*) = *c*(*r*) × *d*(*n*)(*m*), and a symbol in [*b*(*p*)(*q*)] is b(p)(q)=*e*(*p*)(*q*).

Alternatively, when the first information indicates that [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *e*(*p*)(*q*).

Alternatively, when the first information indicates that both [*a*(*n*)(*m*)] and [*b*(*p*)(*q*)] are signals determined based on [*c*(*r*)], a symbol in [*a*(*n*)(*m*)] is *a*(*n*)(*m*)=*c*(*r*) × *d*(*n*)(*m*), and a symbol in [*b*(*p*)(*q*)] is *b*(*p*)(*q*)=*c*(*r*) × *e*(*p*)(*q*).

Alternatively, when the first information indicates that [*a*(*n*)(*m*)] is a signal determined based on [*t*(*s*)], a symbol in [*a*(*n*)(*m*)] is *a*(*n*)(*m*) = *t*(*s*) × *d*(*n*)(*m*), and a symbol in [*b*(*p*)(*q*)] is *b*(*p*)(*q*)=*e*(*p*)(*q*).

Alternatively, when the first information indicates that [*b*(*p*)(*q*)] is a signal determined based on [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*t*(*s*) × *e*(*p*)(*q*).

Alternatively, when the first information indicates that both [*a*(*n*)(*m*)] and [*b*(*p*)(*q*)] are signals determined based on [*t*(*s*)], a symbol in [*a*(*n*)(*m*)] is *a*(*n*)(*m*)=*t*(*s*) × *d*(*n*)(*m*), and a symbol in [*b*(*p*)(*q*)] is *b*(*p*)(*q*)=*t*(*s*) × *e*(*p*)(*q*).

Alternatively, when the first information indicates that [*a*(*n*)(*m*)] is a signal determined based on [*c*(*r*)] and [*t*(*s*)], a symbol in [*a*(*n*)(*m*)] is *a*(*n*)(*m*) = *c*(*r*) × *t*(*s*) × *d*(*n*)(*m*), and a symbol in [*b*(*p*)(*q*)] is *b*(*p*)(*q*)=*e*(*p*)(*q*).

Alternatively, when the first information may indicate that [*b*(*p*)(*q*)] is a signal determined based on [*c*(*r*)] and [*t*(*s*)], a symbol in [*a*(*n*)(*m*)] is *a*(*n*)(m)=*d*(*n*)(*m*), and a symbol in [*b*(*p*)(*q*)] is *b*(*p*)(*q*)=*c*(*r*) × *t*(*s*) × *e*(*p*)(*q*).

Alternatively, when the first information indicates that both [*a*(*n*)(*m*)] and [*b*(*p*)(*q*)] are signals determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*c*(*r*) × *t*(*s*) × *e*(*p*)(*q*).

Alternatively, when the first information indicates that [*a*(*n*)(*m*)] is a signal determined not based on [*c*(*r*)] and/or [*t*(*s*)], and that [*b*(*p*)(*q*)] is a signal determined not based on [*c*(*r*)] and/or [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*e*(*p*)(*q*).

In an optional implementation based on the foregoing design, the first information includes a third field or a fourth field, the third field includes one or more of the following: an eighth state value, a ninth state value, a tenth state value, and an eleventh state value, and the fourth field includes one or more of the following: a twelfth state value, a thirteenth state value, and a fourteenth state value. The third field is the eighth state value, and the first information indicates that neither [*a*(*n*)(*m*)] nor [*b*(*p*)(*q*)] is a signal determined based on [*c*(*r*)]; the third field is the ninth state value, and the first information indicates that [*a*(*n*)(*m*)] is a signal determined based on [*c*(*r*)]; the third field is the tenth state value, and the first information indicates that [*b*(*p*)(*q*)] is a signal determined based on [*c*(*r*)]; or the third field is the eleventh state value, and the first information indicates that both [*a*(*n*)(*m*)] and [*b*(*p*)(*q*)] are signals determined based on [*c*(*r*)]. The fourth field is the twelfth state value, and the first information indicates that neither [*a*(*n*)(*m*)] nor [*b*(*p*)(*q*)] is a signal determined based on [*c*(*r*)], or indicates that both [*a*(*n*)(*m*)] and [*b*(*p*)(*q*)] are signals determined based on [*c*(*r*)]; the fourth field is the thirteenth state value, and the first information indicates that [*a*(*n*)(*m*)] is a signal determined based on [*c*(*r*)]; or the fourth field is the fourteenth state value, and the first information indicates that [*b*(*p*)(*q*)] is a signal determined based on [*c*(*r*)].

In an optional implementation based on the foregoing design, the first information may further include a fifth field or a sixth field. The fifth field may include one or more of the following: a fifteenth state value, a sixteenth state value, a seventeenth state value, and an eighteenth state value. The sixth field may include one or more of the following: a nineteenth state value, a twentieth state value, and a twenty-first state value. The fifth field is the fifteenth state value, and the first information may indicate that neither [*a*(*n*)(*m*)] nor [*b*(*p*)(*q*)] is a signal determined based on [*t*(*s*)]; the fifth field is the sixteenth state value, and the first information may indicate that [*a*(*n*)(*m*)] is a signal determined based on [*t*(*s*)]; the fifth field is the seventeenth state value, and the first information may indicate that [*b*(*p*)(*q*)] is a signal determined based on [*t*(*s*)]; or the fifth field is the eighteenth state value, and the first information may indicate that both [*a*(*n*)(*m*)] and [*b*(*p*)(*q*)] are signals determined based on [*t*(*s*)]. The sixth field is the nineteenth state value, and the first information may indicate that neither [*a*(*n*)(*m*)] nor [*b*(*p*)(*q*)] is a signal determined based on [*t*(*s*)], or indicate that both [*a*(*n*)(*m*)] and [*b*(*p*)(*q*)] are signals determined based on [*t*(*s*)]; the sixth field is the twentieth state value, and the first information may indicate that [*a*(*n*)(*m*)] is a signal determined based on [*t*(*s*)]; or the sixth field is the twenty-first state value, and the first information may indicate that [*b*(*p*)(*q*)] is a signal determined based on [*t*(*s*)].

In an optional implementation based on the foregoing design, an element in [*c*(*r*)] may satisfy: When *r* is less than *x, c*(*r*) is less than *c*(*r +* 1), or when *r* is greater than *x*, *c*(*r*) is less than or equal to *c*(*r* - 1); or when *r* is less than *x, c*(*r*) is greater than *c*(*r* + 1), or when *r* is greater than *x*, *c*(*r*) is greater than or equal to *c*(*r - 1). x* is a positive integer greater than 1 and less than R.

In an optional implementation based on the foregoing design, an element in [*t*(*s*)] may satisfy: When *s* is less than *y*, *t*(*s*) is less than *t*(*s* + 1), or when *s* is greater than *y*, *t*(*s*) is less than or equal to *t*(*s* - 1); or when *s* is less than *y*, *t*(*s*) is greater than *t*(*s* + 1), or when *s* is greater than *y*, *t*(*s*) is greater than or equal to t(*s* - 1). *y* is a positive integer greater than 1 and less than S.

For more detailed descriptions of the processing module 801 and the transceiver module 802, directly refer to related descriptions in the method embodiment shown in any one of FIG. 3 to FIG. 7. Details are not described herein again.

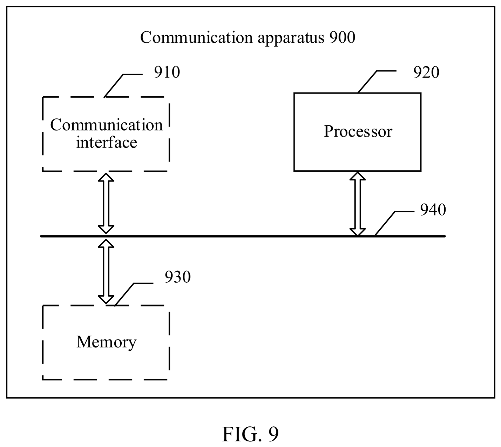

As shown in FIG. 9, an embodiment of this application provides a diagram of a structure of a communication apparatus 900. The communication apparatus 900 may include a processor 920, configured to implement or support the communication apparatus 900 in implementing a function of the first communication apparatus or the second communication apparatus in any method embodiment of this application. For details, refer to the detailed descriptions in the foregoing method embodiments. Details are not described herein again. For example, the processor 920 is configured to read and execute program instructions through a communication interface, to cause the communication apparatus 900 to implement a corresponding method. The processor 920 may include one or more processors. This is not limited.

Specifically, the communication apparatus 900 may be the first communication apparatus or a functional module located in the first communication apparatus, and can implement a function of the first communication apparatus in any method embodiment of this application. Alternatively, the communication apparatus 900 may be the second communication apparatus or a functional module located in the second communication apparatus, and can implement a function of the second communication apparatus in any method embodiment of this application.

It should be noted that the foregoing functional modules may be implemented by hardware, or may be implemented by a combination of hardware and software. This is not limited.

For example, the communication apparatus 900 may be a chip system. The chip system may include a chip, or may include a chip and another discrete component. This is not limited.

Optionally, the communication apparatus 900 may further include a memory 930, configured to store program instructions and/or data. The memory 930 is coupled to the processor 920. The coupling may be understood as an indirect coupling or a communication connection between apparatuses, units, or modules, may be in an electrical form, a mechanical form, or another form, and is used for information exchange between the apparatuses, the units, or the modules. The processor 920 may operate in collaboration with the memory 930. The memory 930 may include one or more memories. This is not limited.

Further, the processor 920 is configured to execute the program instructions stored in the memory 930, to cause the communication apparatus 900 to implement a corresponding method.

The one or more memories in the memory 930 may be included in the processor, or the memory 930 may exist independently, for example, an off-chip memory, and is connected to the processor 920 through a communication bus (represented by a bold line 940 in FIG. 9). Alternatively, the memory 930 and the processor 920 may be integrated together.

Optionally, the communication apparatus 900 further includes a communication interface 910 (represented by a dashed line in FIG. 9), configured to communicate with another device through a transmission medium, so that an apparatus used in the communication apparatus 900 can communicate with the another device. For example, when the communication apparatus is the first communication apparatus, the another device may be the second communication apparatus or the like. The processor 920 may receive and send data through the communication interface 910.

The communication interface 910 may be specifically a transceiver. In hardware implementation, the transceiver may be configured to implement a function of the transceiver module 1402, and the transceiver is integrated into the communication apparatus 900 to form the communication interface 910.

It should be noted that, a specific connection medium between the communication interface 910, the processor 920, and the memory 930 is not limited in this embodiment of this application. In FIG. 9, the memory 930, the processor 920, and the communication interface 910 are connected through the communication bus 940. A connection manner between other components is only schematically described, and is not limited thereto. The communication bus 940 may be classified into an address bus, a data bus, a control bus, and the like. For ease of representation, only one bold line is used to represent the communication bus in FIG. 9, but this does not mean that there is only one communication bus or only one type of communication bus.

The processor 920 in this embodiment of this application may be a general-purpose processor, a digital signal processor, an application-specific integrated circuit, a field programmable gate array or another programmable logic device, a discrete gate or a transistor logic device, or a discrete hardware component. The general-purpose processor may be a microprocessor, any conventional processor, or the like. The method disclosed with reference to embodiments of this application may be performed and completed by hardware in the processor, or may be performed and completed by a combination of hardware and software in the processor.

In this embodiment of this application, the memory 930 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that is configured to carry or store program code in a form of instructions or a data structure and that can be accessed by a computer; or may be a circuit or any other apparatus that can implement a storage function, and is configured to store program instructions and/or data.

An embodiment of this application further provides a communication system. The communication system may include one or more of the following: the following: a first communication apparatus or a second communication apparatus.

For the first communication apparatus or the second communication apparatus, refer to the descriptions in the foregoing method embodiments. Details are not described again.

An embodiment of this application further provides a computer-readable storage medium, including program instructions. When the program instructions are run on a computer, the computer is caused to perform the method or steps of any communication apparatus (for example, the first communication apparatus or the second communication apparatus) in the foregoing embodiments.

An embodiment of this application further provides a computer program product, including program instructions. When the program instructions are run on a computer, the computer is caused to perform the method or steps of any communication apparatus (for example, the first communication apparatus or the second communication apparatus) in the foregoing embodiments.

An embodiment of this application provides a chip system. The chip system includes a processor, configured to implement a function of the first communication apparatus or the second communication apparatus in the foregoing method (for example, performing a corresponding method or corresponding steps). The chip system may include a chip, or may include a chip and another discrete component.

Optionally, the chip system further includes a memory. The memory is configured to store program instructions, to cause the processor to read and execute the program instructions, so as to implement a corresponding method.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a contributing part, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
sending first information, wherein the first information indicates that a first signal [*a*(*i*)] and/or a second signal [*b*(*j*)] is a signal determined based on [*c*(*h*)], or indicates that neither [*a*(*i*)] nor [*b*(*j*)] is a signal determined based on [*c*(*h*)]; and
sending the first signal and the second signal, or receiving the first signal and the second signal, wherein
[*a*(*i*)] comprises I symbols, [*b*(*j*)] comprises J symbols, [*c*(*h*)] comprises H elements, H is a positive integer greater than or equal to I and greater than or equal to J, both I and J are positive integers, *i* belongs to {1, ..., I}, *j* belongs to {1, ..., J}, and h belongs to {1, ..., H}.

2. The method according to claim 1, wherein
when the first information indicates that [*a*(*i*)] is a signal determined based on [*c*(*h*)], *a* symbol in [*a*(*i*)] is *a*(*i*)=*c*(*h*) × *d*(*i*), and a symbol in [*b*(*j*)] is *b*(*j*)=*e*(*j*);
when the first information indicates that [*b*(*j*)] is a signal determined based on [*c*(*h*)], a symbol in [*a*(*i*)] is *a*(*i*)=*d*(*i*), and a symbol in [*b*(*j*)] is *b*(*j*)=*c*(*h*) × *e(*j);
when the first information indicates that both [*a*(*i*)] and [*b*(*j*)] are signals determined based on [*c*(*h*)]*,* a symbol in [*a*(*i*)] is *a*(*i*)=*c*(*h*) × *d*(*i*), and a symbol in [*b*(*j*)] is *b*(*j*)=*c*(*h*) × *e*(*j*); or
when the first information indicates that neither [*a*(*i*)] nor [*b*(*j*)] is a signal determined based on [*c*(*h*)], a symbol in [*a*(*i*)] is *a*(*i*)=*d*(*i*), and a symbol in [*b*(*j*)] is *b*(*j*)=*e*(*j*), wherein
*d*(*i*) belongs to a third signal [*d*(*i*)], *e*(*j*) belongs to a fourth signal [*e*(*j*)], [*d*(*i*)] comprises I symbols, and [*e*(*j*)] comprises J symbols.

3. The method according to claim 1 or 2, wherein
the first information comprises a first field or a second field, the first field comprises one or more of the following: a first state value, a second state value, a third state value, and a fourth state value, and the second field comprises one or more of the following: a fifth state value, a sixth state value, and a seventh state value, wherein
the first field is the first state value, and the first information indicates that neither [*a*(*i*)] nor [*b*(*j*)] is a signal determined based on [*c*(*h*)]; the first field is the second state value, and the first information indicates that [*a*(*i*)] is a signal determined based on [*c*(*h*)]; the first field is the third state value, and the first information indicates that [*b*(*j*)] is a signal determined based on [*c*(*h*)]; or the first field is the fourth state value, and the first information indicates that both [*a*(*i*)] and [*b*(*j*)] are signals determined based on [*c*(*h*)]; and
the second field is the fifth state value, and the first information indicates that neither [*a*(*i*)] nor [*b*(*j*)] is a signal determined based on [*c*(*h*)], or indicates that both [*a*(*i*)] and [*b*(*j*)] are signals determined based on [*c*(*h*)]; the second field is the sixth state value, and the first information indicates that [*a*(*i*)] is a signal determined based on [*c*(*h*)]; or the second field is the seventh state value, and the first information indicates that [*b*(*j*)] is a signal determined based on [*c*(*h*)].

4. The method according to any one of claims 1 to 3, wherein an element in [*c*(*h*)] satisfies:
when *h* is less than *k*, *c*(*h*) is less than *c*(*h* + 1), or when *h* is greater than *k*, *c*(*h*) is less than or equal to *c*(*h* - 1); or when *h* is less than *k*, *c*(*h*) is greater than *c*(*h* + 1), or when *h* is greater than *k*, *c*(*h*) is greater than or equal to c(*h -* 1), wherein *k* is a positive integer greater than 1 and less than H.

5. The method according to any one of claims 1 to 4, wherein
the first signal is a reference signal, and the second signal is a physical channel; or
the first signal is a first reference signal, and the second signal is a second reference signal.

6. A communication method, wherein the method comprises:
sending first information, wherein the first information indicates that a first signal [*a*(*n*)(*m*)] and/or a second signal [*b*(*p*)(*q*)] is a signal determined based on [*c*(*r*)], or indicates that neither [*a*(*n*)(*m*)] nor [*b*(*p*)(*q*)] is a signal determined based on [*c*(*r*)]; and
sending the first signal and the second signal, or receiving the first signal and the second signal, wherein
[*a*(*n*)(*m*)] comprises *N* × *M* symbols, [*b*(*p*)(*q*)] comprises *P* × *Q* symbols, [*c*(*r*)] comprises R elements, R is a positive integer greater than or equal to M and greater than or equal to Q, N, M, P, and Q are all positive integers greater than 1, n belongs to {1, ..., N}, m belongs to {1, ..., M}, p belongs to {1, ..., P}, q belongs to {1, ..., Q}, and r belongs to {1, ..., R}.

7. The method according to claim 6, wherein
when the first information indicates that [*a*(*n*)(*m*)] is a signal determined based on [*c*(*r*)], a symbol in [*a*(*n*)(*m*)] is *a*(*n*)(*m*) = *c*(*r*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *e*(*p*)(*q*);
when the first information indicates that both [*a*(*n*)(*m*)] and [*b*(*p*)(*q*)] are signals determined based on [*c*(*r*)], a symbol in [*a*(*n*)(*m*)] is *a*(*n*)(*m*)=*c*(*r*) × *d*(*n*)(*m*), and a symbol in [*b*(*p*)(*q*)] is *b*(*p*)(*q*)=*c*(*r*) × *e*(*p*)(*q*); or
when the first information indicates that neither [*a*(*n*)(*m*)] nor [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*e*(*p*)(*q*), wherein
*d*(*n*)(*m*) belongs to a third signal [*d*(*n*)(*m*)] , *e*(*p*)(*q*) belongs to a fourth signal [*e*(*p*)(*q*)], [*d*(*n*)(*m*)] comprises *N* × *M* symbols, and [*e*(*p*)(*q*)] comprises *P* × *Q* symbols.

8. The method according to claim 6 or 7, wherein
the first information comprises a third field or a fourth field, the third field comprises one or more of the following: an eighth state value, a ninth state value, a tenth state value, and an eleventh state value, and the fourth field comprises one or more of the following: a twelfth state value, a thirteenth state value, and a fourteenth state value, wherein
the third field is the eighth state value, and the first information indicates that neither [*a*(*n*)(*m*)] nor [*b*(*p*)(*q*)] is a signal determined based on [*c*(*r*)]; the third field is the ninth state value, and the first information indicates that [*a*(*n*)(*m*)] is a signal determined based on [*c*(*r*)]; the third field is the tenth state value, and the first information indicates that [*b*(*p*)(*q*)] is a signal determined based on [*c*(*r*)]; or the third field is the eleventh state value, and the first information indicates that both [*a*(*n*)(*m*)] and [*b*(*p*)(*q*)] are signals determined based on [*c*(*r*)]; and
the fourth field is the twelfth state value, and the first information indicates that neither [*a*(*n*)(*m*)] nor [*b*(*p*)(*q*)] is a signal determined based on [*c*(*r*)], or indicates that both [*a*(*n*)(*m*)] and [*b*(*p*)(*q*)] are signals determined based on [*c*(*r*)]; the fourth field is the thirteenth state value, and the first information indicates that [*a*(*n*)(*m*)] is a signal determined based on [*c*(*r*)]; or the fourth field is the fourteenth state value, and the first information indicates that [*b*(*p*)(*q*)] is a signal determined based on [*c*(*r*)].

9. The method according to any one of claims 6 to 8, wherein that the first information indicates that the first signal [*a*(*n*)(*m*)] and/or the second signal [*b*(*p*)(*q*)] is a signal determined based on [*c*(*r*)] comprises:
the first information indicates that [*a*(*n*)(*m*)] and/or [*b*(*p*)(*q*)] is a signal determined based on [*c*(*r*)] and [*t*(*s*)]; and
that the first information indicates that neither [*a*(*n*)(*m*)] nor [*b*(*p*)(*q*)] is a signal determined based on [*c*(*r*)] comprises:
the first information indicates that [*a*(*n*)(*m*)] is a signal determined not based on [*c*(*r*)] and/or [*t*(*s*)], and indicates that [*b*(*p*)(*q*)] is a signal determined not based on [*c*(*r*)] and/or [*t*(*s*)], wherein
[*t*(*s*)] comprises S elements, S is a positive integer greater than or equal to N and greater than or equal to P, and s belongs to {1, ..., S}.

10. The method according to claim 9, wherein
when the first information indicates that [*a*(*n*)(*m*)] is a signal determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)] and [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *t*(*s*) × *e*(*p*)(*q*);
when the first information indicates that both [*a*(*n*)(*m*)] and [*b*(*p*)(*q*)] are signals determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*c*(*r*) × *t*(*s*) × *e*(*p*)(*q*); or
when the first information indicates that [*a*(*n*)(*m*)] is a signal determined not based on [*c*(*r*)] and/or [*t*(*s*)], and indicates that [*b*(*p*)(*q*)] is a signal determined not based on [*c*(*r*)] and/or [*t*(*s*)], a symbol in [*a(*n)(*m*)] is *a*(*n*)(*m*)=*d*(*n*)(*m*), and a symbol in [*b*(*p*)(*q*)] is *b*(*p*)(*q*)=*e*(*p*)(*q*), wherein
*d*(*n*)(*m*) belongs to the third signal [*d*(*n*)(*m*)], *e*(*p*)(*q*) belongs to the fourth signal [*e*(*p*)(*q*)], [*d*(*n*)(*m*)] comprises *N* × *M* symbols, and [*e*(*p*)(*q*)] comprises *P* × *Q* symbols.

11. The method according to any one of claims 6 to 10, wherein
the first signal is a reference signal, and the second signal is a physical channel; or
the first signal is a first reference signal, and the second signal is a second reference signal.

12. A communication method, wherein the method comprises:
receiving first information, wherein the first information indicates that a first signal [*a*(*i*)] and/or a second signal [*b*(*j*)] is a signal determined based on [*c*(*h*)], or indicates that neither [*a*(*i*)] nor [*b*(*j*)] is a signal determined based on [*c*(*h*)]; and
sending the first signal and the second signal, or receiving the first signal and the second signal, wherein
[*a*(*i*)] comprises I symbols, [*b*(*j*)] comprises J symbols, [*c*(*h*)] comprises H elements, H is a positive integer greater than or equal to I and greater than or equal to J, both I and J are positive integers, *i* belongs to {1, ..., I}, *j* belongs to {1, ..., J}, and *h* belongs to {1, ..., H}.

13. The method according to claim 12, wherein
when the first information indicates that [*a*(*i*)] is a signal determined based on [*c*(*h*)], a symbol in [*a*(*i*)] is *a*(*i*)=*c*(*h*) × *d*(*i*), and a symbol in [*b*(*j*)] is *b*(*j*)=*e*(*j*);
when the first information indicates that [*b*(*j*)] is a signal determined based on [*c*(*h*)], a symbol in [*a*(*i*)] is *a*(*i*)=*d*(*i*), and a symbol in [*b*(*j*)] is *b*(*j*)=*c*(*h*) × *e*(*j*);
when the first information indicates that both [*a*(*i*)] and [*b*(*j*)] are signals determined based on [*c*(*h*)], a symbol in [*a*(*i*)] is *a*(*i*)=*c*(*h*) × *d*(*i*), and a symbol in [*b*(*j*)] is *b*(*j*)=*c*(*h*) × *e*(*j*); or
when the first information indicates that neither [*a*(*i*)] nor [*b*(*j*)] is a signal determined based on [*c*(*h*)], a symbol in [*a*(*i*)] is *a*(*i*)=*d*(*i*), and a symbol in [*b*(*j*)] is *b*(*j*)=*e*(*j*), wherein
*d*(*i*) belongs to a third signal [*d*(*i*)], *e*(*j*) belongs to a fourth signal [*e*(*j*)], [*d*(*i*)] comprises I symbols, and [*e*(*j*)] comprises J symbols.

14. The method according to claim 12 or 13, wherein
the first information comprises a first field or a second field, the first field comprises one or more of the following: a first state value, a second state value, a third state value, and a fourth state value, and the second field comprises one or more of the following: a fifth state value, a sixth state value, and a seventh state value, wherein
the first field is the first state value, and the first information indicates that neither [*a*(*i*)] nor [*b*(*j*)] is a signal determined based on [*c*(*h*)]; the first field is the second state value, and the first information indicates that [*a*(*i*)] is a signal determined based on [*c*(*h*)]; the first field is the third state value, and the first information indicates that [*b*(*j*)] is a signal determined based on [*c*(*h*)]; or the first field is the fourth state value, and the first information indicates that both [*a*(*i*)] and [*b*(*j*)] are signals determined based on [*c*(*h*)]; and
the second field is the fifth state value, and the first information indicates that neither [*a*(*i*)] nor [*b*(*j*)] is a signal determined based on [*c*(*h*)], or indicates that both [*a*(*i*)] and [*b*(*j*)] are signals determined based on [*c*(*h*)]; the second field is the sixth state value, and the first information indicates that [*a*(*i*)] is a signal determined based on [*c*(*h*)]; or the second field is the seventh state value, and the first information indicates that [*b*(*j*)] is a signal determined based on [*c*(*h*)].

15. The method according to any one of claims 12 to 14, wherein an element in [*c*(*h*)] satisfies:
when *h* is less than *k*, *c*(*h*) is less than *c*(*h* + 1), or when *h* is greater than *k*, *c*(*h*) is less than or equal to *c*(*h* - 1); or when *h* is less than *k*, *c*(*h*) is greater than *c*(*h* + 1), or when *h* is greater than *k*, *c*(*h*) is greater than or equal to c(*h -* 1), wherein *k* is a positive integer greater than 1 and less than H.

16. The method according to any one of claims 12 to 15, wherein
the first signal is a reference signal, and the second signal is a physical channel; or
the first signal is a first reference signal, and the second signal is a second reference signal.

17. A communication method, wherein the method comprises:
receiving first information, wherein the first information indicates that a first signal [*a*(*n*)(*m*)] and/or a second signal [*b*(*p*)(*q*)] is a signal determined based on [*c*(*r*)], or indicates that neither [*a*(*n*)(*m*)] nor [*b*(*p*)(*q*)] is a signal determined based on [*c*(*r*)]; and
sending the first signal and the second signal, or receiving the first signal and the second signal, wherein
[*a*(*n*)(*m*)] comprises *N* × *M* symbols, [*b*(*p*)(*q*)] comprises *P* × *Q* symbols, [*c*(*r*)] comprises R elements, R is a positive integer greater than or equal to M and greater than or equal to Q, N, M, P, and Q are all positive integers greater than 1, n belongs to {1, ..., N}, m belongs to {1, ..., M}, p belongs to {1, ..., P}, q belongs to {1, ..., Q}, and r belongs to {1, ..., R}.

18. The method according to claim 17, wherein
when the first information indicates that [*a*(*n*)(*m*)] is a signal determined based on [*c*(*r*)], a symbol in [*a*(*n*)(*m*)] is *a*(*n*)(*m*) = *c*(*r*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *e*(*p*)(*q*);
when the first information indicates that both [*a*(*n*)(*m*)] and [*b*(*p*)(*q*)] are signals determined based on [*c*(*r*)], a symbol in [*a*(*n*)(*m*)] is *a*(*n*)(*m*)=*c*(*r*) × *d*(*n*)(*m*), and a symbol in [*b*(*p*)(*q*)] is *b*(*p*)(*q*)=*c*(*r*) × *e*(*p*)(*q*); or
when the first information indicates that neither [*a*(*n*)(*m*)] nor [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*e*(*p*)(*q*), wherein
*d*(*n*)(*m*) belongs to a third signal [*d*(*n*)(*m*)], *e*(*p*)(*q*) belongs to a fourth signal [*e*(*p*)(*q*)], [*d*(*n*)(*m*)] comprises *N* × *M* symbols, and [*e*(*p*)(*q*)] comprises *P* × *Q* symbols.

19. The method according to claim 17 or 18, wherein
the first information comprises a third field or a fourth field, the third field comprises one or more of the following: an eighth state value, a ninth state value, a tenth state value, and an eleventh state value, and the fourth field comprises one or more of the following: a twelfth state value, a thirteenth state value, and a fourteenth state value, wherein
the third field is the eighth state value, and the first information indicates that neither [*a*(*n*)(*m*)] nor [*b*(*p*)(*q*)] is a signal determined based on [*c*(*r*)]; the third field is the ninth state value, and the first information indicates that [*a*(*n*)(*m*)] is a signal determined based on [*c*(*r*)]; the third field is the tenth state value, and the first information indicates that [*b*(*p*)(*q*)] is a signal determined based on [*c*(*r*)]; or the third field is the eleventh state value, and the first information indicates that both [*a*(*n*)(*m*)] and [*b*(*p*)(*q*)] are signals determined based on [*c*(*r*)]; and
the fourth field is the twelfth state value, and the first information indicates that neither [*a*(*n*)(*m*)] nor [*b*(*p*)(*q*)] is a signal determined based on [*c*(*r*)], or indicates that both [*a*(*n*)(*m*)] and [*b*(*p*)(*q*)] are signals determined based on [*c*(*r*)]; the fourth field is the thirteenth state value, and the first information indicates that [*a*(*n*)(*m*)] is a signal determined based on [*c*(*r*)]; or the fourth field is the fourteenth state value, and the first information indicates that [*b*(*p*)(*q*)] is a signal determined based on [*c*(*r*)].

20. The method according to any one of claims 17 to 19, wherein that the first information indicates that the first signal [*a*(*n*)(*m*)] and/or the second signal [*b*(*p*)(*q*)] is a signal determined based on [*c*(*r*)] comprises:
the first information indicates that [*a*(*n*)(*m*)] and/or [*b*(*p*)(*q*)] is a signal determined based on [*c*(*r*)] and [*t*(*s*)]; and
that the first information indicates that neither [*a*(*n*)(*m*)] nor [*b*(*p*)(*q*)] is a signal determined based on [*c*(*r*)] comprises:
the first information indicates that [*a*(*n*)(*m*)] is a signal determined not based on [*c*(*r*)] and/or [*t*(*s*)], and indicates that [*b*(*p*)(*q*)] is a signal determined not based on [*c*(*r*)] and/or [*t*(*s*)], wherein
[*t*(*s*)] comprises S elements, S is a positive integer greater than or equal to N and greater than or equal to P, and s belongs to {1, ..., S}.

21. The method according to claim 20, wherein
when the first information indicates that [*a*(*n*)(*m*)] is a signal determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)] and [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *t*(*s*) × *e*(*p*)(*q*);
when the first information indicates that both [*a*(*n*)(*m*)] and [*b*(*p*)(*q*)] are signals determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*c*(*r*) × *t*(*s*) × *e*(*p*)(*q*); or
when the first information indicates that [*a*(*n*)(*m*)] is a signal determined not based on [*c*(*r*)] and/or [*t*(*s*)], and indicates that [*b*(*p*)(q*)*] is a signal determined not based on [*c*(*r*)] and/or [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*e*(*p*)(*q*), wherein
*d*(*n*)(*m*) belongs to the third signal [*d*(*n*)(*m*)], *e*(*p*)(*q)* belongs to the fourth signal [*e*(*p*)(*q*)], [*d*(*n*)(*m*)] comprises *N* × *M* symbols, and [*e*(*p*)(*q)*] comprises *P* × *Q* symbols.

22. The method according to any one of claims 17 to 21, wherein
the first signal is a reference signal, and the second signal is a physical channel; or
the first signal is a first reference signal, and the second signal is a second reference signal.

23. A communication apparatus, wherein the apparatus comprises a transceiver module, and the transceiver module is configured to:
send first information, wherein the first information indicates that a first signal [*a*(*i*)] and/or a second signal [*b*(*j*)] is a signal determined based on [*c*(*h*)], or indicates that neither [*a*(*i*)] nor [*b*(*j*)] is a signal determined based on [*c*(*h*)]; and
send the first signal and the second signal, or receive the first signal and the second signal, wherein
[*a*(*i*)] comprises I symbols, [*b*(*j*)] comprises J symbols, [*c*(*h*)] comprises H elements, H is a positive integer greater than or equal to I and greater than or equal to J, both I and J are positive integers, *i* belongs to {1, ..., I}, *j* belongs to {1, ..., J}, and *h* belongs to {1, ..., H}.

24. The apparatus according to claim 23, wherein
when the first information indicates that [*a*(*i*)] is a signal determined based on [*c*(*h*)], a symbol in [*a*(*i*)] is *a*(*i*)=*c*(*h*) × *d*(*i*), and a symbol in [*b*(*j*)] is *b*(*j*)=*e*(*j*);
when the first information indicates that [*b*(*j*)] is a signal determined based on [*c*(*h*)], a symbol in [*a*(*i*)] is *a*(*i*)=*d(*i), and a symbol in [*b*(*j*)] is *b*(*j*)=*c*(*h*) × *e*(*j*);
when the first information indicates that both [*a*(*i*)] and [*b*(*j*)] are signals determined based on [*c*(*h*)], a symbol in [*a*(*i*)] is *a*(*i*)=*c*(*h*) × *d*(*i*), and a symbol in [*b*(*j*)] is *b*(*j*)=*c*(*h*) × *e*(*j*); or
when the first information indicates that neither [*a*(*i*)] nor [*b*(*j*)] is a signal determined based on [*c*(*h*)], a symbol in [*a*(*i*)] is *a*(*i*)=*d*(*i*), and a symbol in [*b*(*j*)] is *b*(*j*)=*e*(*j*), wherein
*d*(*i*) belongs to a third signal [*d*(*i*)], *e*(*j*) belongs to a fourth signal [*e*(*j*)], [*d*(*i*)] comprises I symbols, and [*e*(*j*)] comprises J symbols.

25. The apparatus according to claim 23 or 24, wherein
the first information comprises a first field or a second field, the first field comprises one or more of the following: a first state value, a second state value, a third state value, and a fourth state value, and the second field comprises one or more of the following: a fifth state value, a sixth state value, and a seventh state value, wherein
the first field is the first state value, and the first information indicates that neither [*a*(*i*)] nor [*b*(*j*)] is a signal determined based on [*c*(*h*)]; the first field is the second state value, and the first information indicates that [*a*(*i*)] is a signal determined based on [*c*(*h*)]; the first field is the third state value, and the first information indicates that [*b*(*j*)] is a signal determined based on [*c*(*h*)]; or the first field is the fourth state value, and the first information indicates that both [*a*(*i*)] and [*b*(*j*)] are signals determined based on [*c*(*h*)]; and
the second field is the fifth state value, and the first information indicates that neither [*a*(*i*)] nor [*b*(*j*)] is a signal determined based on [*c*(*h*)], or indicates that both [*a*(*i*)] and [*b*(*j*)] are signals determined based on [*c*(*h*)]; the second field is the sixth state value, and the first information indicates that [*a*(*i*)] is a signal determined based on [*c*(*h*)]; or the second field is the seventh state value, and the first information indicates that [*b*(*j*)] is a signal determined based on [*c*(*h*)].

26. The apparatus according to any one of claims 23 to 25, wherein an element in [*c*(*h*)] satisfies:
when *h* is less than *k*, *c*(*h*) is less than *c*(*h* + 1), or when *h* is greater than *k*, *c*(*h*) is less than or equal to *c*(*h* - 1); or when *h* is less than *k*, *c*(*h*) is greater than *c*(*h* + 1), or when *h* is greater than *k*, *c*(*h*) is greater than or equal to *c*(*h* - 1), wherein *k* is a positive integer greater than 1 and less than H.

27. The apparatus according to any one of claims 23 to 26, wherein
the first signal is a reference signal, and the second signal is a physical channel; or
the first signal is a first reference signal, and the second signal is a second reference signal.

28. A communication apparatus, wherein the apparatus comprises a transceiver module, and the transceiver module is configured to:
send first information, wherein the first information indicates that a first signal [*a*(*n*)(*m*)] and/or a second signal [*b*(*p*)(*q*)] is a signal determined based on [*c*(*r*)], or indicates that neither [*a*(*n*)(*m*)] nor [*b*(*p*)(*q*)] is a signal determined based on [*c*(*r*)]; and
send the first signal and the second signal, or receive the first signal and the second signal, wherein
[*a*(*n*)(*m*)] comprises *N* × *M* symbols, [*b*(*p*)(*q*)] comprises *P* × *Q* symbols, [*c*(*r*)] comprises R elements, R is a positive integer greater than or equal to M and greater than or equal to Q, N, M, P, and Q are all positive integers greater than 1, n belongs to {1, ..., N}, m belongs to {1, ..., M}, p belongs to {1, ..., P}, q belongs to {1, ..., Q}, and r belongs to {1, ..., R}.

29. The apparatus according to claim 28, wherein
when the first information indicates that [*a*(*n*)(*m*)] is a signal determined based on [*c*(*r*)], a symbol in [*a*(*n*)(*m*)] is *a*(*n*)(*m*) = *c*(*r*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *e*(*p*)(*q*);
when the first information indicates that both [*a*(*n*)(*m*)] and [*b*(*p*)(*q*)] are signals determined based on [*c*(*r*)], a symbol in [*a*(*n*)(*m*)] is *a*(*n*)(*m*)=*c*(*r*) × *d*(*n*)(*m*), and a symbol in [*b*(*p*)(*q*)] is *b*(*p*)(*q*)=*c*(*r*) × *e*(*p*)(*q*); or
when the first information indicates that neither [*a*(*n*)(*m*)] nor [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*e*(*p*)(*q*), wherein
*d*(*n*)(*m*) belongs to a third signal [*d*(*n*)(*m*)], *e*(*p*)(*q*) belongs to a fourth signal [*e*(*p*)(*q*)], [*d*(*n*)(*m*)] comprises *N* × *M* symbols, and [*e*(*p*)(*q*)] comprises *P* × *Q* symbols.

30. The apparatus according to claim 28 or 29, wherein
the first information comprises a third field or a fourth field, the third field comprises one or more of the following: an eighth state value, a ninth state value, a tenth state value, and an eleventh state value, and the fourth field comprises one or more of the following: a twelfth state value, a thirteenth state value, and a fourteenth state value, wherein
the third field is the eighth state value, and the first information indicates that neither [*a*(*n*)(*m*)] nor [*b*(*p*)(*q*)] is a signal determined based on [*c*(*r*)]; the third field is the ninth state value, and the first information indicates that [*a*(*n*)(*m*)] is a signal determined based on [*c*(*r*)]; the third field is the tenth state value, and the first information indicates that [*b*(*p*)(*q*)] is a signal determined based on [*c*(*r*)]; or the third field is the eleventh state value, and the first information indicates that both [*a*(*n*)(*m*)] and [*b*(*p*)(*q*)] are signals determined based on [*c*(*r*)]; and
the fourth field is the twelfth state value, and the first information indicates that neither [*a*(*n*)(*m*)] nor [*b*(*p*)(*q*)] is a signal determined based on [*c*(*r*)], or indicates that both [*a*(*n*)(*m*)] and [*b*(*p*)(*q*)] are signals determined based on [*c*(*r*)]; the fourth field is the thirteenth state value, and the first information indicates that [*a*(*n*)(*m*)] is a signal determined based on [*c*(*r*)]; or the fourth field is the fourteenth state value, and the first information indicates that [*b*(*p*)(*q*)] is a signal determined based on [*c*(*r*)].

31. The apparatus according to any one of claims 28 to 30, wherein that the first information indicates that the first signal [*a*(*n*)(*m*)] and/or the second signal [*b*(*p*)(*q*)] is a signal determined based on [*c*(*r*)] comprises:
the first information indicates that [*a*(*n*)(*m*)] and/or [*b*(*p*)(*q*)] is a signal determined based on [*c*(*r*)] and [*t*(*s*)]; and
that the first information indicates that neither [*a*(*n*)(*m*)] nor [*b*(*p*)(*q*)] is a signal determined based on [*c*(*r*)] comprises:
the first information indicates that [*a*(*n*)(*m*)] is a signal determined not based on [*c*(*r*)] and/or [*t*(*s*)], and indicates that [*b*(*p*)(*q*)] is a signal determined not based on [*c*(*r*)] and/or [*t*(*s*)], wherein
[*t*(*s*)] comprises S elements, S is a positive integer greater than or equal to N and greater than or equal to P, and s belongs to {1, ..., S}.

32. The apparatus according to claim 31, wherein
when the first information indicates that [*a*(*n*)(*m*)] is a signal determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)] and [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *t*(*s*) × *e*(*p*)(*q*);
when the first information indicates that both [*a*(*n*)(*m*)] and [*b*(*p*)(*q*)] are signals determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(q*)*=*c*(*r*) × *t*(*s*) × *e*(*p*)(*q*); or
when the first information indicates that [*a*(*n*)(*m*)] is a signal determined not based on [*c*(*r*)] and/or [*t*(*s*)], and indicates that [*b*(*p*)(*q*)] is a signal determined not based on [*c*(*r*)] and/or [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*e*(*p*)(*q*), wherein
*d*(*n*)(*m*) belongs to the third signal [*d*(*n*)(*m*)], *e*(*p*)(*q*) belongs to the fourth signal [*e*(*p*)(*q*)], [*d*(*n*)(*m*)] comprises *N* × *M* symbols, and [*e*(*p*)(*q*)] comprises *P* × *Q* symbols.

33. The apparatus according to any one of claims 28 to 32, wherein
the first signal is a reference signal, and the second signal is a physical channel; or
the first signal is a first reference signal, and the second signal is a second reference signal.

34. A communication apparatus, wherein the apparatus comprises a transceiver module, and the transceiver module is configured to:
receive first information, wherein the first information indicates that a first signal [*a*(*i*)] and/or a second signal [*b*(*j*)] is a signal determined based on [*c*(*h*)], or indicates that neither [*a*(*i*)] nor [*b*(*j*)] is a signal determined based on [*c*(*h*)]; and
send the first signal and the second signal, or receive the first signal and the second signal, wherein
[*a*(*i*)] comprises I symbols, [*b*(*j*)] comprises J symbols, [*c*(*h*)] comprises H elements, H is a positive integer greater than or equal to I and greater than or equal to J, both I and J are positive integers, *i* belongs to {1, ..., I}, *j* belongs to {1, ..., J}, and h belongs to {1, ..., H}.

35. The apparatus according to claim 34, wherein
when the first information indicates that [*a*(*i*)] is a signal determined based on [*c*(*h*)], a symbol in [*a*(*i*)] is *a*(*i*)=*c*(*h*) × *d*(*i*), and a symbol in [*b*(*j*)] is *b*(*j*)=*e*(*j*);
when the first information indicates that [*b*(*j*)] is a signal determined based on [*c*(*h*)], a symbol in [*a*(*i*)] is *a*(*i*)=*d*(*i*), and a symbol in [*b*(*j*)] is *b*(*j*)=*c*(*h*) × *e*(*j*);
when the first information indicates that both [*a*(*i*)] and [*b*(*j*)] are signals determined based on [*c*(*h*)], a symbol in [*a*(*i*)] is *a*(*i*) = *c*(*h*) × *d*(*i*), and a symbol in [*b*(*j*)] is *b*(*j*)=*c*(*h*) × *e*(*j*); or
when the first information indicates that neither [*a*(*i*)] nor [*b*(*j*)] is a signal determined based on [*c*(*h*)], a symbol in [*a*(*i*)] is *a*(*i*)=*d*(*i*), and a symbol in [*b*(*j*)] is *b*(*j*)=*e*(*j*), wherein
*d*(*i*) belongs to a third signal [*d*(*i*)], *e*(*j*) belongs to a fourth signal [*e*(*j*)], [*d*(*i*)] comprises I symbols, and [*e*(*j*)] comprises J symbols.

36. The apparatus according to claim 34 or 35, wherein
the first information comprises a first field or a second field, the first field comprises one or more of the following: a first state value, a second state value, a third state value, and a fourth state value, and the second field comprises one or more of the following: a fifth state value, a sixth state value, and a seventh state value, wherein
the first field is the first state value, and the first information indicates that neither [*a*(*i*)] nor [*b*(*j*)] is a signal determined based on [*c*(*h*)]; the first field is the second state value, and the first information indicates that [*a*(*i*)] is a signal determined based on [*c*(*h*)]; the first field is the third state value, and the first information indicates that [*b*(*j*)] is a signal determined based on [*c*(*h*)]; or the first field is the fourth state value, and the first information indicates that both [*a*(*i*)] and [*b*(*j*)] are signals determined based on [*c*(*h*)]; and
the second field is the fifth state value, and the first information indicates that neither [*a*(*i*)] nor [*b*(*j*)] is a signal determined based on [*c*(*h*)], or indicates that both [*a*(*i*)] and [*b*(*j*)] are signals determined based on [*c*(*h*)]; the second field is the sixth state value, and the first information indicates that [*a*(*i*)] is a signal determined based on [*c*(*h*)]; or the second field is the seventh state value, and the first information indicates that [*b*(*j*)] is a signal determined based on [*c*(*h*)].

37. The apparatus according to any one of claims 34 to 36, wherein an element in [*c*(*h*)] satisfies:
when *h* is less than *k*, *c*(*h*) is less than *c*(*h* + 1), or when *h* is greater than *k*, *c*(*h*) is less than or equal to *c*(h - 1); or when *h* is less than *k*, *c*(*h*) is greater than c(*h +* 1), or when *h* is greater than *k, c*(*h*) is greater than or equal to *c*(*h -* 1), wherein *k* is a positive integer greater than 1 and less than H.

38. The apparatus according to any one of claims 34 to 37, wherein
the first signal is a reference signal, and the second signal is a physical channel; or
the first signal is a first reference signal, and the second signal is a second reference signal.

39. A communication apparatus, wherein the apparatus comprises a transceiver module, and the transceiver module is configured to:
receive first information, wherein the first information indicates that a first signal [*a*(*n*)(*m*)] and/or a second signal [*b*(*p*)(*q*)] is a signal determined based on [*c*(*r*)], or indicates that neither [*a*(*n*)(*m*)] nor [*b*(*p*)(*q*)] is a signal determined based on [*c*(*r*)]; and
send the first signal and the second signal, or receive the first signal and the second signal, wherein
[*a*(*n*)(*m*)] comprises *N* × *M* symbols, [*b*(*p*)(*q*)] comprises *P* × *Q* symbols, [*c*(*r*)] comprises R elements, R is a positive integer greater than or equal to M and greater than or equal to Q, N, M, P, and Q are all positive integers greater than 1, n belongs to {1, ..., N}, m belongs to {1, ..., M}, p belongs to {1, ..., P}, q belongs to {1, ..., Q}, and r belongs to {1, ..., R}.

40. The apparatus according to claim 39, wherein
when the first information indicates that [*a*(*n*)(*m*)] is a signal determined based on [*c*(*r*)], a symbol in [*a*(*n*)(*m*)] is *a*(*n*)(*m*) = *c*(*r*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *e*(*p*)(*q*);
when the first information indicates that both [*a*(*n*)(*m*)] and [*b*(*p*)(*q*)] are signals determined based on [*c*(*r*)], a symbol in [*a*(*n*)(*m*)] is *a*(*n*)(*m*)=*c*(*r*) × *d*(*n*)(*m*), and a symbol in [*b*(*p*)(*q*)] is *b*(*p*)(*q*)=*c*(*r*) × *e*(*p*)(*q*); or
when the first information indicates that neither [*a*(*n*)(*m*)] nor [*b*(*p*)(*q*)] is a signal determined based on [*c*(*r*)], a symbol in [*a*(*n*)(*m*)] is *a*(*n*)(*m*)=*d*(*n*)(*m*), and a symbol in [*b*(*p*)(*q*)] is *b*(*p*)(*q*)=*e*(*p*)(*q*), wherein
*d*(*n*)(*m*) belongs to a third signal [*d*(*n*)(*m*)], *e*(*p*)(*q*) belongs to a fourth signal [*e*(*p*)(*q*)], [*d*(*n*)(*m*)] comprises *N* × *M* symbols, and [*e*(*p*)(*q*)] comprises *P* × *Q* symbols.

41. The apparatus according to claim 39 or 40, wherein
the first information comprises a third field or a fourth field, the third field comprises one or more of the following: an eighth state value, a ninth state value, a tenth state value, and an eleventh state value, and the fourth field comprises one or more of the following: a twelfth state value, a thirteenth state value, and a fourteenth state value, wherein
the third field is the eighth state value, and the first information indicates that neither [*a*(*n*)(*m*)] nor [*b*(*p*)(*q*)] is a signal determined based on [*c*(*r*)]; the third field is the ninth state value, and the first information indicates that [*a*(*n*)(*m*)] is a signal determined based on [*c*(*r*)]; the third field is the tenth state value, and the first information indicates that [*b*(*p*)(*q*)] is a signal determined based on [*c*(*r*)]; or the third field is the eleventh state value, and the first information indicates that both [*a*(*n*)(*m*)] and [*b*(*p*)(*q*)] are signals determined based on [*c*(*r*)]; and
the fourth field is the twelfth state value, and the first information indicates that neither [*a*(*n*)(*m*)] nor [*b*(*p*)(*q*)] is a signal determined based on [*c*(*r*)], or indicates that both [*a*(*n*)(*m*)] and [*b*(*p*)(*q*)] are signals determined based on [*c*(*r*)]; the fourth field is the thirteenth state value, and the first information indicates that [*a*(*n*)(*m*)] is a signal determined based on [*c*(*r*)]; or the fourth field is the fourteenth state value, and the first information indicates that [*b*(*p*)(*q*)] is a signal determined based on [*c*(*r*)].

42. The apparatus according to any one of claims 39 to 41, wherein that the first information indicates that the first signal [*a*(*n*)(*m*)] and/or the second signal [*b*(*p*)(*q*)] is a signal determined based on [*c*(*r*)] comprises:
the first information indicates that [*a*(*n*)(*m*)] and/or [*b*(*p*)(*q*)] is a signal determined based on [*c*(*r*)] and [*t*(*s*)]; and
that the first information indicates that neither [*a*(*n*)(*m*)] nor [*b*(*p*)(*q*)] is a signal determined based on [*c*(*r*)] comprises:
the first information indicates that [*a*(*n*)(*m*)] is a signal determined not based on [*c*(*r*)] and/or [*t*(*s*)], and indicates that [*b*(*p*)(*q*)] is a signal determined not based on [*c*(*r*)] and/or [*t*(*s*)], wherein
[*t*(*s*)] comprises S elements, S is a positive integer greater than or equal to N and greater than or equal to P, and s belongs to {1, ..., S}.

43. The apparatus according to claim 42, wherein
when the first information indicates that [*a*(*n*)(*m*)] is a signal determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*e*(*p*)(*q*);
when the first information indicates that [*b*(*p*)(*q*)] is a signal determined based on [*c*(*r*)] and [*t*(*s*)], a symbol in [*a*(*n*)(*m*)] is *a*(*n*)(*m*)=*d*(*n*)(*m*), and a symbol in [*b*(*p*)(*q*)] is *b*(*p*)(*q*)=*c*(*r*) × *t*(*s*) × *e*(*p*)(*q*);
when the first information indicates that both [*a*(*n*)(*m*)] and [*b*(*p*)(*q*)] are signals determined based on [*c*(*r*)] and [*t*(*s*)], a symbol in [*a*(*n*)(*m*)] is *a*(*n*)(*m*)=*c*(*r*) × *t*(*s*) × *d*(*n*)(*m*), and a symbol in [*b*(*p*)(*q*)] is *b*(*p*)(*q*)=*c*(*r*) × *t*(*s*) × *e*(*p*)(*q*); or
when the first information indicates that [*a*(*n*)(*m*)] is a signal determined not based on [*c*(*r*)] and/or [*t*(*s*)], and indicates that [*b*(*p*)(*q*)] is a signal determined not based on [*c*(*r*)] and/or [*t*(*s*)], a symbol in [*a*(*n*)(*m*)] is *a*(*n*)(*m*)=*d*(*n*)(*m*), and a symbol in [*b*(*p*)(*q*)] is b(p)(q)=e(p)(q), wherein
*d*(*n*)(*m*) belongs to the third signal [*d*(*n*)(*m*)], *e*(*p*)(*q*) belongs to the fourth signal [*e*(*p*)(*q*)], [*d*(*n*)(*m*)] comprises *N* × *M* symbols, and [*e*(*p*)(*q*)] comprises *P* × *Q* symbols.

44. The apparatus according to any one of claims 39 to 43, wherein
the first signal is a reference signal, and the second signal is a physical channel; or
the first signal is a first reference signal, and the second signal is a second reference signal.

45. A communication apparatus, comprising a processor and a memory, wherein
the memory is configured to store one or more computer programs or instructions, and the processor is configured to execute the one or more computer programs or instructions stored in the memory, to cause the communication apparatus to perform the method according to any one of claims 1 to 11 or the method according to any one of claims 12 to 22.

46. A communication system, comprising a first communication apparatus and/or a second communication apparatus, wherein the first communication apparatus is configured to perform the method according to any one of claims 1 to 11, and the second communication apparatus is configured to perform the method according to any one of claims 12 to 22.

47. A computer-readable storage medium, storing a computer program or instructions, wherein the computer program or the instructions are used to implement the method according to any one of claims 1 to 11 or the method according to any one of claims 12 to 22.

48. A computer program product, wherein the computer program product comprises a computer program; and when the computer program is run on a computer, the computer is caused to perform the method according to any one of claims 1 to 11 or the method according to any one of claims 12 to 22.
